# EUROPEAN PATENT APPLICATION

(11) **EP 4 425 859 A1**
(43) Date of publication of application: **04.09.2024**
(21) Application number: 22954659.3
(22) Date of filing: 12.08.2022
(51) Int. Cl.: H04L 27/00

(54) **DATA TRANSMISSION METHOD AND APPARATUS, AND ELECTRONIC DEVICE**

(71) Applicant: New H3C Technologies Co., Ltd., Hangzhou, Zhejiang 310052 (CN)
(72) Inventor: KONG, Lei, Beijing 100102 (CN)
(74) Representative: Grünecker Patent- und Rechtsanwälte PartG mbB
(86) International application number: PCT/CN2022/112308
(87) International publication number: WO 2024/031708

(57) **Abstract**

Provided in the present application are a data transmission method and apparatus, and an electronic device. According to an aspect of the present application, the method comprises: on the basis of configuration information issued by a base station, determining an SBFD time-frequency resource corresponding to a target time slot and a target time-frequency resource associated with the target time slot; according to a result of an overlap between the SBFD time-frequency resource corresponding to the target time slot and the target time-frequency resource associated with the target time slot, determining a data transmission operation corresponding to the target time-frequency resource; and executing the determined data transmission operation in the target time slot.

## Description

### TECHNICAL FIELD

This application relates to the field of communications, particularly to a data transmission method, a data transmission apparatus, and an electronic device.

### BACKGROUND

Conventional Time-Division Duplex (TDD) communication systems generally operate in Half-Duplex (HD) mode. The TDD frame structure may include DownLink (DL) slots, Special (S) slots, and UpLink (UL) slots, where S slots may be used for UL, DL, or Guard Period (GP). In the current 5G commercial networks, to enhance network throughput, more DL slots are generally configured and relatively fewer UL slots are configured, limiting the uplink transmission rate and leading to increased uplink transmission delay.

Full-Duplex (FD) communication can simultaneously send and receive, i.e., operate uplink and downlink data transmission concurrently. From the standardization perspective, currently, 3GPP protocol group has taken the standardization FD communication as a research project and formally started standardization work. Various operators, terminal manufacturers, etc., are also researching key technologies of FD communication.

### SUMMARY

According to a first aspect of this application, a data transmission method is provided. The method is applied to User Equipment (UE) that supports Sub-Band Full-duplex (SBFD) mode, and comprises: determining an SBFD time-frequency resource corresponding to a target slot and a target time-frequency resource associated with the target slot based on configuration information sent by a base station; determining a data transmission operation corresponding to the target time-frequency resource according to an overlapping result of the SBFD time-frequency resource and the target time-frequency resource; performing the determined data transmission operation in the target slot.

According to a second aspect of this application, a data transmission method is provided. The method is applied to a base station that supports SBFD mode, and comprises: determining an SBFD time-frequency resource corresponding to a target slot and a target time-frequency resource associated with the target slot; determining a data transmission operation corresponding to the target time-frequency resource according to an overlapping result of the SBFD time-frequency resource and the target time-frequency resource; performing the determined data transmission operation in the target slot.

According to a third aspect of this application, a data transmission apparatus is provided. The apparatus is applied to UE that supports SBFD mode, and comprises: a first determining module, configured to determine an SBFD time-frequency resource corresponding to a target slot and a target time-frequency resource associated with the target slot based on configuration information sent by a base station; a second determining module, configured to determine a data transmission operation corresponding to the target time-frequency resource according to an overlapping result of the SBFD time-frequency resource and the target time-frequency resource; an executing module, configured to perform the determined data transmission operation in the target slot.

According to a fourth aspect of this application, a data transmission apparatus is provided. The apparatus is applied to a base station that supports SBFD mode, and comprises: a first determining module, configured to determine an SBFD time-frequency resource corresponding to a target slot and a target time-frequency resource associated with the target slot; a second determining module, configured to determine a data transmission operation corresponding to the target time-frequency resource according to an overlapping result of the SBFD time-frequency resource and the target time-frequency resource; an executing module, configured to perform the determined data transmission operation in the target slot.

According to a fifth aspect of the application, an electronic device is provided, and comprises: at least one processor, and a machine-readable storage medium storing machine-executable instructions, where, the at least one processor is configured to perform the data transmission method of any one of the above aspects by reading the machine-executable instructions.

According to the technical solution provided by this application, it is possible to use a TDD SBFD time-frequency domain resource for uplink random access transmission without affecting the current 5G HD system. This can increase uplink access resources, thereby reducing access delay. It also provides transmission criteria for a DL channel overlapping with PRACH, determining reception and transmission behaviors of the base station and the UE, thereby reducing blind detections of the base station and the UE, and effectively increasing opportunities of the uplink transmission, improving reliability of the uplink transmission.

### BRIEF DESCRIPTION OF DRAWINGS

FIG. 1 is a schematic flowchart illustrating a data transmission method according to an embodiment of the present application.
FIGS. 2 to 16 are schematic diagrams illustrating overlap between an SBFD time-frequency resource and a target time-frequency resource according to an embodiment of the present application.
FIG. 17 is a schematic structural diagram illustrating a data transmission apparatus according to an embodiment of the present application.
FIG. 18 is a schematic structural diagram illustrating an electronic device according to an embodiment of the present application.

### DETAILED DESCRIPTION

Terms used in the embodiments of the application are for the purpose of describing particular embodiments only and are not intended to limit the present application. Terms determined by "a", "the" and "said" in their singular forms in the present disclosure and the appended claims are also intended to include plurality, unless clearly indicated otherwise in the context. It should also be understood that the term "and/or" as used herein refers to and includes any and all possible combinations of one or more of the associated listed items.

It should be understood that, although the terms "first," "second," "third," and the like may be used in the embodiments of the present application to describe various information, such information should not be limited to these terms. These terms are only used to distinguish one category of information from another. For example, without departing from the scope of the present application, first information may be referred as second information; and similarly, the second information may also be referred as the first information. Depending on the context, the term "if' as used herein may be interpreted as "when" or "upon" or "in response to determining".

In the following, the technical solutions in the embodiments of the present application will be clearly and completely described with reference to the attached drawings in the embodiments of the present application. Obviously, the described embodiments are only a part of the embodiments, but not all of the embodiments of the present application. Based on the embodiments of the present application, all other embodiments obtained by those of ordinary skill in the art without creative work fall within the scope of the present application.

In a TDD communication system, a time domain resource is utilized to distinguish between downlink and uplink, hence the limited duration allocated to uplink leads to reduced cell coverage, increased transmission delay, and insufficient uplink capacity, which are problems existing in the current TDD communication systems. Moreover, the current 5G NR system only considers the allocation of a time-frequency domain resource for a physical channel in TDD HD mode and does not think out a way to transmit an uplink physical channel in a time-frequency domain resource in TDD FD mode and a way for a User Equipment (UE) to perform uplink random access in the TDD FD mode.

Therefore, the present application proposes a method and transmission criteria for UE random access in the TDD FD mode, mainly aiming at a way for a UE to perform uplink random access in the TDD FD mode, so as to ensure that the FD UE can access to an NR system smoothly and efficiently, and that the access and data transmission of an existing terminal are not affected.

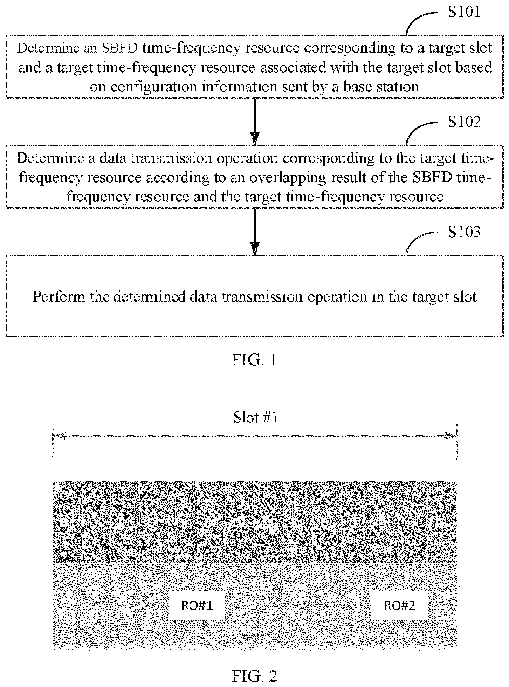

In an embodiment of this application, a novel data transmission method is proposed, which is applied to a UE that supports a Sub-Band Full Duplex (SBFD) mode. As shown in Fig 1, the method includes the following blocks S101 to S103.

In block S101, an SBFD time-frequency resource corresponding to a target slot and a target time-frequency resource associated with the target slot are determined based on configuration information sent by a base station.

In block S102, a data transmission operation corresponding to the target time-frequency resource is determined according to an overlapping result of the SBFD time-frequency resource corresponding to the target slot and the target time-frequency resource associated with the target slot.

In block S103, the determined data transmission operation is performed in the target slot.

In the solution of this application, full-duplex communication is realized by means of the SBFD method. Specifically, part of time-frequency resource in existing TDD mode is configured as an SBFD time-frequency resource, so that data in a direction different from that of data on other time-frequency resources (uplink time-frequency resources or downlink time-frequency resources) can be transmitted on the SBFD time-frequency resource.

The configuration of an SBFD time-frequency resource is flexible and is generally performed by a base station in a semi-static or a dynamic manner. If it is configured in a semi-static manner, the configuration information may be sent to the UE by the base station via a system signaling (e.g., a broadcast signaling, or an RRC signaling); if it is configured in a dynamic manner, the configuration information may be sent to the UE by the base station through downlink control information (DCI). The UE that supports SBFD (abbreviated as SBFD UE) may identify the configuration of the SBFD time-frequency resource from the received system signaling or DCI. The UE that does not support SBFD (abbreviated as Legacy UE) does not expect the base station to configure an SBFD resource for the UE. Even if the base station has configured a SBFD resource for the UE, the Legacy UE will directly ignore the configuration and perform network access and communication according to the existing communication mode. For more information on SBFD, 3GPP TSG-RAN WG1 conference documents R1-2203157 and R1-2203204 can be referred to.

In block S101, the UE supporting SBFD obtains the configuration information delivered by the base station. According to the configuration information, a configuration unit (e.g. Slot or mini-slot) of the SBFD time-frequency resource, slots in which the SBFD time-frequency resource is configured, a configuration period, an adaptation range (e.g. UL slot, DL slot, S slot or a combination thereof), and other time-frequency resource-related configurations can be determined. Target slot refers to UL slot, DL slot or S slot configured with an SBFD time-frequency resource. Taking the UL slot as an example, the SBFD time-frequency resource may be configured in all or part of UL symbols of the UL slot. From the perspective of the frequency domain, for each UL symbol, the SBFD time-frequency resource may occupy at least one physical resource block (PRB) on the symbol. The physical resource blocks may be defined in a partial bandwidth (BWP) and are resources for actual transmission, and in each BWP, the physical resource blocks are numbered according to a predefined index rule. The case of the DL slot and the S slot is similar to that of the UL slot.

The UE may determine a target slot based on the configuration information, and the target slot may be understood as a slot of current interest, which may be any slot configured with a SBFD time-frequency resource. A target time-frequency resource associated with the target slot is a time-frequency resource conforming to the existing 5G communication mechanism, and may be an uplink time-frequency resource for transmitting uplink data, a downlink time-frequency resource for transmitting downlink data, or both uplink and downlink time-frequency resources. For example, the target time-frequency resource is an RO time-frequency resource corresponding to a random access channel opportunity (RO), an SSB time-frequency resource corresponding to a synchronization signal block (SSB), or includes both an RO time-frequency resource and an SSB time-frequency resource, which are not listed here one by one. According to the actual situation, part of the target time-frequency resource may be located in another slot different from the target slot, for example, in the 2-step random access procedure, the MsgA RO time-frequency resource and the MsgA PUSCH time-frequency resource are located in different slots. The association of the SBFD time-frequency resource, the target time-frequency resource, and the target slot may be determined by the configuration information sent by the base station.

In block S102, the UE determines a data transmission operation corresponding to a target time-frequency resource according to an overlapping result of an SBFD time-frequency resource corresponding to a target slot and the target time-frequency resource associated with the target slot.

In embodiments or examples of the application, whether an SBFD time-frequency resource is overlapped/not overlapped with a target time-frequency resource (an uplink/downlink time-frequency resource) mainly refers to whether the SBFD time-frequency resource is overlapped/not overlapped with the target time-frequency resource in the frequency domain. The overlap situation in the time domain is not considered, because the SBFD mode introduces the sub-band duplex technology in the TDD communication system. Therefore, it is only necessary to distinguish the target time-frequency resource from the SBFD time-frequency resource in the frequency domain to avoid conflicts with the SBFD time-frequency resource. Moreover, in the embodiments or examples of the application, if the uplink time-frequency resource and the downlink time-frequency resource are overlapped, the overlap may be in a time domain, a frequency domain, or a time-frequency domain; if the uplink time-frequency resource and the downlink time-frequency resource are not overlapped, which means that they are not overlapped in either time domain or frequency domain.

In this block, by considering the conflict between an SBFD time-frequency resource and a time-frequency resource configured according to existing communication mechanisms, a data transmission mechanism suitable for SBFD mode is determined.

The 3GPP protocol group has proposed a relevant draft for SBFD mode. However, the draft merely adds use of SBFD time-frequency resources on top of the existing 5G communication system. Apart from the parts related to the configuration of SBFD time-frequency resources, the strategies for resource scheduling and channel transmission remain unchanged. In other words, the current draft for SBFD mode does not consider the potential conflicts between the use of SBFD time-frequency resources and existing strategies. However, the data transmission method of the example may consider the overlap between the actual time-frequency resources used for uplink/downlink channels and signals and the configured SBFD time-frequency resources, so as to provide an explicit data transmission strategy for the full-duplex communication systems based on SBFD mode to realize SBFD-based full-duplex communication between a UE and a base station.

The data transmission method according to an example of the present application has been described with reference to FIG. 1. In the following, based on specific examples of uplink/downlink channel transmission, further description is provided for each block of the data transmission method.

For a UE, to perform uplink channel transmission, a random access procedure needs to be performed. The random access procedure is a necessary process for establishing a wireless link between the UE and a network, and only after the random access procedure is completed, data transmission operations between the UE and a base station can be normally performed. The UE can realize two basic functions through the random access procedure: 1) acquiring uplink synchronization with the base station, once out of synchronization, the UE can only transmit data in PRACH; 2) requesting uplink resources (UL_GRANT).

The general random access procedure is of: 4-step random access or 2-step random access. The following description of channel transmission in SBFD mode will be based on the 4-step random access and the 2-step random access. In the following description, the design of the data transmission mechanism in SBFD mode is mainly considered from the perspective of the conflict between the uplink/downlink time-frequency resource and the SBFD time-frequency resource involved in the random access, and details of the specific random access procedure will not be described overly.

The following is a 4-step random access transmission method in SBFD mode.

In the first step of the 4-step random access procedure, the UE may send a message (MSG1) to the base station. MSG 1 is a random access signal (i.e., a preamble) transmitted using a Random Access Channel opportunity (RO). In the solution of the present application, a strategy for the transmission of RO channel in SBFD mode is proposed.

Firstly, a case in which only time-frequency of an RO channel overlaps the SBFD time-frequency resource is described, where the target time-frequency resource mentioned in block S102 may be a time-frequency resource occupied by the RO channel (hereinafter referred to as an RO time-frequency resource). In a target slot, one or more ROs might be configured. The data transmission mechanism based on the SBFD mode are described by taking any one of the ROs as a target RO.

Specifically, the determining executed in block S102 comprises: if the overlapping result is: the RO time-frequency resource is within the SBFD time-frequency resource, then: in case that symbols corresponding to the SBFD time-frequency resource are uplink (UL) symbols or flexible (F) symbols, it is determined that the data transmission operation corresponding to the target time-frequency resource is: sending the random access signal carried by the target RO at the RO time-frequency resource; in case that the symbols corresponding to the SBFD time-frequency resource are downlink (DL) symbols, it is determined that the data transmission operation corresponding to the target time-frequency resource is prohibiting the sending of the random access signal.

FIG. 2 is a schematic diagram of the overlap between an SBFD time-frequency resource and a target time-frequency resource. As shown in FIG. 2, the RO time-frequency resource corresponding to the RO and the SBFD time-frequency resource are completely overlapped, that is, the RO time-frequency resource is located within the SBFD time-frequency resource. In this case, if the SBFD time-frequency resource is configured on UL symbols or F symbols, the RO is valid, and the UE may use the SBFD time-frequency resource (specifically, a portion corresponding to the RO time-frequency resource in the SBFD time-frequency resource) to transmit a random access signal. If the SBFD time-frequency resource is configured on DL symbols, the RO is invalid, and the UE is prohibited from using the RO to send the random access signal.

In an embodiment of this application, the determining executed in block S 102 comprises: if the overlapping result is that the RO time-frequency resource is partially overlapped with the SBFD time-frequency resource, then in case that the symbols corresponding to the SBFD time-frequency resource are uplink (UL) symbols or flexible (F) symbols, it is determined that the data transmission operation corresponding to the target time-frequency resource is prohibiting the sending of the random access signal carried by the target RO, or, by using an overlapped resource in the SBFD time-frequency resource which is overlapped with the RO time-frequency resource, sending part of the random access signal corresponding to the overlapped resource; or in case that the symbols corresponding to the SBFD time-frequency resource are downlink (DL) symbols, it is determined that the data transmission operation corresponding to the target time-frequency resource is prohibiting the sending of the random access signal.

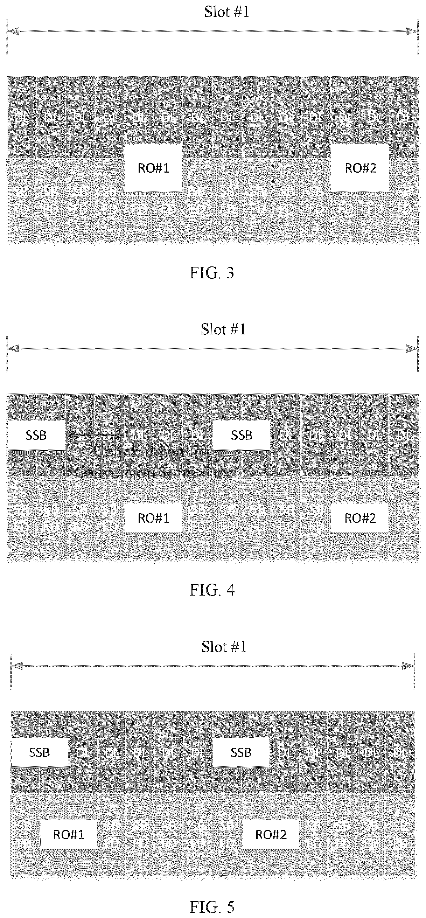

FIG. 3 is a schematic diagram of the overlap between an SBFD time-frequency resource and a target time-frequency resource. As shown in Fig 3, the RO time-frequency resource is partially overlapped with the SBFD time-frequency resource. In this case, if the SBFD time-frequency resource is configured on UL symbols or F symbols, there may be two transmission schemes. In scheme 1, the RO is regarded as invalid, and the sending of the random access signal by using the RO is prohibited. In scheme 2, the RO is regarded as valid, and the UE may use the overlapped resource in the SBFD time-frequency resource which is overlapped with the RO time-frequency resource to send a part of the random access signal, where the part of the random access signal is a part in the random signal that can use the overlapped resource for transmission. If the SBFD time-frequency resource is configured on DL symbols, the RO is invalid, and the UE is prohibited from using that RO to send the random access signal.

The case where only time-frequency resource of the RO channel overlaps the SBFD time-frequency resource is described above. However, in addition to the RO channel, there may be other downlink channels/signals that may overlap the SBFD time-frequency resource, which may affect the transmission of the RO channel. In the following, the case where the RO channel and other channels jointly overlap the SBFD time-frequency resource is described.

A synchronization signal block (SSB) is taken as an example for downlink channels/signals in the following.

The SSB is used for synchronization between the base station and UE, and transmits Master Information Block (MIB) and a Scheduling Information Block (SIB1) including key cell information. Therefore, the correct reception of the SSB by the UE is fundamental for achieving normal communication. The UE needs to first receive the SSB, and then receive the SIB 1, and initiate a random access according to SBFD time-frequency resource configuration information extracted from the SIB 1. However, in the description of the data transmission method according to the embodiment of the present application, there is no need to consider the influence brought by the reception time of the SSB, because the reception of the SSB is periodic, and there are a plurality of SSB sets in a cycle. The scheme of the present application focuses on the scheduling/transmission of different channels/signals including the SSB after the UE parses the SBFD time-frequency resource configuration information.

In an example of the present application, the target time-frequency resource mentioned in block S102 includes an RO time-frequency resource where a target RO is located, and an SSB time-frequency resource where an SSB is located; the target RO is any one of at least one RO configured for the target slot; the RO time-frequency resource is located in the SBFD time-frequency resource.

In an example of the present application, the determining in the block S102 comprises: if the overlapping result is that the SSB time-frequency resource is overlapped or not overlapped with the SBFD time-frequency resource, and the SSB time-frequency resource is not overlapped with the RO time-frequency resource, then in case that the UE is in full-duplex TDD mode, it is determined that the data transmission operation corresponding to the target time-frequency resource is as follows: receiving data carried by the SSB at the SSB time-frequency resource, and sending a random access signal carried by the target RO at the RO time-frequency resource; or in case that the UE is in half-duplex TDD mode, it is determined that the data transmission operation corresponding to the target time-frequency resource is as follows: when the condition that a time interval between the SSB and the target RO is greater than an uplink-downlink conversion time is met, receiving the data carried by the SSB at the SSB time-frequency resource and sending the random access signal carried by the target RO at the RO time-frequency resource, and when the condition is not met, prohibiting the sending of the random access signal at the RO time-frequency resource, and only receiving data carried by the SSB at the SSB time-frequency resource.

For UEs supporting the SBFD mode, they are subdivided into two types. One is a half-duplex UE (known as an HD UE), that is, the UE can send or receive at the SBFD time-frequency resource, but can only send or receive at the same moment. The other is a full-duplex UE (known as a FD UE), that is, the UE can transmit and receive simultaneously at the SBFD time-frequency resource at the same moment. The UE may serve as a half-duplex UE when the half-duplex mode is enabled, and may serve as a full-duplex UE when the full-duplex mode is enabled.

FIG. 4 is a schematic diagram of the overlap between an SBFD time-frequency resource and a target time-frequency resource. As shown in Fig 4, the target time-frequency resource includes RO time-frequency resources and SSB time-frequency resources, where the RO time-frequency resources are completely overlapped with the SBFD time-frequency resource, that is, the RO time- frequency resources are located within the SBFD time-frequency source. In this case, the overlap between the SBFD time-frequency resource and the target time-frequency resource further involves the overlap between the RO time-frequency resource and the SSB time-frequency resource. Regardless of whether the SSB time-frequency resource is overlapped (which means partially overlapped) with the SBFD time-frequency resource, if the SSB time-frequency resource is not overlapped with the RO time-frequency resource, then: for the FD UE, both the SSB and the RO channel can be available for sending and receiving data normally without being affected; and for the HD UE, the time interval between the SSB and the RO channel needs to satisfy the uplink-downlink conversion time TRX, otherwise, the RO channel is considered to be invalid, and the sending of a RACH preamble on the RO channel is prohibited, and only the receiving of the data carried by the SSB is performed. The time interval may be an interval between an end time point of the SSB reception and a start time point of the RO transmission, or may be an interval between a start time point of the SSB transmission and an end time point of the RO reception, and other time intervals mentioned in the following are determined in a similar manner. The uplink-downlink conversion time is the time required for switching between uplink data transmission and downlink data reception, which is commonly used in the art.

In an embodiment of this application, the determination in block S102 includes: if the overlapping result is that the SSB time-frequency resource is overlapped or not overlapped with the SBFD time-frequency resource, and the SSB time-frequency resource is partially overlapped with the RO time-frequency resource, it is determined that the data transmission operation corresponding to the target time-frequency resource is as follows: only receiving data carried by the SSB at the SSB time-frequency resource and prohibiting sending the random access signal carried by the target RO at the RO time-frequency resource; or receiving the data carried by the SSB at the SSB time-frequency resource, and at a remaining resource in the RO time-frequency resource, sending a part of the random access signal associated with the remaining resource, wherein the remaining resource is a portion in the RO time-frequency resource which is not overlapped with the SSB time-frequency resource.

As shown in FIG. 5, the RO time-frequency resource is located within the SBFD time-frequency resource, and the SSB time-frequency resource is partially overlapped with the RO time-frequency resource. In this case, there are two transmission schemes. In scheme 1, the RO channel is regarded as invalid, the UE is prohibited from sending a RACH preamble on the RO channel, and data carried by the SSB is normally received. In scheme 2, the RO channel is regarded as valid, a part of the RACH preamble is sent on the RO channel, and the data carried by the SSB is normally received. In scheme 2, specifically, a part of the RO time-frequency resource that is not overlapped with the SSB time-frequency resource, i.e., the remaining resource, is used for sending the data associated with the remaining resource in the RACH preamble.

Since the reception of the SSB is fundamental for normal communication, the priority of the reception of the SSB is higher than that of other downlink channels/signals. If the SSB conflicts with the RO, the priority is given to ensure the reception of the SSB. For the base station, there is no need to consider the conflict between the SSB and the SBFD time-frequency resource or the RO channel, and the SSB is normally sent.

The case where the RO channel and the SSB jointly overlap the SSB time-frequency resource is described above. The data transmission method is described in the following by taking the case where the RO channel and the physical downlink shared channel (PDSCH) coexist as an example.

In an embodiment of this application, the target time-frequency resource mentioned in block S101 include an RO time-frequency resource where a target RO is located, and a PDSCH time-frequency resource where a PDSCH is located. Wherein the target RO is any one of at least one RO configured for the target slot, and the RO time-frequency resource is located in the SBFD time-frequency resource.

In an embodiment of this application, the determining executed in the block S102 comprises: if the overlapping result is that the PDSCH time-frequency resource is not overlapped with the SBFD time-frequency resource, and the PDSCH time-frequency resource is not overlapped with the RO time-frequency resource, then in case that the UE is in a full-duplex TDD mode, it is determined that the data transmission operation corresponding to the target time-frequency resource is as follows: receiving data carried by the target PDSCH at the PDSCH time-frequency resource, and sending a random access signal carried by the target RO at the RO time-frequency resource; in case that the UE is in a half-duplex TDD mode, it is determined that the data transmission operation corresponding to the target time-frequency resource is as follows: when the condition that the time interval between the target PDSCH and the target RO is greater than the uplink-downlink conversion time is met, receiving data carried by the target PDSCH at the PDSCH time-frequency resource and sending the random access signal carried by the target RO at the RO time-frequency resource, and when the condition is not met, only sending the random access signal at the RO time-frequency resource, and prohibiting the receiving of the data carried by the target PDSCH at the PDSCH time-frequency resource.

In an embodiment of this application, the determining executed in the block S102 comprises: if the overlapping result is that the PDSCH time-frequency resource is partially overlapped with the SBFD time-frequency resource, and the PDSCH time-frequency resource is not overlapped with the RO time-frequency resource, then in case that the UE is in a full-duplex TDD mode, it is determined that the data transmission operation corresponding to the target time-frequency resource is as follows: at a remaining resource in the PDSCH time-frequency resource that is not overlapped with the SBFD time-frequency resource, receiving a part of data in data carried by the target PDSCH associated with the remaining resource, and sending a random access signal carried by the target RO at the RO time-frequency resource; and in case that the UE is in a half-duplex TDD mode, it is determined that the data transmission operation corresponding to the target time-frequency resource is as follows: when the condition that the time interval between the target PDSCH and the target RO is greater than the uplink-downlink conversion time is met, at a remaining resource in the PDSCH time-frequency resource that is not overlapped with the SBFD time-frequency resource, receiving a part of data in the data carried by the target PDSCH associated with the remaining resource, and sending a random access signal carried by the target RO at the RO time-frequency resource, and when the condition is not met, only sending the random access signal at the RO time-frequency resource, and prohibiting reception of the data carried by the target PDSCH at the PDSCH time-frequency resource.

In an embodiment of this application, the determining executed in the above block S102 comprises: if the overlapping result is that the PDSCH time-frequency resource is not overlapped with the SBFD time-frequency resource, and the PDSCH time-frequency resource is partially overlapped with the RO time-frequency resource, then in case that the UE is in a full-duplex TDD mode, it is determined that the data transmission operation corresponding to the target time-frequency resource is as follows: receiving the data carried by the target PDSCH at the PDSCH time-frequency resource, and sending the random access signal carried by the target RO at the RO time-frequency resource; and in case that the UE is in a half-duplex TDD mode, it is determined that the data transmission operation corresponding to the target time-frequency resource is as follows: when the condition that the time interval between the target PDSCH and the target RO is greater than the uplink-downlink conversion time is met, sending the random access signal carried by the target RO at the RO time-frequency resource, and at a remaining resource in the PDSCH time-frequency resource that is not overlapped with the RO time-frequency resource, receiving a part of data in the data carried by the target PDSCH associated with the remaining resource, and when the condition is not met, only sending the random access signal carried by the target RO at the RO time-frequency resource, and prohibiting a reception of the data carried by the target PDSCH at the PDSCH time-frequency resource.

In one example of this application, the determining executed in the block S102 comprises: if the overlapping result is that the PDSCH time-frequency resource is partially overlapped with the SBFD time-frequency resource, and the PDSCH time-frequency resource is partially overlapped with the RO time-frequency resource, then in case that the UE is in a full-duplex TDD mode, it is determined that the data transmission operation corresponding to the target time-frequency resource is as follows: at a remaining resource in the PDSCH time-frequency resource which is not overlapped with the SBFD time-frequency resource or the RO time-frequency resource, receiving a part of data associated with the remaining resource in the data carried by the target PDSCH, and sending a random access signal carried by the target RO at the RO time-frequency resource; and in case that the UE is in a half-duplex TDD mode, it is determined that the data transmission operation corresponding to the target time-frequency resource is as follows: when the condition that the time interval between the target PDSCH and the target RO is greater than the uplink-downlink conversion time is met, sending the random access signal carried by the target RO at the RO time-frequency resource, and at a remaining resource in the PDSCH time-frequency resource which is not overlapped with the SBFD time-frequency resource or the RO time-frequency resource, receiving a part of data associated with the remaining resource in the data carried by the target PDSCH; or sending the random access signal carried by the target RO at the RO time-frequency resource, and prohibiting a reception of the data carried by the target PDSCH at the PDSCH time-frequency resource.

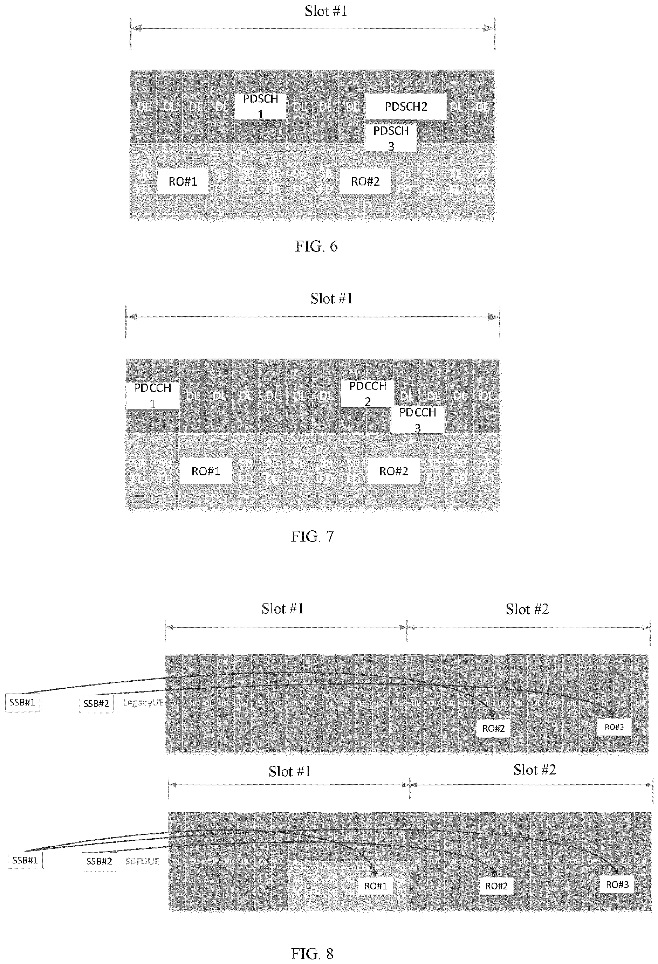

As shown in FIG. 6, the RO time-frequency resource is located within the SBFD time-frequency resource, and there are several examples illustrating different cases of the overlapping result of the SBFD time-frequency resource and the target time-frequency resource. In the first case, the PDSCH time-frequency resource is not overlapped with the SBFD time-frequency resource, and the PDSCH time-frequency resource is not overlapped with the RO time-frequency resource. In the second case, the PDSCH time-frequency resource is not overlapped with the SBFD time-frequency resource, and the PDSCH time-frequency resource is partially overlapped with the RO time-frequency resource. In the third case, the PDSCH time-frequency resource is partially overlapped with the SBFD time-frequency resource, and the PDSCH time-frequency resource is partially overlapped with the RO time-frequency resource. In the fourth case, the PDSCH time-frequency resource is partially overlapped with the SBFD time-frequency resource, and the PDSCH time-frequency resource is not overlapped with the RO time-frequency resource. These are by way of examples only and are not intended to be limiting.

For the first case, as demonstrated by RO#1 and PDSCH1 shown in FIG. 6, in this case, if the UE is in a full-duplex TDD mode, the PDSCH1 and RO#1 channel can be available for receiving and transmitting data normally without being affected. That is, the UE can normally send a random access signal carried by the RO#1 channel, and the base station can normally send downlink data carried by the PDSCH1. If the UE is in a half-duplex TTD mode, only under the condition that the time interval between the RO#1 channel and the PDSCH1 satisfies the uplink-downlink conversion time TRX, i.e., the time interval is greater than the uplink-downlink conversion time TRX, can the PDSCH1 and the RO#1 channel be available for receiving and transmitting data normally. Otherwise, only the sending of the RACH preamble on the RO channel is performed, and the data carried by the PDSCH is prohibited to be received. As long as the UE is in a half-duplex TTD mode, both the UE and the base station need to consider whether the time interval between the uplink time-frequency resource and downlink time-frequency resource satisfies the uplink-downlink conversion time, and this is also true in other subsequent embodiments.

For a base station, it is also necessary to consider whether the operation mode of the UE is half-duplex or full-duplex. During the process of the UE accessing the network, the base station may send a message to the UE to inquire about the capability of the UE. After receiving the message, the UE will report its own capability to the base station, so that the base station can know whether the UE is a UE with SBFD capability, and whether the UE is an FD UE or an HD UE.

For the second case, as demonstrated by RO#2 and PDSCH2 shown in FIG. 6, in this case, there are two transmission schemes. In scheme 1, reception of PDSCH2 is canceled, and only sending of the RACH preamble on the RO#2 channel is performed. In scheme 2, the RACH preamble is sent on the RO#2 channel while a non-overlapped part of PDSCH2 is received. In scheme 2, the reception of the non-overlapped part of the PDSCH2 specifically means that a remaining resource in the PDSCH time-frequency resource corresponding to the PDSCH2, which is not overlapped with the RO time-frequency resource, is used to receive a part of data associated with the remaining resource in the data carried by the PDSCH2. Here, when receiving the part of data, it is also necessary to consider whether the UE is an HD UE or an FD UE. If it is an FD UE, the part of data is received normally. If it is an HD UE, it is also necessary to consider whether the time interval between the PDSCH and the RO satisfies the uplink-downlink conversion time TRX. Moreover, since the downlink time-frequency resource used for downlink channel transmission has changed, the base station needs to perform rate-matching on data at an encoding end to adapt to a new downlink time-frequency resource. Therefore, the part of data received by the UE at this time is actually the data obtained after the base station performs rate-matching on original data carried by the PDSCH.

For the third case, as demonstrated by RO#2 and PDSCH3 shown in FIG. 6, in this case, there are two transmission schemes. In scheme 1, reception of PDSCH3 is canceled, and only sending of the RACH preamble on the RO#2 channel is performed. In scheme 2, the RACH preamble is sent on the RO#2 channel while the non-overlapped part of PDSCH3 is received. In scheme 2, the reception of the non-overlapped part of the PDSCH3 specifically means that a remaining resource in the PDSCH time-frequency resource corresponding to the PDSCH3, which is not overlapped with the an SBFD time-frequency resource or an RO time-frequency resource, is used to receive a part of data associated with the remaining resource in the data carried by the PDSCH3. Here, when receiving the part of data, it is also necessary to consider whether the UE is an HD UE or an FD UE. If it is an FD UE, the part of data is received normally. If it is an HD UE, it is also necessary to consider whether the time interval between the PDSCH and the RO satisfies the uplink-downlink conversion time TRX. Moreover, since the downlink time-frequency resource used for downlink channel transmission has changed, the base station needs to perform rate-matching on data at the encoding end to adapt to a new downlink time-frequency resource. Therefore, the part of data received by the UE at this time is actually the data obtained after the base station performs rate-matching on the original data carried by the PDSCH. The rate matching adopts a conventional technique, which will not be described in detail in the present application.

For the fourth case, as demonstrated by RO#1 and PDSCH3 shown in FIG. 6, in this case, for an FD UE, the reception of PDSCH3 can be performed normally and the RACH preamble can be sent on the RO#1 channel. However, if the base station sends the PDSCH3, it is necessary to consider the overlap between the PDSCH3 time-frequency resource and the SBFD time-frequency resource. After rate-matching is performed, the downlink data is sent at a part of the PDSCH3 that is not overlapped with the SBFD time-frequency resource. For an HD UE, sending of the RACH preamble on the RO#1 channel is normally performed. Moreover, the uplink-downlink conversion time TRX also needs to be considered, and the downlink data carried by the PDSCH3 is received only when the condition of uplink-downlink conversion time is satisfied.

In the above, the case that the RO channel and the PDSCH jointly overlap the SBFD time-frequency resource is described. It should be noted that the PDSCH may also be a repetition of the PDSCH, that is, the data transmission mechanism described above is also applicable to the repetition of the PDSCH.

The data transmission method is described in the following by taking a case where the RO channel and a physical downlink control channel (PDCCH) jointly overlap the SBFD time-frequency resource as an example.

In an example of this application, the target time-frequency resource mentioned in block S101 include an RO time-frequency resource where a target RO is located, and a PDCCH time-frequency resource where a PDCCH is located. Wherein the target RO is any one of at least one RO configured for the target slot, and the RO time-frequency resource is located within the SBFD time-frequency resource.

In an embodiment of this application, the determining executed in block S 102 comprises: if the overlapping result is that the PDCCH time-frequency resource is overlapped or not overlapped with the SBFD time-frequency resource, and the PDCCH time-frequency resource is not overlapped with the RO time-frequency resource, then in case that the UE is in a full-duplex TDD mode, it is determined that the data transmission operation corresponding to the target time-frequency resource is as follows: receiving data carried by the PDCCH at the PDCCH time-frequency resource, and sending a random access signal carried by the target RO at the RO time-frequency resource; in case that the UE is in a half-duplex TDD mode, it is determined that the data transmission operation corresponding to the target time-frequency resource is as follows: when the condition that the time interval between the PDCCH and the target RO is greater than the uplink-downlink conversion time is met, receiving data carried by the PDCCH at the PDCCH time-frequency resource and sending the random access signal carried by the target RO at the RO time-frequency resource, and when the condition is not met, only sending the random access signal at the RO time-frequency resource, and prohibiting a reception of the data carried by the PDCCH at the PDCCH time-frequency resource.

In an embodiment of this application, the determining executed in block S102 comprises: if the overlapping result is that the PDCCH time-frequency resource is not overlapped with the SBFD time-frequency resource, and the PDCCH time-frequency resource is not overlapped with the RO time-frequency resource, then in case that the UE is in a full-duplex TDD mode, it is determined that the data transmission operation corresponding to the target time-frequency resource is as follows: receiving data carried by the target PDCCH at the PDCCH time-frequency resource, and sending a random access signal carried by the target RO at the RO time-frequency resource; in case that the UE is in a half-duplex TDD mode, it is determined that the data transmission operation corresponding to the target time-frequency resource is as follows: when the condition that the time interval between the target PDCCH and the target RO is greater than the uplink-downlink conversion time is met, receiving data carried by the target PDCCH at the PDCCH time-frequency resource and sending the random access signal carried by the target RO at the RO time-frequency resource, and when the condition is not met, only sending the random access signal at the RO time-frequency resource, and prohibiting a reception of the data carried by the target PDCCH at the PDCCH time-frequency resource.

In an embodiment of this application, the determining executed in the block S102 comprises: if the overlapping result is that the PDCCH time-frequency resource is partially overlapped with the SBFD time-frequency resource, and the PDCCH time-frequency resource is not overlapped with the RO time-frequency resource, then in case that the UE is in a full-duplex TDD mode, it is determined that the data transmission operation corresponding to the target time-frequency resource is as follows: at a remaining resource in the PDCCH time-frequency resource that is not overlapped with the SBFD time-frequency resource, receiving a part of data in data carried by the target PDCCH associated with the remaining resource, and sending a random access signal carried by the target RO at the RO time-frequency resource; and in case that the UE is in a half-duplex TDD mode, it is determined that the data transmission operation corresponding to the target time-frequency resource is as follows: when the condition that the time interval between the target PDCCH and the target RO is greater than the uplink-downlink conversion time is met, at a remaining resource in the PDCCH time-frequency resource that is not overlapped with the SBFD time-frequency resource, receiving a part of data in the data carried by the target PDCCH associated with the remaining resource, and sending a random access signal carried by the target RO at the RO time-frequency resource, and when the condition is not met, only sending the random access signal at the RO time-frequency resource, and prohibiting a reception of the data carried by the target PDCCH at the PDCCH time-frequency resource.

In an embodiment of this application, the determining executed in the above block S 102 comprises: if the overlapping result is that the PDCCH time-frequency resource is not overlapped with the SBFD time-frequency resource, and the PDCCH time-frequency resource is partially overlapped with the RO time-frequency resource, but a start point of the PDCCH reception is earlier than a start point of the target RO transmission, then in case that the UE is in a full-duplex TDD mode, it is determined that the data transmission operation corresponding to the target time-frequency resource is as follows: receiving the data carried by the target PDCCH at the PDCCH time-frequency resource, and sending the random access signal carried by the target RO at the RO time-frequency resource; and in case that the UE is in a half-duplex TDD mode, it is determined that the data transmission operation corresponding to the target time-frequency resource is as follows: when the condition that the time interval between the target PDCCH and the target RO is greater than the uplink-downlink conversion time is met, sending the random access signal carried by the target RO at the RO time-frequency resource, and at a remaining resource in the PDCCH time-frequency resource that is not overlapped with the RO time-frequency resource, receiving a part of data in the data carried by the target PDCCH associated with the remaining resource, and when the condition is not met, only sending the random access signal carried by the target RO at the RO time-frequency resource, and prohibiting a reception of the data carried by the target PDCCH at the PDCCH time-frequency resource.

In an embodiment of this application, the determining executed in the block S102 comprises: if the overlapping result is that the PDCCH time-frequency resource is partially overlapped with the SBFD time-frequency resource, and the PDCCH time-frequency resource is partially overlapped with the RO time-frequency resource, but the start point of the PDCCH reception is later than the start point of the target RO transmission, then in case that the UE is in a full-duplex TDD mode, it is determined that the data transmission operation corresponding to the target time-frequency resource is as follows: receiving the data carried by the target PDCCH at the PDCCH time-frequency resource, and sending a random access signal carried by the target RO at the RO time-frequency resource; and in case that the UE is in a half-duplex TDD mode, it is determined that the data transmission operation corresponding to the target time-frequency resource is as follows: when the condition that the time interval between the target PDCCH and the target RO is greater than the uplink-downlink conversion time is met, sending the random access signal carried by the target RO at the RO time-frequency resource, and at a remaining resource in the PDCCH time-frequency resource which is not overlapped with the SBFD time-frequency resource or the RO time-frequency resource, receiving a part of data associated with the remaining resource in the data carried by the target PDCCH, and when the condition is not met, only sending the random access signal carried by the target RO at the RO time-frequency resource, and prohibiting a reception of the data carried by the target PDCCH at the PDCCH time-frequency resource.

In an embodiment of the present application, the determining executed in the block S102 comprises: if the overlapping result is that the PDCCH time-frequency resource is overlapped or not overlapped with the SBFD time-frequency resource, and the PDCCH time-frequency resource is partially overlapped with the RO time-frequency resource, then under the condition that no random access signal is to be sent, it is determined that the data transmission operation corresponding to the target time-frequency resource is as follows: ignoring the target RO, and either receiving the data carried by the target PDCCH at the PDCCH time-frequency resource or prohibiting a reception of the data carried by the target PDCCH.

As shown in FIG. 7, the RO time-frequency resource is located in the SBFD time-frequency resource, and there are several examples illustrating different cases of the overlapping result of the SBFD time-frequency resource and the target time-frequency resource. In the first case, the PDCCH time-frequency resource is not overlapped with the SBFD time-frequency resource, and the PDCCH time-frequency resource is not overlapped with the RO time-frequency resource. In the second case, the PDCCH time-frequency resource is not overlapped with the SBFD time-frequency resource, and the PDCCH time-frequency resource is partially overlapped with the RO time-frequency resource, but the start point of the PDCCH reception is earlier than the start point of target RO transmission. In the third case, the PDCCH time-frequency resource is not overlapped with the SBFD time-frequency resource, and the PDCCH time-frequency resource is partially overlapped with the RO time-frequency resource, but the start point of the PDCCH reception is later than the start point of target RO transmission. Of course, there may be other cases. The above are just for examples and are not intended to be limiting.

For the first case, as demonstrated by RO#1 and PDCCH1 in Fig 7, in this case, if the UE is in a full-duplex TDD mode, both the PDCCH1 and RO#1 channel can be available for receiving and transmitting data normally without being affected. If the UE is in a half-duplex TTD mode, only under the condition that the time interval between the RO#1 channel and the PDCCH1 satisfies the uplink-downlink conversion time TRX, that is, the time interval is greater than the uplink-downlink conversion time TRX, can the PDCCH1 and the RO#1 channel be available for receiving and transmitting data normally. Otherwise, only sending of a RACH preamble on the RO#1 channel is performed, and the data carried by PDCCH1 is prohibited to be received.

For the second case, as demonstrated by RO#2 and PDCCH2 in FIG. 7, in this case, there are three transmission schemes. In scheme 1, reception of PDCCH2 is canceled, and only sending of the RACH preamble on the RO#2 channel is performed. In scheme 2, the RACH preamble is transmitted on the RO#2 channel while a non-overlapped part of PDCCH2 is received. In scheme 3, under the condition that no RACH preamble is to be transmitted, the PDCCH2 is normally received while the RO#2 is ignored, or the PDCCH2 is not received. In scheme 2, the reception of the non-overlapped part of the PDCCH2 specifically means that a remaining resource in the PDCCH time-frequency resource corresponding to the PDCCH2, which is not overlapped with the RO time-frequency resource, is used to receive a part of data associated with the remaining resource in the data carried by the PDCCH2. Here, when receiving the part of data, it is also necessary to consider whether the UE is an HD UE or an FD UE. If it is an FD UE, the part of data is received normally. If it is an HD UE, it is also necessary to consider whether the time interval between the PDCCH and the RO satisfies the uplink-downlink conversion time TRX. Moreover, since the downlink time-frequency resource used for downlink channel transmission has changed, the base station needs to perform rate-matching on data at the encoding end to adapt to a new downlink time-frequency resource. Therefore, the part of data received by the UE at this time is actually the data obtained after the base station performs rate-matching on the original data carried by the PDCCH.

For the third case, as demonstrated by RO#2 and PDCCH3 in FIG. 7, in this case, there are three transmission schemes. In scheme 1, reception of PDCCH3 is canceled, and only sending of the RACH preamble on the RO#2 channel is performed. In scheme 2, the RACH preamble is sent on the RO#2 channel while the non-overlapped part of PDCCH3 is received. In scheme 3, under the condition that no RACH preamble is to be sent, the PDCCH3 is received normally while the RO#2 is ignored, or the PDCCH3 is not received. In scheme 2, reception of the non-overlapped part of the PDCCH3 specifically means that a remaining resource which is not overlapped with the RO time-frequency resource in the PDCCH time-frequency resource corresponding to the PDCCH3 is used to receive a part of data associated with the remaining resource in the data carried by the PDCCH3. Here, when receiving the part of data, it is also necessary to consider whether the UE is an HD UE or an FD UE. If it is an FD UE, the part of data is received normally. If it is an HD UE, it is also necessary to consider whether the time interval between the PDCCH and the RO satisfies the uplink-downlink conversion time TRX. Moreover, since the downlink time-frequency resource used for downlink channel transmission has changed, the base station needs to perform rate-matching on data at the encoding end to adapt to a new downlink time-frequency resource. Therefore, the part of data received by the UE at this time is actually the data obtained after the base station performs rate-matching on the original data carried by the PDCCH.

In the examples of the above three cases, the case where the SBFD time-frequency resource is partially overlapped with the PDCCH time-frequency resource is not considered. If the SBFD time-frequency resource is partially overlapped with the PDCCH time-frequency resource, in addition to removing the overlapped portion of the PDCCH overlapped with the RO, it is also necessary to remove the portion overlapped with the SBFD time-frequency resource.

Taking the RO channel, SSB, PDSCH and PDCCH as an example, the transmission mechanism of a random access signal in a 4-step random access procedure in the SBFD mode is described above.

In an example of the present application, the RO belongs to an exclusive RO group configured for the SBFD mode; and/or the random access signal is an exclusive random access signal configured for the SBFD mode or a conventional random access signal specified by a protocol.

According to the communication mechanism of 5G NR, there exists a matching relationship between RO and SSB. For a traditional UE (Legacy UE), since it cannot identify the configuration for the SBFD, the matching relationship between SSB and RO may not change because of the configuration for the SBFD. However, for a UE that supports the SBFD mode (SBFD UE), the matching relationship between SSB and RO may change due to the configuration for the SBFD. It can be seen from FIG. 8 that the SBFD time-frequency resource is located within the DL slot and is set to UL/Flexible. The upper half of FIG. 8 corresponds to a Legacy UE, and the lower half corresponds to a SBFD UE. Because the Legacy UE does not identify the SBFD configuration in SIB1, the matching relationship between SSB and RO for the Legacy UE is that the SSB#1 corresponds to the RO#2 in the slot#2, and the SSB#2 corresponds to the RO#3 in the slot#2. Because the SBFD UE identifies the SBFD configuration in the SIB1, the matching relationship between SSB and RO for the SBFD UE is that the SSB#1 corresponds to the RO#1 in the slot#1 and the RO#3 in the slot#2, the SSB#2 corresponds to the RO#2 in the slot#2. Therefore, the matching relationships between SSB and RO for the legacy UE and the SBFD UE are different depending on the SBFD configuration. At this time, if the UE selects the RO#2 or the RO#3 to send the RACH preamble, the base station does not know whether the preamble is sent from a legacy UE or an SBFD UE, and thus cannot determine the SSB corresponding to the RO, because the legacy UE and the SBFD UE use the same preamble set.

Therefore, the scheme of the present application proposes that the SBFD UE is identified by configuring an exclusive RACH preamble for the SBFD mode, and the configuration of an SBFD- exclusive RACH preamble carried by a broadcast signaling (such as SIB1) is as follows; the SBFD UE selects and sends the SBFD-specific RACH preamble according to the configuration, so that after receiving the preamble, the base station knows it is the SBFD UE that needs to access and may determine a downlink beam for sending a random access response (RAR) according to the matching relationship between SSB and RO configured for the SBFD UE.

```
        RACH-ConfigCommonFor SBFD{
        SBFD-TotalNumberOfRA-Preambles
        SBFD-SSB-PerRACH-OccasionAndCB-PreamblesPerSSB }
```

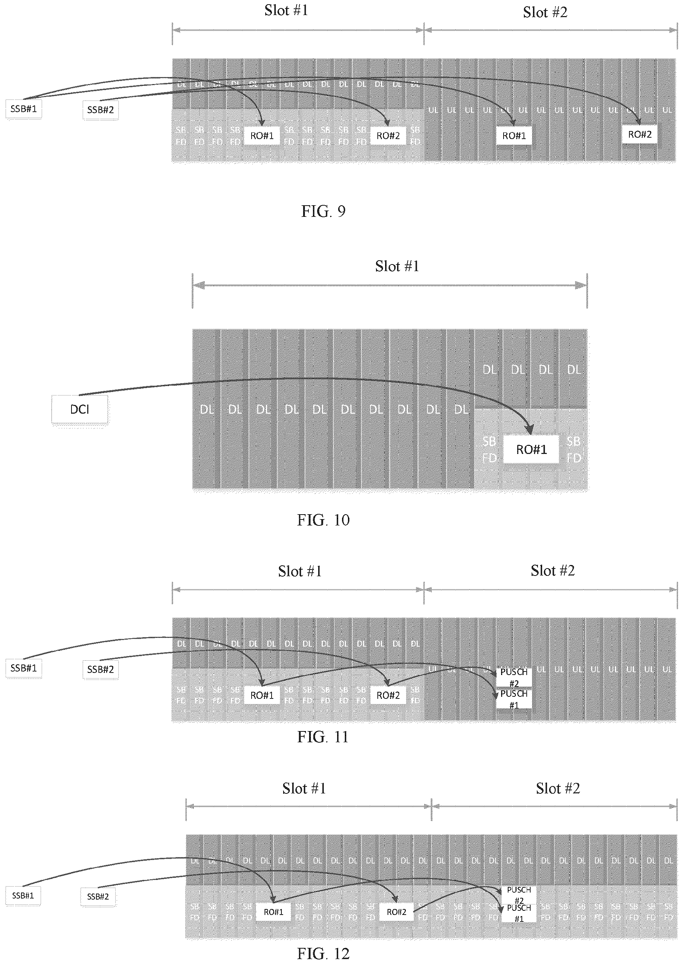

Or the SBFD UE can be identified by the RO. The SBFD UE uses the RO from the RO group configured for the SBFD mode, the Legacy UE uses the conventionally configured RO, and the SSB is respectively matched with the RO from the SBFD-exclusive RO group and the conventionally configured RO, as shown in FIG. 9. For an SBFD UE, only the RO#1 and the RO#2 in the Slot#1 are used; while for a Legacy UE, the RO#1 and the RO#2 in the Slot#2 are used. In this way, the matching relationship between SSB and RO will not be misidentified due to the configuration for SBFD.

Configuration of an SBFD time-frequency resource may be sent to a UE through a broadcast signaling. If the broadcast signaling does not include the configuration of the SBFD time-frequency resource, the SBFD resource may be dynamically configured for an uplink random access in response to a random access triggered by a PDCCH order. Information indication content contained in the DCI is shown in the following table, which mainly indicates the SBFD time-frequency resource and the PRACH resource under the SBFD time-frequency resource, as shown in FIG. 10.

| Signaling IE | Bit Length | Meaning |
|---|---|---|
| UL Frequency Domain Resource Indicator | N | N is the number of sub-band grids occupied by FD |
| RB Number Indicator Of Sub-Band Meaning | M | n2,n4,n8,n16 |
| UL Time Domain Resource Indicator | L | Obtained through the calculation of SLIV formula according to the actual allocation |
| Index Of Random Access Preamble Sequence | K | Index of PRACH random access preamble sequence |
| SS/PBCH index | J | SSB index |
| prach-ConfigurationIndex | O | PRACH configuration index |
| msg 1-FDM | P | Frequency domain resources occupied |
| msg 1-Frequency Start | Q | Starting point of frequency domain |

The following is a 2-step random access transmission method in SBFD mode.

The 2-step random access procedure is a simplified process of the 4-step random access procedure. In step 1 of the 4-step random access procedure, a random access signal is sent using an RO channel, while in step 1 of the 2-step random access procedure, uplink data is transmitted using an MsgA PUSCH in addition to using an MsgA RO channel, where the MsgA PUSCH has an associated relationship with the MsgA RO channel.

The data transmission mechanism in SBFD mode is described in the following in conjunction with the uplink/downlink time-frequency resource used in the 2-step random access procedure.

In an example of the present application, the target time-frequency resource mentioned in block S101 includes: an MsgA RO time-frequency resource where a target MsgA Random Access Channel Opportunity (RO) used for sending a random access message MsgA is located and an MsgA Physical Uplink Shared Channel (PUSCH) time-frequency resource where a target MsgA PUSCH associated with the target MSgA RO is located. The target MsgA RO and the target MsgA PUSCH meet the following: the target MsgA PUSCH is configured in a slot allocated with an SBFD time-frequency resource, and the target MSgA RO associated with the target MsgA PUSCH is configured in a slot not allocated with an SBFD time-frequency resource. Or the target MsgA PUSCH is configured in a slot allocated with an SBFD time-frequency resource, and the target MsgA RO associated with the target MsgA PUSCH is configured in a slot allocated with an SBFD time-frequency resource. Wherein the target MsgA PUSCH and the target MsgA RO correspond to different slots. Or the target MsgA PUSCH is configured in a slot not allocated with an SBFD time-frequency resource, and the target MsgA RO associated with the target MsgA PUSCH is configured in a slot allocated with an SBFD time-frequency resource.

After the SBFD is configured in the broadcast signaling, it will affect the resource configuration of the 2-step random access. Currently, there are three main cases. In case 1, only the MsgA RO for the 2-step random access is configured in an SBFD resource, while the MsgA PUSCH is configured in a conventional UL slot, and the MsgA RO is associated with the MsgA PUSCH. This case is only applicable to a UE that supports the SBFD mode, as specifically shown in FIG. 11

There are two methods for the resource allocation of the MsgA RO and MsgA PUSCH. One method is to allocate MsgA RO resources and MsgA PUSCH resources exclusively to SBFD UEs; the other is to allocate MsgA RO resources only to SBFD users, while MsgA PUSCH resources can be shared by SBFD UEs and legacy UEs. To distinguish between SBFD UEs and legacy UEs, SBFD-exclusive RACH preambles may be configured for identifying SBFD UEs, or SBFD UEs may only use ROs within SBFD resources.

In case 2, both the MsgA RO and the MsgA PUSCH for the 2-step random access are configured in a SBFD resource, and the MsgA RO is associated with the MsgA PUSCH; this case is only applicable to a SBFD UE, as specifically shown in FIG. 12.

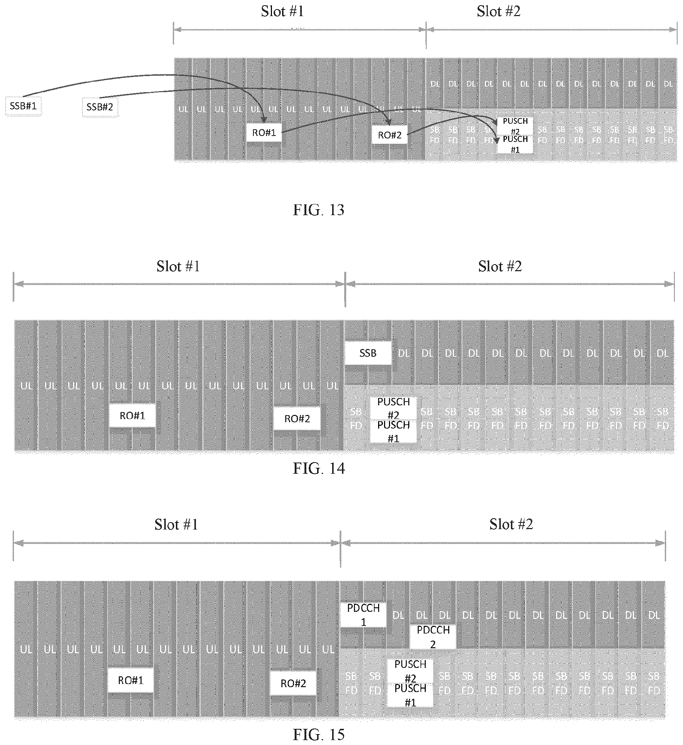

In case 3, only the MsgA PUSCH for the 2-step random access is configured in an SBFD resource, while the MsgA RO is configured in a conventional UL slot, and the MsgA RO is associated with the MsgA PUSCH; this case is only applicable to a SBFD UE, as specifically shown in FIG. 13.

For the resource allocation of the MsgA RO and MsgA PUSCH, there are two methods. One method is to allocate MsgA RO resources and MsgA PUSCH resources exclusively to SBFD UEs; the other is to allocate MsgA PUSCH resources only to SBFD users, while MsgA RO resources can be shared by SBFD UEs and legacy UEs. SBFD UEs can utilize the 2-step RACH; legacy UEs can utilize the 2-step RACH or 4-step RACH. To distinguish between SBFD UEs and legacy UEs, SBFD-exclusive RACH preambles can be configured for identifying SBFD UEs, or SBFD UEs are allowed to use only the MsgA PUSCH within the SBFD resource and the corresponding MsgA RO for the 2-step random access.

In the 2-step random access transmission method in SBFD mode, the transmission mechanism of the MsgA RO channel is similar to that in the 4-step random access transmission method, which will not be described here. The following mainly describes the transmission of the MsgA PUSCH. However, due to the relevance between the MsgA PUSCH and the MsgA RO channel, in case that the MsgA RO channel is invalid, the MsgA PUSCH is also invalid, that is, data may not be sent by using the MsgA PUSCH. Under the condition that the MsgA PUSCH is invalid, if the MsgA RO channel is valid, the random access signal may be normally sent on the MsgA RO channel, followed by repeated transmission of the MsgA PUSCH by the UE. At this time, if a repetition counter times out, a switch from the 2-step random access to the 4-step random access may be made.

In an example of the present application, the MsgA PUSCH time-frequency resource is located within the SBFD time-frequency resource, and the target time-frequency resource further includes a synchronization signal block (SSB) time-frequency resource where an SSB is located; determining the data transmission operation corresponding to the target time-frequency resource according to the overlapping result of the SBFD time-frequency resource and the target time-frequency resource comprises: if the overlapping result is that the SSB time-frequency resource is overlapped or not overlapped with the SBFD time-frequency resource, and the SSB time-frequency resource is not overlapped with the MsgA PUSCH time-frequency resource, then in case that the UE is in a full-duplex TDD mode, it is determined that the data transmission operation corresponding to the target time-frequency resource is as follows: receiving data carried by the SSB at the SSB time-frequency resource, and sending data carried by the target MsgA PUSCH at the MsgA PUSCH time-frequency resource; or in case that the UE is in a half-duplex TDD mode, it is determined that the data transmission operation corresponding to the target time-frequency resource is as follows: when the condition that the time interval between the SSB and the target RO is greater than the uplink-downlink conversion time is met, receiving the data carried by the SSB at the SSB time-frequency resource and sending the data carried by the target MsgA PUSCH at the MsgA PUSCH time-frequency resource, and when the condition is not met, prohibiting the data carried by the target MsgA PUSCH to be sent at the MsgA PUSCH time-frequency resource, and only receiving the data carried by the SSB at the SSB time-frequency resource.

In an embodiment of the present application, the MsgA PUSCH time-frequency resource is located within the SBFD time-frequency resource; and the target time-frequency resource further includes a synchronization signal block (SSB) time-frequency resource where an SSB is located; determining the data transmission operation corresponding to the target time-frequency resource according to the overlapping result of the SBFD time-frequency resource and the target time-frequency resource comprises: if the overlapping result is that the SSB time-frequency resource is overlapped or not overlapped with the SBFD time-frequency resource, and the SSB time-frequency resource is partially overlapped with the MsgA PUSCH time-frequency resource, then it is determined that the data transmission operation corresponding to the target time-frequency resource is as follows: prohibiting sending of the data carried by the target MsgA PUSCH at the MsgA PUSCH time-frequency resource; or at a remaining resource in the MsgA PUSCH time-frequency resource that is not overlapped with the SBFD time-frequency resource, sending a part of data associated with the remaining resource in the data carried by the target MsgA PUSCH.

As shown in FIG. 14, the PUSCH time-frequency resource is located in the SBFD time-frequency resource, and the overlapping result of the SBFD time-frequency resource and the target time-frequency resource can fall in two cases, wherein the first case is that the SSB time-frequency resource is overlapped or not overlapped with the SBFD time-frequency resource, and the SSB time-frequency resource is not overlapped with the PUSCH time-frequency resource. For the first case, if the UE is in a full-duplex TDD mode, then the SSB and the MsgA PUSCH can be available for receiving and transmitting data normally without being affected. If the UE is in a half-duplex TTD mode, only under the condition that the time interval between the SSB and the MsgA PUSCH satisfies the uplink-downlink conversion time TRX, that is, the time interval is greater than the uplink-downlink conversion time TRX, can the SSB and the MsgA PUSCH be available for receiving and transmitting data normally. Otherwise, the MsgA PUSCH is invalid, only receiving of data at the SSB time-frequency resource is performed.

As shown in FIG. 14, the second case of the overlapping result of the SBFD time-frequency resource and the target time-frequency resource is that the SBB time-frequency resource is overlapped or not overlapped with the SBFD time-frequency resource, and the SSB time-frequency resource is partially overlapped the PUSCH time-frequency resource. For the second case, there are two transmission schemes. In scheme 1, the MsgA PUSCH is invalid, and the UE cannot send data on the MsgA PUSCH. In scheme 2, the MsgA PUSCH is valid, and the UE can send a part of data on the MsgA PUSCH. In the scheme 2, sending a part of the data on the MsgA PUSCH specifically means that a remaining resource which is not overlapped with the SSB time-frequency resource in the PUSCH time-frequency resource corresponding to the MsgA PUSCH is used to send a part of data associated with the remaining resource in the data carried by the MsgA PUSCH. In addition, since the uplink time-frequency resource used for uplink channel transmission has changed, the UE needs to perform rate-matching on data at the encoding end to adapt to a new uplink time-frequency resource. Therefore, the part of data sent by the UE at this time is actually the data obtained by the UE after performing rate-matching on the original data carried by MsgA PUSCH.

In an example of the present application, the MsgA PUSCH time-frequency resource is located in the SBFD time-frequency resource, and the target time-frequency resource further includes a physical downlink control channel (PDCCH) time-frequency resource where a PDCCH is located; determining the data transmission operation corresponding to the target time-frequency resource according to the overlapping result of the SBFD time-frequency resource and the target time-frequency resource comprises: if the overlapping result is that the PDCCH time-frequency resource is not overlapped with the SBFD time-frequency resource, and the PDCCH time-frequency resource is not overlapped with the MsgA PUSCH time-frequency resource, then in case that the UE is in a full-duplex TDD mode, it is determined that the data transmission operation corresponding to the target time-frequency resource is as follows: receiving data carried by the PDCCH at the PDCCH time-frequency resource, and sending data carried by the target MsgA PUSCH at the MsgA PUSCH time-frequency resource; in case that the UE is in a half-duplex TDD mode, it is determined that the data transmission operation corresponding to the target time-frequency resource is as follows: when the condition that the time interval between the target PDCCH and the target MsgA PUSCH is greater than the uplink-downlink conversion time is met, receiving the data carried by the target PDCCH at the PDCCH time-frequency resource, and sending the data carried by the target MsgA PUSCH at the MsgA PUSCH time-frequency resource, and when the condition is not met, only sending the data carried by the target MsgA PUSCH at the MsgA PUSCH time-frequency resource, and prohibiting the data carried by the target PDCCH to be received at the PDCCH time-frequency resource.

In an example of the present application, the MsgA PUSCH time-frequency resource is located within the SBFD time-frequency resource, and the target time-frequency resource further comprises a PDCCH time-frequency resource where a PDCCH is located. Determining the data transmission operation corresponding to the target time-frequency resource according to the overlapping result of the SBFD time-frequency resource and the target time-frequency resource includes that: if the overlapping result is that the PDCCH time-frequency resource is not overlapped with the SBFD time-frequency resource, and the PDCCH time-frequency resource is partially overlapped with MsgA PUSCH time-frequency resource, but the start point of the PDCCH reception is later than the start point of the target MsgA PUSCH transmission, then in case that the UE is in full-duplex TDD mode, it is determined the data transmission operation corresponding to the target time-frequency resource is as follows: receiving the data carried by the target PDCCH at the PDCCH time-frequency resource, and sending a random access signal carried by the target MsgA PUSCH at the MsgA PUSCH time-frequency resource. In case that the UE is in half-duplex TDD mode, it is determined that the data transmission operation corresponding to the target time-frequency resource is as follows: when the condition that the time interval between the target PDCCH and the target MsgA PUSCH is greater than the uplink-downlink conversion time is met, sending data carried by the target MsgA PUSCH at the MsgA PUSCH time-frequency resource, and at remaining resource in the PDCCH time-frequency resource which is not overlapped with the MsgA PUSCH time-frequency resource, receiving a part of data associated with the remaining resource in the data carried by the target PDCCH, and when the condition is not met, sending the data carried by the target MsgA PUSCH at the MsgA PUSCH time-frequency resource, and prohibiting the data carried by the target PDCCH to be received at the PDCCH time-frequency resource.

In an example of the present application, the MsgA PUSCH time-frequency resource is located in the SBFD time-frequency resource, and the target time-frequency resource further comprises a PDCCH time-frequency resource where a PDCCH is located. Determining the data transmission operation corresponding to the target time-frequency resource according to the overlapping result of the SBFD time-frequency resource and the target time-frequency resource includes that: if the overlapping result is that the PDCCH time-frequency resource is partially overlapped with the SBFD time-frequency resource, and the PDCCH time-frequency resource is not overlapped with MsgA PUSCH time-frequency resource, then in case that the UE is in full-duplex TDD mode, it is determined the data transmission operation corresponding to the target time-frequency resource is as follows: at a remaining resource in the PDCCH time-frequency resource that is not overlapped with the SBFD time-frequency resource, receiving a part of the data associated with the remaining resource in the data carried by the target PDCCH and sending data carried by the target MsgA PUSCH at the MsgA PUSCH time-frequency resource. In case that the UE is in half-duplex TDD mode, it is determined that the data transmission operation corresponding to the target time-frequency resource is as follows: when the condition that the time interval between the target PDCCH and the target MsgA PUSCH is greater than the uplink-downlink conversion time is met, at a remaining resource in the PDCCH time-frequency resource that is not overlapped with the SBFD time-frequency resource, receiving a part of data associated with the remaining resource in the data carried by the target PDCCH and sending data carried by the target MsgA PUSCH at the MsgA PUSCH time-frequency resource, and when the condition is not met, only sending the data carried by the target MsgA PUSCH at the MsgA PUSCH time-frequency resource, and prohibiting the data carried by the target PDCCH to be received at the PDCCH time-frequency resource.

In an example of the present application, the MsgA PUSCH time-frequency resource is located within the SBFD time-frequency resource, and the target time-frequency resource further comprises a PDCCH time-frequency resource where a PDCCH is located. Determining the data transmission operation corresponding to the target time-frequency resource according to the overlapping result of the SBFD time-frequency resource and the target time-frequency resource includes that: if the overlapping result is that the PDCCH time-frequency resource is partially overlapped with the SBFD time-frequency resource, and the PDCCH time-frequency resource is partially overlapped with MsgA PUSCH time-frequency resource, but the start point of the PDCCH reception is later than the start point of the target MsgA PUSCH transmission, then in case that the UE is in full-duplex TDD mode, it is determined the data transmission operation corresponding to the target time-frequency resource is as follows: receiving the data carried by the target PDCCH at the PDCCH time-frequency resource and sending the data carried by the target MsgA PUSCH at the MsgA PUSCH time-frequency resource. In case that the UE is in half-duplex TDD mode, it is determined that the data transmission operation corresponding to the target time-frequency resource is as follows: when the condition that the time interval between the target PDCCH and the target MsgA PUSCH is greater than the uplink-downlink conversion time is met, sending the data carried by the target MsgA PUSCH at the MsgA PUSCH time-frequency resource, and at the remaining resource in the PDCCH time-frequency resource that is not overlapped with the SBFD time-frequency resource or the MsgA PUSCH time-frequency resource, receiving a part of data associated with the remaining resource in the data carried by the target PDCCH, and when the condition is not met, sending the data carried by the target MsgA PUSCH at the MsgA PUSCH time-frequency resource, and prohibiting the data carried by the target PDCCH to be received at the PDCCH time-frequency resource.

In an example of the present application, the MSGA PUSCH time-frequency resource is located within the SBFD time-frequency resource, and the target time-frequency resource further comprises a PDCCH time-frequency resource where a PDCCH is located. Determining the data transmission operation corresponding to the target time-frequency resource according to the overlapping result of the SBFD time-frequency resource and the target time-frequency resource, include that: if the overlapping result is that the PDCCH time-frequency resource is overlapped or not overlapped with the SBFD time-frequency resource, and the PDCCH time-frequency resource is partially overlapped with the MsgA PUSCH time-frequency resource, but the start point of the PDCCH reception is later than the start point of the target MsgA PUSCH transmission, then under the condition that no random access signal is to be sent, it is determined that the data transmission operation corresponding to the target time-frequency resource is ignoring the target MSGA PUSCH and receiving the data carried by the target PDCCH at the PDCCH time-frequency resource.

As shown in FIG. 15, the overlapping result of the SBFD time-frequency resource and the target time-frequency resource falls in two cases, where the first case is that the PDCCH time-frequency resource is overlapped or not overlapped with the SBFD time-frequency resource, and the PDCCH time-frequency resource is not overlapped with the PUSCH time-frequency resource. For the first case, as shown by MsgA PUSCH1/PUSCH2 and PDCCH1 in FIG. 15, if the UE is in full-duplex TDD mode, PDCCH1 and MsgA PUSCH1/PUSCH2 can be available for receiving and transmitting data normally without being affected. In case that the UE is in half-duplex TTD mode, only under the condition that the time interval between the MsgA PUSCH1/PUSCH2 and the PDCCH1 satisfies the uplink-downlink conversion time TRX, that is, the time interval is greater than the uplink-downlink conversion time TRX, can the PDCCH1 and the MsgA PUSCH1/PUSCH2 be available for receiving and transmitting data normally. Otherwise, only sending of data at MsgA PUSCH1/PUSCH2 is performed and the data carried by PDCCH1 is prohibited to be received.

As shown in FIG. 15, the second case of the overlapping result of the SBFD time-frequency resource and the target time-frequency resource is that the PDCCH time-frequency resource is overlapped or not overlapped with the SBFD time-frequency resource, and the PDCCH time-frequency resource is partially overlapped with the PUSCH time-frequency resource, but the start point of the PDCCH reception is later than the start point of the PUSCH transmission. For the second case, as shown by PUSCH1/PUSCH2 and PDCCH2 in FIG. 15, there are three transmission schemes. In scheme 1, reception of PDCCH2 is canceled, and only sending of data on MsgA PUSCH1/PUSCH2 is performed. In scheme 2, data is sent on MsgA PUSCH1/PUSCH2 while the non-overlapped part of PDCCH2 is received. In scheme 3, in the case where the UE knows that 2-step RACH transmission is not performed, a reception on PDCCH2 is normally performed and MsgA PUSCH1/PUSCH2 is ignored. In scheme 2, reception of the non-overlapped part of the PDCCH2 specifically means that remaining resource in the PDCCH time-frequency resource corresponding to the PDCCH2 which is not overlapped with the PUSCH time-frequency resource is used to receive a part of data associated with the remaining resource in the data carried by the PDCCH2. Here, when receiving the part of data, it is also necessary to consider whether the UE is an HD UE or an FD UE. If it is an FD UE, then the part of data is received normally. If it is an HD UE, it is also necessary to consider whether the time interval between the PDCCH2 and the MsgA PUSCH1/PUSCH2 satisfies the uplink-downlink conversion time TRX. Moreover, since the downlink time-frequency resource used for downlink channel transmission has changed, the base station needs to perform rate-matching on data at the encoding end to adapt to a new downlink time-frequency resource. Therefore, the part of data received by the UE at this time is actually the data obtained by the base station after performing rate-matching on original data carried by PDCCH2.

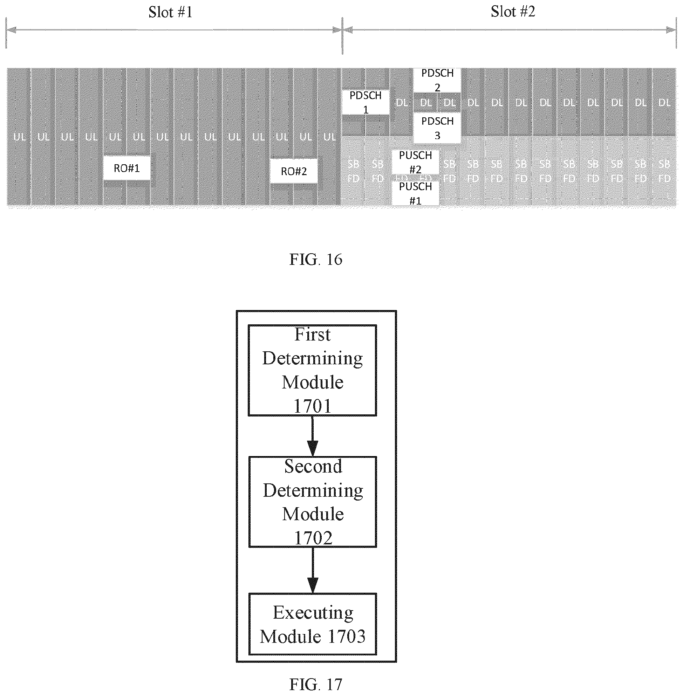

As shown in FIG. 16, the overlapping result of the SBFD time-frequency resource and the target time-frequency resource falls in three cases, wherein the first case is that the PDSCH time-frequency resource is overlapped or not overlapped with the SBFD time-frequency resource, and the PDSCH time-frequency resource is not overlapped with the PUSCH time-frequency resource. For the first case, as shown by MsgA PUSCH1/PUSCH2 and PDSCH1 in FIG. 16, if the UE is in full-duplex TDD mode, PDSCH1 and MsgA PUSCH1/PUSCH2 can be available for receiving and transmitting data normally without being affected. If the UE is in half-duplex TTD mode, only under the condition that the time interval between the MsgA PUSCH1/PUSCH2 and the PDSCH1 satisfies the uplink-downlink conversion time TRX, that is, the time interval is greater than the uplink-downlink conversion time TRX, can the PDSCH1 and the MsgA PUSCH1/PUSCH2 be available for receiving and sending data normally. Otherwise, only sending of data on MsgA PUSCH1/PUSCH2 is performed and the data carried by PDSCH1 is prohibited to be received.

As shown in FIG. 16, the second case of the overlapping result of the SBFD time-frequency resource and the target time-frequency resource is that the PDSCH time-frequency resource is not overlapped with the SBFD time-frequency resource, and the PDSCH time-frequency resource is partially overlapped with the PUSCH time-frequency resource. For the second case, as shown by PUSCH1/PUSCH2 and PDSCH2 in FIG. 16, there are two transmission schemes. In scheme 1, reception of PDSCH2 is canceled, and only sending data on MsgA PUSCH1/PUSCH2 is performed. In scheme 2, data is sent on MsgA PUSCH1/PUSCH2 while a non-overlapped part of PDSCH2 is received. In scheme 2, reception of the non-overlapped part of the PDSCH2 specifically means that the remaining resource which is not overlapped with the PUSCH time-frequency resource at the PDSCH time-frequency resource corresponding to the PDSCH2 is used to receive a part of data associated with the remaining resource in the data carried by the PDSCH2. Here, when receiving the part of data, it is also necessary to consider whether the UE is an HD UE or an FD UE. If it is an FD UE, the part of data is received normally. If it is an HD UE, it is also necessary to consider whether the time interval between the PDSCH2 and the MsgA PUSCH1/PUSCH2 satisfies the uplink-downlink conversion time TRX. Moreover, since the downlink time-frequency resource used for downlink channel transmission has changed, the base station needs to perform rate-matching on data at the encoding end to adapt to a new downlink time-frequency resource. Therefore, the part of data received by the UE at this time is actually the data obtained by the base station after performing rate-matching on original data carried by the PDSCH2.

As shown in Fig 16, the third case of the overlapping result of the SBFD time-frequency resource and the target time-frequency resource is that the PDSCH time-frequency resource is partially overlapped with the SBFD time-frequency resource, and the PDSCH time-frequency resource is partially overlapped with the PUSCH time-frequency resource. For the third case, as shown by PUSCH1/PUSCH2 and PDSCH3 in FIG. 16, there are two transmission schemes. In scheme 1, reception of PDSCH3 is canceled, and only sending data on MsgA PUSCH1/PUSCH2 is performed. In scheme 2, data is sent on MsgA PUSCH1/PUSCH2 while a non-overlapped part of PDSCH3 is received. In scheme 2, reception of the non-overlapped part of the PDSCH3 specifically means that the remaining resource which is not overlapped with the SBFD time-frequency resource in the PDSCH time-frequency resource corresponding to the PDSCH3 is used to receive a part of data associated with the remaining resource in the data carried by the PDSCH3. Here, when receiving the part of data, it is also necessary to consider whether the UE is an HD UE or an FD UE. If it is an FD UE, the part of data is received normally. If it is an HD UE, it is also necessary to consider whether the time interval between the PDSCH3 and the MsgA PUSCH1/PUSCH2 satisfies the uplink-downlink conversion time TRX. Moreover, since the downlink time-frequency resource used for downlink channel transmission has changed, the base station needs to perform rate-matching on data at the encoding end to adapt to a new downlink time-frequency resource. Therefore, the part of data received by the UE at this time is actually the data obtained by the base station after performing rate-matching on original data carried by the PDSCH3.

Configuration of the SBFD time-frequency resource may be sent to a UE through a broadcast signaling. If the broadcast signaling does not include the configuration of the SBFD time-frequency resource, the SBFD time-frequency resource may be dynamically configured for an uplink random access in response to a random access triggered by a PDCCH order. The information indication content contained in the DCI is shown in the following table, which mainly indicates the SBFD time-frequency resource and the 2-step PRACH resource under the SBFD time-frequency resource.

| Signaling IE | Bit Length | Meaning |
|---|---|---|
| UL Frequency Domain Resource Indicator | N | N is the number of sub-band grids occupied by FD |
| RB Number Indicator Of Sub-Band Meaning | M | n2,n4,n8,n16 |
| UL Time Domain Resource Indicator | L | Obtained through the calculation of SLIV formula according to the actual allocation |
| RACH-ConfigCommonTwoStepRA | Q | configuration for MsgA RACH |
| MsgA-PUSCH-Resource | R | configuration for MsgA PUSCH |

Corresponding to the above data transmission method applied to the UE, in an example of the present application, a data transmission method is provided, which is applied to a base station that supports SBFD mode, and the method comprises: determining an SBFD time-frequency resource corresponding to a target slot and a target time-frequency resource associated with the target slot; determining a data transmission operation corresponding to the target time-frequency resource based on an overlapping result of the SBFD time-frequency resource and the target time-frequency resource; performing the determined data transmission operation in the target slot.

In an example of the present application, the target slot can be an uplink (UL) slot, a downlink (DL) slot, or a special slot. The SBFD time-frequency resource occupies at least one symbol of the target slot in time domain, and occupies at least one physical resource block for each symbol in frequency domain.

In an example of the present application, the target time-frequency resource includes an RO time-frequency resource where a target RO is located, and an SSB time-frequency resource where an SSB is located. Wherein the target RO is any one of at least one RO configured for the target slot, and the RO time-frequency resource is located within the SBFD time-frequency resource.

In an example of the present application, determining the data transmission operation corresponding to the target time-frequency resource according to the overlapping result of the SBFD time-frequency resource and the target time-frequency resource comprises: if the overlapping result is that the SSB time-frequency resource is overlapped or not overlapped with the SBFD time-frequency resource, and the SSB time-frequency resource is partially overlapped with the RO time-frequency resource, it is determined that the data transmission operation corresponding to the target time-frequency resource is as follows: only sending data carried by the SSB at the SSB time-frequency resource and prohibiting a detection of a random access signal at the RO time-frequency resource; or sending the data carried by the SSB at the SSB time-frequency resource, and receiving, at a remaining resource in the RO time-frequency resource, a part associated with the remaining resource in a random access signal carried by the target RO. Wherein the remaining resource is a time-frequency resource which is not overlapped with the SSB time-frequency resource in the RO time-frequency resource.

In an example of the present application, determining the data transmission operation corresponding to the target time-frequency resource according to the overlapping result of the SBFD time-frequency resource and the target time-frequency resource comprises: if the overlapping result is that the SSB time-frequency resource is overlapped or not overlapped with the SBFD time-frequency resource, and the SSB time-frequency resource is not overlapped with the RO time-frequency resource, then in case that a UE which is to receive data from the base station is in full-duplex TDD mode, it is determined that the data transmission operation corresponding to the target time-frequency resource is as follows: sending data carried by the SSB at the SSB time-frequency resource, and receiving a random access signal carried by the target RO at the RO time-frequency resource; or in case that the UE is in half-duplex TDD mode, it is determined that the data transmission operation corresponding to the target time-frequency resource is as follows: when the condition that the time interval between the SSB and the target RO is greater than the uplink-downlink conversion time is met, sending the data carried by the SSB at the SSB time-frequency resource and receiving the random access signal carried by the target RO at the RO time-frequency resource, and when the condition is not met, prohibiting a detection of the random access signal at the RO time-frequency resource, and only sending the data carried by the SSB at the SSB time-frequency resource.

In an example of the present application, the target time-frequency resource includes an RO time-frequency resource where a target RO is located, and a PDSCH time-frequency resource where a PDSCH is located. Wherein the target RO is any one of at least one RO configured for the target slot, and the RO time-frequency resource is located within the SBFD time-frequency resource.

In an example of the present application, determining the data transmission operation corresponding to the target time-frequency resource according to the overlapping result of the SBFD time-frequency resource and the target time-frequency resource comprises: if the overlapping result is that the PDSCH time-frequency resource is not overlapped with the SBFD time-frequency resource, and the PDSCH time-frequency resource is not overlapped with the RO time-frequency resource, then in case that a UE which is to receive data from the base station is in full-duplex TDD mode, it is determined that the data transmission operation corresponding to the target time-frequency resource is as follows: sending data carried by the target PDSCH at the PDSCH time-frequency resource, and receiving a random access signal carried by the target RO at the RO time-frequency resource; in case that the UE is in half-duplex TDD mode, it is determined that the data transmission operation corresponding to the target time-frequency resource is as follows: when the condition that the time interval between the target PDSCH and the target RO is greater than the uplink-downlink conversion time, sending data carried by the target PDSCH at the PDSCH time-frequency resource and receiving the random access signal carried by the target RO at the RO time-frequency resource, and when the condition is not met, only receiving the random access signal at the RO time-frequency resource, and prohibiting sending of the data carried by the target PDSCH at the PDSCH time-frequency resource.

In an example of the present application, if the overlapping result is that the PDSCH time-frequency resource is partially overlapped with the SBFD time-frequency resource, and the PDSCH time-frequency resource is not overlapped with the RO time-frequency resource, if the UE which is to receive data from the base station is in full-duplex TDD mode, it is determined that the data transmission operation corresponding to the target time-frequency resource is as follows: performing rate-matching on data carried by the target PDSCH; at a remaining resource in the PDSCH time-frequency resource which is not overlapped with the SBFD time-frequency resource, sending data obtained after performing the rate-matching, and receiving a random access signal carried by the target RO at the RO time-frequency resource. In case that the UE is in half-duplex TDD mode, it is determined that the data transmission operation corresponding to the target time-frequency resource is as follows: when the condition that the time interval between the target PDSCH and the target RO is greater than the uplink-downlink conversion time is met, performing rate-matching on the data carried by the target PDSCH; at a remaining resource in the PDSCH time-frequency resource which is not overlapped with the SBFD time-frequency resource, sending the data obtained after performing the rate-matching, and receiving a random access signal carried by the target RO at the RO time-frequency resource, and when the condition is not met, only receiving the random access signal at the RO time-frequency resource, and prohibiting sending of the data carried by the target PDSCH at the PDSCH time-frequency resource.

In an example of the present application, determining the data transmission operation corresponding to the target time-frequency resource according to the overlapping result of the SBFD time-frequency resource and the target time-frequency resource comprises: if the overlapping result is that the PDSCH time-frequency resource is not overlapped with the SBFD time-frequency resource, and the PDSCH time-frequency resource is partially overlapped with the RO time-frequency resource, then in case that the UE which is to receive data from the base station is in full-duplex TDD mode, it is determined that the data transmission operation corresponding to the target time-frequency resource is as follows: sending the data carried by the target PDSCH at the PDSCH time-frequency resource, and receiving the random access signal carried by the target RO at the RO time-frequency resource. In case that the UE is in half-duplex TDD mode, it is determined that the data transmission operation corresponding to the target time-frequency resource is as follows: when the condition that the time interval between the target PDSCH and the target RO is greater than the uplink-downlink conversion time is met, performing rate-matching on the data carried by the target PDSCH, and at a remaining resource in the target PDSCH time-frequency resource that is not overlapped with the RO time-frequency resource, sending data obtained after the rate-matching is performed, and receiving the random access signal carried by the target RO at the RO time-frequency resource, and when the condition is not met, only receiving the random access signal carried by the target RO at the RO time-frequency resource, and prohibiting the data carried by the target PDSCH to be sent at the PDSCH time-frequency resource.

In an example of the present application, if the overlapping result is that the PDSCH time-frequency resource is partially overlapped with the SBFD time-frequency resource, and the PDSCH time-frequency resource is partially overlapped with the RO time-frequency resource, then in case that the UE which is to receive data from the base station is in full-duplex TDD mode, it is determined that the data transmission operation corresponding to the target time-frequency resource is as follows: performing rate-matching on data carried by the target PDSCH; at a remaining resource in the PDSCH time-frequency resource which is not overlapped with the SBFD time-frequency resource or the RO time-frequency resource, sending data obtained after the rate-matching is performed, and receiving the random access signal carried by the target RO at the RO time-frequency resource. In case that the UE is in half-duplex TDD mode, it is determined that the data transmission operation corresponding to the target time-frequency resource is as follows: when the condition that the time interval between the target PDSCH and the target RO is greater than the uplink-downlink conversion time is met, performing rate-matching on data carried by the target PDSCH, at a remaining resource in the PDSCH time-frequency resource which is not overlapped with the RO time-frequency resource or the SBFD time-frequency resource, sending the data obtained after the rate-matching is performed, and receiving the random access signal carried by the target RO at the RO time-frequency resource, and when the condition is not met, receiving the random access signal carried by the target RO at the RO time-frequency resource, and prohibiting sending of the data carried by the target PDSCH at the PDSCH time-frequency resource.

In an example of the present application, the target time-frequency resource includes an RO time-frequency resource where a target RO is located, and a PDCCH time-frequency resource where a PDCCH is located. Wherein the target RO is any one of at least one RO configured for the target slot, and the RO time-frequency resource is located within the SBFD time-frequency resource.

In an example of the present application, if the overlapping result is that the PDCCH time-frequency resource is not overlapped with the SBFD time-frequency resource, and the PDCCH time-frequency resource is not overlap with the RO time-frequency resource, then in case that the UE which is to receive data from the base station is in full-duplex TDD mode, it is determined that the data transmission operation corresponding to the target time-frequency resource is as follows: sending data carried by the target PDCCH at the PDCCH time-frequency resource, and receiving a random access signal carried by the target RO at the RO time-frequency resource; in case that the UE is in half-duplex TDD mode, it is determined that the data transmission operation corresponding to the target time-frequency resource is as follows: when the condition that the time interval between the target PDCCH and the target RO is greater than the uplink-downlink conversion time is met, sending data carried by the target PDCCH at the PDCCH time-frequency resource and receiving the random access signal carried by the target RO at the RO time-frequency resource; and when the condition is not met, only receiving the random access signal at the RO time-frequency resource, and prohibiting sending of the data carried by the target PDCCH at the PDCCH time-frequency resource.

In an example of the present application, if the overlapping result is that the PDCCH time-frequency resource is partially overlapped with the SBFD time-frequency resource, and the PDCCH time-frequency resource is not overlapped with the RO time-frequency resource, and in case that the UE which is to receive data from the base station is in full-duplex TDD mode, it is determined that the data transmission operation corresponding to the target time-frequency resource is as follows: performing rate-matching on the data carried by the target PDCCH; at a remaining resource in the PDCCH time-frequency resource that is not overlapped with the SBFD time-frequency resource, sending data obtained after the rate-matching is performed; and receiving a random access signal carried by the target RO at the RO time-frequency resource. In case that the UE is in half-duplex TDD mode, it is determined that the data transmission operation corresponding to the target time-frequency resource is as follows: when the condition that the time interval between the target PDCCH and the target RO is greater than the uplink-downlink conversion time is met, performing rate-matching on the data carried by the target PDCCH, at a remaining resource in the PDCCH time-frequency resource that is not overlapped with the SBFD time-frequency resource, sending the data obtained after the rate-matching is performed, and receiving the random access signal carried by the target RO at the RO time-frequency resource; and when the condition is not met, only receiving the random access signal at the RO time-frequency resource, and prohibiting sending of the data carried by the target PDCCH at the PDCCH time-frequency resource.

In an example of the present application, if the overlapping result is that the PDCCH time-frequency resource is not overlapped with the SBFD time-frequency resource, and the PDCCH time-frequency resource is partially overlapped with the RO time-frequency resource, but the start point of the PDCCH reception is earlier than the start point of the target RO transmission, in case that the UE which is to receive from the base station is in full-duplex TDD mode, it is determined the data transmission operation corresponding to the target time-frequency resource is as follows: sending data carried by the target PDCCH at the PDCCH time-frequency resource, and receiving a random access signal carried by the target RO at the RO time-frequency resource. In case that the UE which is to receive from the base station is in half-duplex TDD mode, it is determined that the data transmission operation corresponding to the target time-frequency resource is as follows: when the condition that the time interval between the target PDCCH and the target RO is greater than the uplink-downlink conversion time is met, performing rate-matching on the data carried by the target PDCCH, at a remaining resource in the PDCCH time-frequency resource that is not overlapped with the RO time-frequency resource, sending the data obtained after the rate-matching is performed, and receiving the random access signal carried by the target RO at the RO time-frequency resource; and when the condition is not met, only receiving the random access signal carried by the target RO at the RO time-frequency resource, and prohibiting sending of the data carried by the target PDCCH at the PDCCH time-frequency resource.

In an example of the present application, if the overlapping result is that the PDCCH time-frequency resource is partially overlapped with the SBFD time-frequency resource, and the PDCCH time-frequency resource is partially overlapped with the RO time-frequency resource, but the start point of the PDCCH reception is earlier than the start point of the target RO transmission, in case that the UE which is to receive from the base station is in full-duplex TDD mode, it is determined the data transmission operation corresponding to the target time-frequency resource is as follows: performing rate-matching on data carried by the target PDCCH, at a remaining resource in the PDCCH time-frequency resource that is not overlapped with the SBFD time-frequency resource or the RO time-frequency resource, sending the data obtained after the rate-matching is performed, and receiving a random access signal carried by the target RO at the RO time-frequency resource. In case that the UE is in half-duplex TDD mode, it is determined that the data transmission operation corresponding to the target time-frequency resource is as follows: when the condition that the time interval between the target PDCCH and the target RO is greater than the uplink-downlink conversion time is met, performing rate-matching on the data carried by the target PDCCH, at a remaining resource in the PDCCH time-frequency resource that is not overlapped with the RO time-frequency resource or the SBFD time-frequency resource, sending the data obtained after the rate-matching is performed, and receiving the random access signal carried by the target RO at the RO time-frequency resource; and when the condition is not met, only receiving the random access signal carried by the target RO at the RO time-frequency resource, and prohibiting sending of the data carried by the target PDCCH at the PDCCH time-frequency resource.

In an example of the present application, the target RO is an MsgA RO.

In an example of the present application, the target time-frequency resource includes an MsgA RO time-frequency resource where a target MsgA RO used for sending a random access message MsgA is located and an MsgA PUSCH time-frequency resource where a target MsgA PUSCH associated with the target MsgA RO is located. The target MsgA RO and the target MsgA PUSCH meet the following conditions: the target MsgA PUSCH is configured in a slot allocated with an SBFD time-frequency resource, and the target MsgA RO associated with the target MsgA PUSCH is configured in a slot not allocated with an SBFD time-frequency resource; or the target MsgA PUSCH is configured in a slot allocated with an SBFD time-frequency resource, and the target MsgA RO associated with the target MSgA PUSCH is configured in a slot allocated with an SBFD time-frequency resource, where the MsgA PUSCH and the MsgA RO correspond to different slots; or the target MsgA PUSCH is configured in a slot not allocated with an SBFD time-frequency resource, and the target MsgA RO associated with the target MSgA PUSCH is configured in a slot allocated with an SBFD time-frequency resource.

In an example of the present application, the MsgA PUSCH time-frequency resource is located within the SBFD time-frequency resource, and the target time-frequency resource further includes an synchronization signal block (SSB) time-frequency resource where an SSB is located; determining the data transmission operation corresponding to the target time-frequency resource according to the overlapping result of the SBFD time-frequency resource and the target time-frequency resource comprises: if the overlapping result is that the SSB time-frequency resource is overlapped or not overlapped with the SBFD time-frequency resource, and the SSB time-frequency resource is not overlapped with the MsgA PUSCH time-frequency resource, then in case that the UE which is to receive the base station is in full-duplex TDD mode, it is determined that the data transmission operation corresponding to the target time-frequency resource is as follows: sending data carried by the SSB at the SSB time-frequency resource, and receiving data carried by the target MsgA PUSCH at the MsgA PUSCH time-frequency resource; or in case that the UE is in half-duplex TDD mode, it is determined that the data transmission operation corresponding to the target time-frequency resource is as follows: when the condition that the time interval between the SSB and the target MsgA PUSCH is greater than the uplink-downlink conversion time is met, sending the data carried by the SSB at the SSB time-frequency resource and receiving the data carried by the target MsgA PUSCH at the MsgA PUSCH time-frequency resource; and when the condition is not met, prohibiting a reception of the data carried by the target MsgA PUSCH is prohibited at the MsgA PUSCH time-frequency resource, and only sending the data carried by the SSB at the SSB time-frequency resource.

In an example of the present application, the MsgA PUSCH time-frequency resource is located within the SBFD time-frequency resource, and the target time-frequency resource further includes an SSB time-frequency resource where an SSB is located. Determining the data transmission operation corresponding to the target time-frequency resource according to the overlapping result of the SBFD time-frequency resource and the target time-frequency resource comprises: if the overlapping result is that the SSB time-frequency resource is overlapped or not overlapped with the SBFD time-frequency resource, and the SSB time-frequency resource is partially overlapped with the MsgA PUSCH time-frequency resource, it is determined that the data transmission operation corresponding to the target time-frequency resource is as follows: prohibiting a reception of data carried by the target MsgA PUSCH at the MsgA PUSCH time-frequency resource; or at a remaining resource in the MsgA PUSCH time-frequency resource that is not overlapped with the SBFD time-frequency resource, receiving a part of data associated with the remaining resource in the data carried by the target MsgA PUSCH.

In an example of the present application, the MsgA PUSCH time-frequency resource is located within the SBFD time-frequency resource, and the target time-frequency resource further includes a PDCCH time-frequency resource where a PDCCH is located. Determining the data transmission operation corresponding to the target time-frequency resource according to the overlapping result of the SBFD time-frequency resource and the target time-frequency resource comprises: if the overlapping result is that the PDCCH time-frequency resource is not overlapped with the SBFD time-frequency resource, and the PDCCH time-frequency resource is not overlapped with the MsgA PUSCH time-frequency resource, then in case that the UE which is to receive data from the base station is in full-duplex TDD mode, it is determined that the data transmission operation corresponding to the target time-frequency resource is as follows: sending the data carried by the PDCCH at the PDCCH time-frequency resource, and receiving the data carried by the target MsgA PUSCH at the MsgA PUSCH time-frequency resource; in case that the UE is in half-duplex TDD mode, it is determined that the data transmission operation corresponding to the target time-frequency resource is as follows: when the condition that the time interval between the target PDCCH and the target MsgA PUSCH is greater than the uplink-downlink conversion time is met, sending the data carried by the target PDCCH at the PDCCH time-frequency resource, and receiving the data carried by the target MsgA PUSCH at the MSGA PUSCH time-frequency resource; and when the condition is not met, only receiving the data carried by the target MsgA PUSCH at the MsgA PUSCH time-frequency resource, and prohibiting sending of the data carried by the PDCCH at the PDCCH time-frequency resource.

In an example of the present application, the MsgA PUSCH time-frequency resource is located within the SBFD time-frequency resource, and the target time-frequency resource further includes a PDCCH time-frequency resource where a PDCCH is located. Determining the data transmission operation corresponding to the target time-frequency resource according to the overlapping result of the SBFD time-frequency resource and the target time-frequency resource includes that: if the overlapping result is that the PDCCH time-frequency resource is not overlapped with the SBFD time-frequency resource, and the PDCCH time-frequency resource is partially overlapped with the MsgA PUSCH time-frequency resource, but the start point of the PDCCH reception is later than the start point of the target MsgA PUSCH transmission, in case that the UE which is to receive data from the base station is in full-duplex TDD mode, it is determined that the data transmission operation corresponding to the target time-frequency resource is as follows: sending data carried by the target PDCCH at the PDCCH time-frequency resource and receiving a random access signal carried by the target RO at the RO time-frequency resource; in case that the UE which is to receive data from the base station is in half-duplex TDD mode, it is determined that the data transmission operation corresponding to the target time-frequency resource is as follows: when the condition that the time interval between the target PDCCH and the target RO is greater than the uplink-downlink conversion time is met, performing rate-matching on data carried by the target PDCCH;
at a remaining resource in the PDCCH time-frequency resource which is not overlapped with the MsgA PUSCH time-frequency resource, sending the data obtained after the rate-matching is performed, and receiving the data carried by the target MsgA PUSCH at the MsgA PUSCH time-frequency resource; and when the condition is not met, only receiving the data carried by the target MsgA PUSCH at the MsgA PUSCH time-frequency resource, and prohibiting a reception of the data carried by the target PDCCH at the PDCCH time-frequency resource.

In an example of the present application, the MsgA PUSCH time-frequency resource is located within the SBFD time-frequency resource, and the target time-frequency resource further comprises a PDCCH time-frequency resource where a PDCCH is located. Determining the data transmission operation corresponding to the target time-frequency resource according to the overlapping result of the SBFD time-frequency resource and the target time-frequency resource includes that: if the overlapping result is that the PDCCH time-frequency resource is partially overlapped with the SBFD time-frequency resource, and the PDCCH time-frequency resource is not overlapped with MsgA PUSCH time-frequency resource, then in case that the UE which is to receive data from the base station is in full-duplex TDD mode, it is determined that the data transmission operation corresponding to the target time-frequency resource is as follows: performing rate-matching on the data carried by the target PDCCH, at a remaining resource in the PDCCH time-frequency resource that is not overlapped with the SBFD time-frequency resource, sending the data obtained after the rate-matching is performed, and receiving data carried by the target MsgA PUSCH at the MsgA PUSCH time-frequency resource. In case that the UE is in half-duplex TDD mode, it is determined that the data transmission operation corresponding to the target time-frequency resource is as follows: when the condition that the time interval between the target PDCCH and the target MsgA PUSCH is greater than the uplink-downlink conversion time is met, performing rate-matching on the data carried by the target PDCCH, at a remaining resource in the PDCCH time-frequency resource that is not overlapped with the SBFD time-frequency resource, sending the data obtained after the rate-matching is performed, and receiving data carried by the target MsgA PUSCH at the MsgA PUSCH time-frequency resource; and when the condition is not met, only receiving the data carried by the target MsgA PUSCH at the MsgA PUSCH time-frequency resource, and prohibiting sending of the data carried by the target PDCCH at the PDCCH time-frequency resource.

In an example of the present application, the MsgA PUSCH time-frequency resource is located within the SBFD time-frequency resource, and the target time-frequency resource further includes a PDCCH time-frequency resource where a PDCCH is located. Determining the data transmission operation corresponding to the target time-frequency resource according to the overlapping result of the SBFD time-frequency resource and the target time-frequency resource comprises: if the overlapping result is that the PDCCH time-frequency resource is partially overlapped with the SBFD time-frequency resource, and the PDCCH time-frequency resource is partially overlapped with the MsgA PUSCH time-frequency resource, but the start point of the PDCCH reception is later than the start point of the target MsgA PUSCH transmission; in case that the UE which is to receive data from the base station is in full-duplex TDD mode, it is determined that the data transmission operation corresponding to the target time-frequency resource is as follows: performing rate-matching on data carried by the target PDCCH, at a remaining resource in the PDCCH time-frequency resource which is not overlapped with the SBFD time-frequency resource or the RO time-frequency resource, sending the data obtained after the rate-matching is performed, and receiving a random access signal carried by the target RO at the RO time-frequency resource. Or in case that the UE is in half-duplex TDD mode, it is determined that the data transmission operation corresponding to the target time-frequency resource is as follows: when the condition that the time interval between the target PDCCH and the target RO is greater than the uplink-downlink conversion time is met, performing rate-matching on data carried by the target PDCCH, at a remaining resource in the PDCCH time-frequency resource which is not overlapped with the MSGA PUSCH time-frequency resource or the SBFD time-frequency resource, sending the data obtained after the rate-matching is performed, and receiving the data carried by the target MsgA PUSCH at the MsgA PUSCH time-frequency resource; and when the condition is not met, only receiving the data carried by the target MsgA PUSCH at the MsgA PUSCH time-frequency resource, and prohibiting sending of the data carried by the target PDCCH at the PDCCH time-frequency resource.

In an example of the present application, the MsgA PUSCH time-frequency resource is located within the SBFD time-frequency resource, and the target time-frequency resource further includes a PDSCH time-frequency resource where a PDSCH is located. Determining the data transmission operation corresponding to the target time-frequency resource according to the overlapping result of the SBFD time-frequency resource and the target time-frequency resource comprises: if the overlapping result is that the PDSCH time-frequency resource is not overlapped with the SBFD time-frequency resource, and the PDSCH time-frequency resource is not overlapped with the MsgA PUSCH time-frequency resource, then in case the UE which is to receive data from the base station is in full-duplex TDD mode, it is determined that the data transmission operation corresponding to the target time-frequency resource is as follows: sending the data carried by the target PDSCH at the PDSCH time-frequency resource, and receiving the data carried by the target MsgA PUSCH at the MsgA PUSCH time-frequency resource. Or in case that the UE is in half-duplex TDD mode, it is determined that the data transmission operation corresponding to the target time-frequency resource is as follows: when the condition that the time interval between the target PDSCH and the target MsgA PUSCH is greater than the uplink-downlink conversion time, sending the data carried by the target PDSCH at the PDSCH time-frequency resource, and receiving the data carried by the target Msga PUSCH at the MSGA PUSCH time-frequency resource; and when the condition is not met, only receiving the data carried by the target MsgA PUSCH at the MsgA PUSCH time-frequency resource, and prohibiting sending of the data carried by the target PDSCH at the PDSCH time-frequency resource.

In an example of the present application, the MsgA PUSCH time-frequency resource is located within the SBFD time-frequency resource, and the target time-frequency resource further includes a PDSCH time-frequency resource where a PDSCH is located. Determining the data transmission operation corresponding to the target time-frequency resource according to the overlapping result of the SBFD time-frequency resource and the target time-frequency resource comprises: if the overlapping result is that the PDSCH time-frequency resource is not overlapped with the SBFD time-frequency resource, and the PDSCH time-frequency resource is partially overlapped with the MsgA PUSCH time-frequency resource, then in case that the UE which is to receive data from the base station is in full-duplex TDD mode, it is determined that the data transmission operation corresponding to the target time-frequency resource is as follows: sending the data carried by the target PDSCH at the PDSCH time-frequency resource, and receiving the data carried by the target MsgA PUSCH at the MsgA PUSCH time-frequency resource. In case that the UE is in half-duplex TDD mode, it is determined that the data transmission operation corresponding to the target time-frequency resource is as follows: when the condition that the time interval between the target PDSCH and the target MsgA PUSCH is greater than the uplink-downlink conversion time is met, performing rate-matching on data carried by the target PDSCH, at a remaining resource in the PDSCH time-frequency resource which is not overlapped with the MsgA PUSCH time-frequency resource, sending the data obtained after the rate-matching is performed, and receiving the data carried by the target MsgA PUSCH at the MsgA PUSCH time-frequency resource; and when the condition is not met, only receiving the data carried by the target MsgA PUSCH at the MsgA PUSCH time-frequency resource, and prohibiting sending of the data carried by the target PDSCH at the PDSCH time-frequency resource.

In an example of the present application, the MsgA PUSCH time-frequency resource is located within the SBFD time-frequency resource, and the target time-frequency resource further includes a PDSCH time-frequency resource where a PDSCH is located. Determining the data transmission operation corresponding to the target time-frequency resource according to the overlapping result of the SBFD time-frequency resource and the target time-frequency resource comprises: if the overlapping result is that the PDSCH time-frequency resource is partially overlapped with the SBFD time-frequency resource, and the PDSCH time-frequency resource is partially overlapped with the MsgA PUSCH time-frequency resource, then in case that the UE which is to receive data from the base station is in full-duplex TDD mode, it is determined that the data transmission operation corresponding to the target time-frequency resource is as follows: performing rate-matching on data carried by the target PDSCH, at a remaining resource in the PDSCH time-frequency resource which is not overlapped with the SBFD time-frequency resource or the MsgA PUSCH time-frequency resource, sending the data obtained after the rate matching, and receiving the data carried by the target MsgA PUSCH at the MsgA PUSCH time-frequency resource. Or in case that the UE is in half-duplex TDD mode, it is determined that the data transmission operation corresponding to the target time-frequency resource is as follows: when the condition that the time interval between the target PDSCH and the target MsgA PUSCH is greater than the uplink-downlink conversion time is met, performing rate-matching on data carried by the target PDSCH, at a remaining resource in the PDSCH time-frequency resource which is not overlapped with the MsgA PUSCH time-frequency resource or the SBFD time-frequency resource, sending the data obtained after the rate matching is performed, and receiving the data carried by the target MsgA PUSCH at the MsgA PUSCH time-frequency resource; and when the condition is not met, only receiving the data carried by the target MsgA PUSCH at the MsgA PUSCH time-frequency resource, and prohibiting sending of the data carried by the target PDSCH at the PDSCH time-frequency resource.

In an example of the present application, the MsgA PUSCH time-frequency resource is located within the SBFD time-frequency resource, and the target time-frequency resource further includes a PDSCH time-frequency resource where a PDSCH is located. Determining the data transmission operation corresponding to the target time-frequency resource according to the overlapping result of the SBFD time-frequency resource and the target time-frequency resource comprises: if the overlapping result is that the PDSCH time-frequency resource is partially overlapped with the SBFD time-frequency resource, and the PDSCH time-frequency resource is not overlapped with the MsgA PUSCH time-frequency resource, then in case that the UE which is to receive data from the base station is in full-duplex TDD mode, it is determined that the data transmission operation corresponding to the target time-frequency resource is as follows: performing rate-matching on data carried by the target PDSCH, at a remaining resource in the PDSCH time-frequency resource which is not overlapped with the SBFD time-frequency resource, sending the data obtained after the rate-matching is performed, and receiving the data carried by the target MsgA PUSCH at the MsgA PUSCH time-frequency resource. Or in case that the UE is in half-duplex TDD mode, it is determined that the data transmission operation corresponding to the target time-frequency resource is as follows: when the condition that the time interval between the target PDSCH and the target MsgA PUSCH is greater than the uplink-downlink conversion time is met, performing rate-matching on data carried by the target PDSCH, at a remaining resource in the PDSCH time-frequency resource which is not overlapped with the SBFD time-frequency resource, sending the data obtained after the rate-matching is performed, and receiving the data carried by the target MsgA PUSCH at the MsgA PUSCH time-frequency resource; and when the condition is not satisfied, only receiving the data carried by the target MsgA PUSCH at the MsgA PUSCH time-frequency resource, and prohibiting sending of the data carried by the target PDSCH at the PDSCH time-frequency resource.

In an example of the present application, the method further comprises: if the target MsgA RO is invalid, prohibiting a detection of the MsgA RO at the MsgA RO time-frequency resource, and prohibiting a reception of the data carried by the MsgA PUSCH at the MsgA PUSCH time-frequency resource where the target MsgA PUSCH associated with the target MsgA RO is located; or prohibiting a detection of the MsgA PUSCH at the MsgA PUSCH time-frequency resource where the target MsgA PUSCH is located, but receiving the random access signal at the MsgA RO time-frequency resource.

In an example of the present application, the target RO or the target MsgA RO belongs to an exclusive RO group configured for the SBFD mode; and/or the target RO or the target MsgA RO is an exclusive random access signal configured for SBFD mode or a conventional random access signal specified by a protocol.

In an example of the present application, the method further comprises: sending configuration information of the SBFD time-frequency resource to a UE by carrying the configuration information in a broadcast signaling; or sending the configuration information of the SBFD time-frequency resource to the UE by carrying the configuration in downlink control information (DCI).

The data transmission method provided by the present application is described in detail above with reference to each specific example. According to the technical solution provided by the application, without the current 5G HD system being affected, the TDD SBFD time-frequency domain resource can be used for uplink random access transmission, so that the uplink access resource may be increased, and the access delay may be reduced. Meanwhile, transmission criteria are defined for cases where the DL channel is overlapped with the PRACH, thereby determining the receiving and transmission behaviors of the base station and the UE, reducing blind detection of the base station and the UE and increasing the uplink transmission opportunity effectively, and improving the uplink transmission reliability.

Based on the same concept as the aforementioned data transmission method, an example of the present application proposes a data transmission apparatus applied to a UE. The apparatus is applied to a UE that supports a Sub-Band Full-Duplex (SBFD) mode as shown in FIG. 17, and comprises:
a first determining module 1701, configured to determine an SBFD time-frequency resource corresponding to a target slot and a target time-frequency resource associated with the target slot based on configuration information sent by a base station; a second determining module 1702, configured to determine a data transmission operation corresponding to the target time-frequency resource according to an overlapping result of the SBFD time-frequency resource and the target time-frequency resource; an executing module 1703, configured to perform the determined data transmission operation in the target slot.

In an example of the present application, the target slot is an uplink (UL) slot, a downlink (DL) slot, or a special slot; the SBFD time-frequency resource occupies at least one symbol of the target slot in time domain, and occupies at least one physical resource block for each of the at least one symbol in frequency domain.

In an embodiment of the present application, in case that the UE accesses a network through a 4-step random access procedure, the target time-frequency resource includes: an Random Access Channel Opportunity (RO) time-frequency resource corresponding to a target RO; wherein the target RO is any one of at least one RO configured for the target slot.

In an example of the present application, the second determining module, when determining the data transmission operation corresponding to the target time-frequency resource according to an overlapping result of the SBFD time-frequency resource and the target time-frequency resource, is specifically configured to, for a case that the overlapping result is that the RO time-frequency resource is within the SBFD time-frequency resource, in response to that one or more symbols corresponding to the SBFD time-frequency resource are uplink UL symbols or flexible (F) symbols, determine that the data transmission operation corresponding to the target time-frequency resource is as follows: sending a random access signal carried by the target RO at the RO time-frequency resource; in response to that the symbols corresponding to the SBFD time-frequency resource are downlink DL symbols, determine that the data transmission operation corresponding to the target time-frequency resource is prohibiting sending of the random access signal.

In an example of the present application, the second determining module, when determining the data transmission operation corresponding to the target time-frequency resource according to an overlapping result of the SBFD time-frequency resource and the target time-frequency resource, is specifically configured to: for a case that the overlapping result is that the RO time-frequency resource is partially overlapped with the SBFD time-frequency resource, in response to that one or more symbols corresponding to the SBFD time-frequency resource are UL symbols or flexible (F) symbols, determine that the data transmission operation corresponding to the target time-frequency resource is as follows: prohibiting sending of a random access signal carried by the target RO, or at an overlapping resource in the SBFD time-frequency resource that is overlapped with the RO time-frequency resource, sending a part corresponding to the overlapping resource in the random access signal; or in response to that the symbols corresponding to the SBFD time-frequency resource are DL symbols, determine that the data transmission operation corresponding to the target time-frequency resource is prohibiting sending of the random access signal.

In an example of the present application, the target time-frequency resource includes an RO time-frequency resource where a target RO is located, and an SSB time-frequency resource where an SSB is located. Wherein the target RO is any one of at least one RO configured for the target slot, and the RO time-frequency resource is located within the SBFD time-frequency resource.

In an example of the present application, the second determining module, when determining the data transmission operation corresponding to the target time-frequency resource according to an overlapping result of the SBFD time-frequency resource and the target time-frequency resource, is specifically configured to: for a case that the overlapping result is that the SSB time-frequency resource is overlapped or not overlapped with the SBFD time-frequency resource, and the SSB time-frequency resource is partially overlapped with the RO time-frequency resource, determine that the data transmission operation corresponding to the target time-frequency resource is as follows: only receiving data carried by the SSB at the SSB time-frequency resource and prohibiting sending of a random access signal carried by the target RO at the RO time-frequency resource; or receiving the data carried by the SSB at the SSB time-frequency resource, and at a remaining resource in the RO time-frequency resource, sending a part associated with the remaining resource in the random access signal, wherein the remaining resource is a portion in the RO time-frequency resource which is not overlapped with the SSB time-frequency resource.

In an example of the present application, the second determining module, when determining the data transmission operation corresponding to the target time-frequency resource according to an overlapping result of the SBFD time-frequency resource and the target time-frequency resource, is specifically configured to: for a case that the overlapping result is that the SSB time-frequency resource is overlapped or not overlapped with the SBFD time-frequency resource, and the SSB time-frequency resource is not overlapped with the RO time-frequency resource, in response to that the UE is in a full-duplex TDD mode, determine that the data transmission operation corresponding to the target time-frequency resource is as follows: receiving data carried by the SSB at the SSB time-frequency resource, and sending a random access signal carried by the target RO at the RO time-frequency resource; or in response to that the UE is in a half-duplex TDD mode, determine that the data transmission operation corresponding to the target time-frequency resource is as follows, when a condition that the time interval between the SSB and the target RO is greater than the uplink-downlink conversion time is met, receiving data carried by the SSB at the SSB time-frequency resource and sending the random access signal carried by the target RO at the RO time-frequency resource; and in response to the condition is not met, prohibiting sending of the random access signal at the RO time-frequency resource, only receiving the data carried by the SSB at the SSB time-frequency resource.

In an example of the present application, the target time-frequency resource includes an Random Access Channel Opportunity (RO) time-frequency resource corresponding to a target RO, and a Physical Downlink Shared Channel (PDSCH) time-frequency resource corresponding to a PDSCH; the target RO is any one of at least one RO configured for the target slot, and the RO time-frequency resource is located within the SBFD time-frequency resource.

In an example of the present application, the second determining module, when determining the data transmission operation corresponding to the target time-frequency resource according to an overlapping result of the SBFD time-frequency resource and the target time-frequency resource, is specifically configured to: for a case that the overlapping result is that the PDSCH time-frequency resource is not overlapped with the SBFD time-frequency resource, and the PDSCH time-frequency resource is not overlapped with the RO time-frequency resource, in response to that the UE is in a full-duplex TDD mode, determine that the data transmission operation corresponding to the target time-frequency resource is as follows: receiving data carried by a target PDSCH at the PDSCH time-frequency resource, and sending a random access signal carried by the target RO at the RO time-frequency resource; in response to that the UE is in a half-duplex TDD mode, determine that the data transmission operation corresponding to the target time-frequency resources is: when a condition that a time interval between the target PDSCH and the target RO is greater than an uplink-downlink conversion time is met, receiving data carried by the target PDSCH at the PDSCH time-frequency resource and sending the random access signal carried by the target RO at the RO time-frequency resource; in response to the condition being not met, only sending the random access signal at the RO time-frequency resource , and prohibiting a reception of the data carried by the target PDSCH at the PDSCH time-frequency resource.

In an example of the present application, the second determining module, when determining the data transmission operation corresponding to the target time-frequency resource according to the overlapping result of the SBFD time-frequency resource and the target time-frequency resource, is specifically configured to: for a case that the overlapping result is that the PDSCH time-frequency resource is partially overlapped with the SBFD time-frequency resource, and the PDSCH time-frequency resource is not overlapped with the RO time-frequency resource, in response to that the UE is in a full-duplex TDD mode, determine that the data transmission operation corresponding to the target time-frequency resource is as follows, at a remaining resource in the PDSCH time-frequency resource that is not overlapped with the SBFD time-frequency resource, receiving a part of data associated with the remaining resource in data carried by the target PDSCH, and sending a random access signal carried by the target RO at the RO time-frequency resource; in response to that the UE is in a half-duplex TDD mode, determine that the data transmission operation corresponding to the target time-frequency resource is as follows: in response to a the condition that a time interval between the target PDSCH and the target RO is greater than the uplink-downlink conversion time being met, at the remaining resource in the PDSCH time-frequency resource that is not overlapped with the SBFD time-frequency resource, receiving the part of data associated with the remaining resource in the data carried by the target PDSCH, and sending the random access signal carried by the target RO at the RO time-frequency resource; in response to the condition being not met, only sending the random access signal at the RO time-frequency resource and prohibiting a reception of the data carried by the target PDSCH at the PDSCH time-frequency resource.

In an example of the present application, the second determining module, when determining the data transmission operation corresponding to the target time-frequency resource according to the overlapping result of the SBFD time-frequency resource and the target time-frequency resource, is specifically configured to: for a case that the overlapping result is that the PDSCH time-frequency resource is not overlapped with the SBFD time-frequency resource, and the PDSCH time-frequency resource is partially overlapped with the RO time-frequency resource, in response to that the UE is in a full-duplex TDD mode, determine the data transmission operation corresponding to the target time-frequency resource is as follows: receiving data carried by a target PDSCH at the PDSCH time-frequency resource, and sending a random access signal carried by the target RO at the RO time-frequency resource; in response to that the UE is in a half-duplex TDD mode, determine that the data transmission operation corresponding to the target time-frequency resource is as follows: when a condition that a time interval between the target PDSCH and the target RO is greater than an uplink-downlink conversion time is met, sending the random access signal carried by the target RO at the RO time-frequency resource, and at a remaining resource in the PDSCH time-frequency resource that is not overlapped with the RO time-frequency resource, receiving a part of data associated with the remaining resource in data carried by the target PDSCH; or in response to that the condition being not met, only sending the random access signal carried by the target RO at the RO time-frequency resource, and prohibiting a reception of the data carried by the target PDSCH at the PDSCH time-frequency resource.

In an example of the present application, the second determining module, when determining the data transmission operation corresponding to the target time-frequency resource according to the overlapping result of the SBFD time-frequency resource and the target time-frequency resource, is specifically configured to: for a case that the overlapping result is that the PDSCH time-frequency resource is partially overlapped with the SBFD time-frequency resource, and the PDSCH time-frequency resource is partially overlapped with the RO time-frequency resource, in response to that the UE is in a full-duplex TDD mode, determine the data transmission operation corresponding to the target time-frequency resource is as follows: at a remaining resource in the PDSCH time-frequency resource which is not overlapped with the SBFD time-frequency resource or the RO time-frequency resource, receiving data associated with the remaining resource in data carried by the target PDSCH, and sending a random access signal carried by the target RO at the RO time-frequency resource; in response to that the UE is in a half-duplex TDD mode, determine that the data transmission operation corresponding to the target time-frequency resource is as follows: when a condition that the time interval between the target PDSCH and the target RO is greater than an uplink-downlink conversion time is met, sending the random access signal carried by the target RO at the RO time-frequency resource, and at the remaining resource in the PDSCH time-frequency resource which is not overlapped with the SBFD time-frequency resource or the RO time-frequency resource, receiving a part of data associated with the remaining resource in the data carried by the target PDSCH; or in response to the condition being not met, sending the random access signal carried by the target RO at the RO time-frequency resource, and prohibiting a reception of the data carried by the target PDSCH at the PDSCH time-frequency resource.

In an example of the present application, the target time-frequency resource includes a Random Access Channel Opportunity (RO) time-frequency resource corresponding to a target RO, and a Physical Downlink Control Channel (PDCCH) time-frequency resource corresponding to a PDCCH; the target RO is any one of at least one RO configured for the target slot, and the RO time-frequency resource is located within the SBFD time-frequency resource.

In an example of the present application, the second determining module, when determining the data transmission operation corresponding to the target time-frequency resource according to the overlapping result of the SBFD time-frequency resource and the target time-frequency resource, is specifically configured to: for a case that the overlapping result is that the PDCCH time-frequency resource is not overlapped with the SBFD time-frequency resource, and the PDCCH time-frequency resource is not overlapped with the RO time-frequency resource, in response to that the UE is in a full-duplex TDD mode, determine that the data transmission operation corresponding to the target time-frequency resource is as follows: receiving data carried by a target PDCCH at the PDCCH time-frequency resource, and sending a random access signal carried by the target RO at the RO time-frequency resource; in response to that the UE is in a half-duplex TDD mode, determine that the data transmission operation corresponding to the target time-frequency resource is as follows: when a condition that a time interval between the target PDCCH and the target RO is greater than an uplink-downlink conversion time is met, receiving the data carried by the target PDCCH at the PDCCH time-frequency resource and sending the random access signal carried by the target RO at the RO time-frequency resource; and in response to the condition being not met, only sending the random access signal at the RO time-frequency resource, and prohibiting a reception of the data carried by the target PDCCH at the PDCCH time-frequency resource.

In an example of the present application, the second determining module, when determining the data transmission operation corresponding to the target time-frequency resource according to the overlapping result of the SBFD time-frequency resource and the target time-frequency resource, is specifically configured to: for a case that the overlapping result is that the PDCCH time-frequency resource is partially overlapped with the SBFD time-frequency resource, and the PDCCH time-frequency resource is not overlapped with the RO time-frequency resource, in response to that the UE is in a full-duplex TDD mode, determine that the data transmission operation corresponding to the target time-frequency resource is as follows: at a remaining resource in the PDCCH time-frequency resource that is not overlapped with the SBFD time-frequency resource, receiving a part of data associated with the remaining resource, in data carried by the target PDCCH, and sending a random access signal carried by the target RO at the RO time-frequency resource; in response to that the UE is in a half-duplex TDD mode, determine that the data transmission operation corresponding to the target time-frequency resource is as follows: when a condition that a time interval between the target PDCCH and the target RO is greater than an uplink-downlink conversion time is met, at the remaining resource in the PDCCH time-frequency resource that is not overlapped with the SBFD time-frequency resource, receiving the part of data associated with the remaining resource in the data carried by the target PDCCH, and sending the random access signal carried by the target RO at the RO time-frequency resource; and in response to the condition being not met, only sending the random access signal at the RO time-frequency resource, and prohibiting a reception of the data carried by the target PDCCH at the PDCCH time-frequency resource.

In an example of the present application, the second determining module, when determining the data transmission operation corresponding to the target time-frequency resource according to an overlapping result of the SBFD time-frequency resource and the target time-frequency resource, is specifically configured to: for a case that the overlapping result is that the PDCCH time-frequency resource is not overlapped with the SBFD time-frequency resource, and the PDCCH time-frequency resource is partially overlapped with the RO time-frequency resource, but a start point of the PDCCH reception is earlier than the start point of the target RO transmission, in response to that the UE is in a full-duplex TDD mode, determine the data transmission operation corresponding to the target time-frequency resource is as follows: receiving data carried by a target PDCCH at the PDCCH time-frequency resource, and sending a random access signal carried by the target RO at the RO time-frequency resource; in response to that the UE is in a half-duplex TDD mode, determine that the data transmission operation corresponding to the target time-frequency resource is as follows: when a condition that a time interval between the target PDCCH and the target RO is greater than an uplink-downlink conversion time is met, sending the random access signal carried by the target RO at the RO time-frequency resource, and at a remaining resource in the target PDCCH time-frequency resource that is not overlapped with the RO time-frequency resource, receiving a part of data associated with the remaining resource in the data carried by the target PDCCH, or in response to the condition being not met, only sending the random access signal carried by the target RO at the RO time-frequency resource, and prohibiting a reception of the data carried by the target PDCCH at the PDCCH time-frequency resource.

In an example of the present application, the second determining module, when determining the data transmission operation corresponding to the target time-frequency resource according to an overlapping result of the SBFD time-frequency resource and the target time-frequency resource, is specifically configured to: for a case that the overlapping result is that the PDCCH time-frequency resource is partially overlapped with the SBFD time-frequency resource, and the PDCCH time-frequency resource is partially overlapped with the RO time-frequency resource, but a start point of the PDCCH reception is later than a start point of target RO transmission, in response to that the UE is in a full-duplex TDD mode, determine the data transmission operation corresponding to the target time-frequency resource is as follows: receiving data carried by a target PDCCH at the PDCCH time-frequency resource, and sending a random access signal carried by the target RO at the RO time-frequency resource; in response to that the UE is in a half-duplex TDD mode, determine that the data transmission operation corresponding to the target time-frequency resource is as follows: when a condition that a time interval between the target PDCCH and the target RO is greater than an uplink-downlink conversion time is met, sending the random access signal carried by the target RO at the RO time-frequency resource, and at a remaining resource in the PDCCH time-frequency resource which is not overlapped with the SBFD time-frequency resource or the RO time-frequency resource, receiving a part of data associated with the remaining resource in the data carried by the target PDCCH, or in response to the condition being not met, only sending the random access signal carried by the target RO at the RO time-frequency resource, and prohibiting a reception of the data carried by the target PDCCH at the PDCCH time-frequency resource.

In an example of the present application, the second determining module, when determining the data transmission operation corresponding to the target time-frequency resource according to an overlapping result of the SBFD time-frequency resource and the target time-frequency resource, is specifically configured to: for a case that the overlapping result is that the PDCCH time-frequency resource is overlapped or not overlapped with the SBFD time-frequency resource, and the PDCCH time-frequency resource is partially overlapped with the RO time-frequency resource, under condition that no random access signal is to be sent, determine that the data transmission operation corresponding to the target time-frequency resource is as follows: ignoring the target RO, and receiving the data carried by the target PDCCH at the PDCCH time-frequency resource or prohibiting a reception of the data carried by the target PDCCH at the PDCCH time-frequency resource.

In an embodiment of this application, in case where the UE accesses a network through a 2-step random access procedure, the target time-frequency resource includes: an MsgA Random Access Channel Opportunity (RO) time-frequency resource corresponding to a target MsgA RO used for sending a random access message MsgA and an MsgA Physical Uplink Shared Channel (PUSCH) time-frequency resource corresponding to a target MsgA PUSCH associated with the target MsgA RO. The target MsgA RO and the target MsgA PUSCH meet the following: the target MsgA PUSCH is configured in a slot allocated with an SBFD time-frequency resource, and the target MsgA RO associated with the target MsgA PUSCH is configured in a slot not allocated with an SBFD time-frequency resource; or the target MsgA PUSCH is configured in a slot allocated with an SBFD time-frequency resource, and the target MsgA RO associated with the target MsgA PUSCH is configured in a slot allocated with an SBFD time-frequency resource; the MsgA PUSCH and the MsgA RO correspond to different slots; or the target MsgA PUSCH is configured in a slot not allocated with an SBFD time-frequency resource, and the target MsgA RO associated with the target MSgA PUSCH is configured in a slot allocated with an SBFD time-frequency resource.

In an example of the present application, the MsgA PUSCH time-frequency resource is located within the SBFD time-frequency resource, and the target time-frequency resource further includes a Synchronization Signal Block (SSB) time-frequency resource corresponding to an SSB. The second determining module, when determining the data transmission operation corresponding to the target time-frequency resource according to an overlapping result of the SBFD time-frequency resource and the target time-frequency resource, is specifically configured to: for a case that the overlapping result is that the SSB time-frequency resource is overlapped or not overlapped with the SBFD time-frequency resource, and the SSB time-frequency resource is not overlapped with the MsgA PUSCH time-frequency resource, in response to that the UE is in a full-duplex TDD mode, determine that the data transmission operation corresponding to the target time-frequency resource is as follows: receiving data carried by the SSB at the SSB time-frequency resource, and sending data carried by the target MsgA PUSCH at the MsgA PUSCH time-frequency resource; or in response to that the UE is in a half-duplex TDD mode, determine that the data transmission operation corresponding to the target time-frequency resource is as follows, when a time interval between the SSB and the target RO is greater than an uplink-downlink conversion time is met, receiving the data carried by the SSB at the SSB time-frequency resource and sending the data carried by the target MsgA PUSCH at the MsgA PUSCH time-frequency resource; and in response to the condition being not met, prohibiting sending of the data carried by the target MsgA PUSCH at the MsgA PUSCH time-frequency resource, and only receiving the data carried by the SSB at the SSB time-frequency resource.

In an example of the present application, the MsgA PUSCH time-frequency resource is located within the SBFD time-frequency resource; the target time-frequency resource further includes a Synchronization Signal Block (SSB) time-frequency resource corresponding to an SSB. The second determining module, when determining the data transmission operation corresponding to the target time-frequency resource according to the overlapping result of the SBFD time-frequency resource and the target time-frequency resource, is specifically configured to: for a case that the overlapping result is that the SSB time-frequency resource is overlapped or not overlapped with the SBFD time-frequency resource, and the SSB time-frequency resource is partially overlapped with the MsgA PUSCH time-frequency resource, determine that the data transmission operation corresponding to the target time-frequency resource is: prohibiting sending of data carried by the target MsgA PUSCH at the MsgA PUSCH time-frequency resource; or at a remaining resource in the MsgA PUSCH time-frequency resource that is not overlapped with the SBFD time-frequency resource, sending a part of data associated with the remaining resource in the data carried by the target MsgA PUSCH.

In an example of the present application, the MsgA PUSCH time-frequency resource is located within the SBFD time-frequency resource, and the target time-frequency resource further includes a Physical Downlink Control Channel (PDCCH) time-frequency resource corresponding to a PDCCH. The second determining module, when determining the data transmission operation corresponding to the target time-frequency resource according to an overlapping result of the SBFD time-frequency resource and the target time-frequency resource, is specifically configured to: for a case that the overlapping result is that the PDCCH time-frequency resource is not overlapped with the SBFD time-frequency resource, and the PDCCH time-frequency resource is not overlapped with the MsgA PUSCH time-frequency resource, in response to that the UE is in a full-duplex TDD mode, determine that the data transmission operation corresponding to the target time-frequency resource is as follows: receiving data carried by the PDCCH at the PDCCH time-frequency resource, and sending data carried by the target MsgA PUSCH at the MsgA PUSCH time-frequency resource; in response to that the UE is in a half-duplex TDD mode, determine that the data transmission operation corresponding to the target time-frequency resource is as follows: when a condition that a time interval between the target PDCCH and the target MsgA PUSCH is greater than the uplink-downlink conversion time is met, receiving the data carried by the target PDCCH at the PDCCH time-frequency resource, and sending the data carried by the target MsgA PUSCH at the MsgA PUSCH time-frequency resource; and in response to the condition being not met, only sending the data carried by the target MsgA PUSCH at the MsgA PUSCH time-frequency resource, and prohibiting a reception of the data carried by the target PDCCH at the PDCCH time-frequency resource.

In an embodiment of this application, the MsgA PUSCH time-frequency resource is located within the SBFD time-frequency resource, and the target time-frequency resource further includes a Physical Downlink Control Channel (PDCCH) time-frequency resource corresponding to a PDCCH.

Wherein the second determining module, when determining the data transmission operation corresponding to the target time-frequency resource according to the overlapping result of the SBFD time-frequency resource and the target time-frequency resource, is specifically configured to:

for a case that the overlapping result is that the PDCCH time-frequency resource is not overlapped with the SBFD time-frequency resource, and the PDCCH time-frequency resource is partially overlapped with MsgA PUSCH time-frequency resource, but a start point of PDCCH reception is later than a start point of target MsgA PUSCH transmission, in response to that the UE is in a full-duplex TDD mode, determine the data transmission operation corresponding to the target time-frequency resource is as follows: receiving data carried by a target PDCCH at the PDCCH time-frequency resource, and sending data carried by the MsgA PUSCH at the MsgA PUSCH time-frequency resource; in response to that the UE is in a half-duplex TDD mode, determine that the data transmission operation corresponding to the target time-frequency resource is as follows: when a condition that a time interval between the target PDCCH and the target MsgA PUSCH is greater than an uplink-downlink conversion time is met, sending data carried by the target MsgA PUSCH at the MsgA PUSCH time-frequency resource, and at a remaining resource in the PDCCH time-frequency resource that is not overlapped with the MsgA PUSCH time-frequency resource, receiving a part of data associated with the remaining resource in the data carried by the target PDCCH; or in response to the condition being not met, sending the data carried by the target MsgA PUSCH at the MsgA PUSCH time-frequency resource, and prohibiting a reception of the data carried by the target PDCCH at the PDCCH time-frequency resource.

In an example of the present application, the MsgA PUSCH time-frequency resource is located within the SBFD time-frequency resource, and the target time-frequency resource further includes a Physical Downlink Control Channel (PDCCH) time-frequency resource corresponding to a PDCCH. The second determining module, when determining the data transmission operation corresponding to the target time-frequency resource according to the overlapping result of the SBFD time-frequency resource and the target time-frequency resource, is specifically configured to: for a case that the overlapping result is that the PDCCH time-frequency resource is partially overlapped with the SBFD time-frequency resource, and the PDCCH time-frequency resource is not overlapped with MsgA PUSCH time-frequency resource, in response to that the UE is in a full-duplex TDD mode, determine the data transmission operation corresponding to the target time-frequency resource is as follows: at a remaining resource in the PDCCH time-frequency resource that is not overlapped with the SBFD time-frequency resource, receiving a part of the data associated with the remaining resource in data carried by a target PDCCH and sending data carried by the target MsgA PUSCH at the MsgA PUSCH time-frequency resource; in response to that the UE is in a half-duplex TDD mode, determine that the data transmission operation corresponding to the target time-frequency resource is as follows, when a condition that a time interval between the target PDCCH and the target MsgA PUSCH is greater than an uplink-downlink conversion time is met, at the remaining resource in the PDCCH time-frequency resource that is not overlapped with the SBFD time-frequency resource, receiving the part of the data associated with the remaining resource in the data carried by the target PDCCH, and sending the data carried by the target MsgA PUSCH at the MsgA PUSCH time-frequency resource; and in response to the condition being not met, only sending the data carried by the target MsgA PUSCH at the MsgA PUSCH time-frequency resource, and prohibiting a reception of the data carried by the target PDCCH at the PDCCH time-frequency resource.

In an example of the present application, the MsgA PUSCH time-frequency resource is located within the SBFD time-frequency resource, and the target time-frequency resource further includes a Physical Downlink Control Channel (PDCCH) time-frequency resource corresponding to a PDCCH. The second determining module, when determining the data transmission operation corresponding to the target time-frequency resource according to the overlapping result of the SBFD time-frequency resource and the target time-frequency resource, is specifically configured to: for a case that the overlapping result is that the PDCCH time-frequency resource is partially overlapped with the SBFD time-frequency resource, and the PDCCH time-frequency resource is partially overlapped with MsgA PUSCH time-frequency resource, but a start point of PDCCH reception is later than a start point of the target MsgA PUSCH transmission, in response to that the UE is in a full-duplex TDD mode, determine the data transmission operation corresponding to the target time-frequency resource is as follows: receiving data carried by a target PDCCH at the PDCCH time-frequency resource, and sending data carried by the MsgA PUSCH at the MsgA PUSCH time-frequency resource; in response to that the UE is in a half-duplex TDD mode, determine that the data transmission operation corresponding to the target time-frequency resource is as follows: when a condition that a time interval between the target PDCCH and the target MsgA PUSCH is greater than an uplink-downlink conversion time is met, sending the data carried by the target MsgA PUSCH at the MsgA PUSCH time-frequency resource, and at a remaining resource in the PDCCH time-frequency resource that is not overlapped with the SBFD time-frequency resource or the MsgA PUSCH time-frequency resource, receiving a part of data associated with the remaining resource in the data carried by the target PDCCH; or in response to the condition being not met, sending the data carried by the target MsgA PUSCH at the MsgA PUSCH time-frequency resource, and prohibiting a reception of the data carried by the target PDCCH at the PDCCH time-frequency resource.

In an example of the present application, the MsgA PUSCH time-frequency resource is located within the SBFD time-frequency resource, and the target time-frequency resource further includes a Physical Downlink Control Channel (PDCCH) time-frequency resource corresponding to a PDCCH. The second determining module, when determining the data transmission operation corresponding to the target time-frequency resource according to the overlapping result of the SBFD time-frequency resource and the target time-frequency resource, is specifically configured to:

for a case that the overlapping result is that the PDCCH time-frequency resource is overlapped or not overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission, under condition that no random access signal is to be sent, determine that the data transmission operation corresponding to the target time-frequency resource is as follows:

ignoring the target MsgA PUSCH, and receiving data carried by a target PDCCH at the PDCCH time-frequency resource.

In an example of the present application, the MsgA PUSCH time-frequency resource is located within the SBFD time-frequency resource, and the target time-frequency resource further includes a Physical Downlink Shared Channel (PDSCH) time-frequency resource corresponding to a PDSCH.

Wherein the second determining module, when determining the data transmission operation corresponding to the target time-frequency resource according to an overlapping result of the SBFD time-frequency resource and the target time-frequency resource, is specifically configured to:
for a case that the overlapping result is that the PDSCH time-frequency resource is not overlapped with the SBFD time-frequency resource, and the PDSCH time-frequency resource is not overlapped with the MsgA PUSCH time-frequency resource,
in response to that the UE is in a full-duplex TDD mode, determine that the data transmission operation corresponding to the target time-frequency resource is as follows:
receiving the data carried by a target PDSCH at the PDSCH time-frequency resource, and sending data carried by the target MsgA PUSCH at the MsgA PUSCH time-frequency resource; or
in response to that the UE is in a half-duplex TDD mode, determine the data transmission operation corresponding to the target time-frequency resource is as follows:
when a condition that the time interval between the target PDSCH and the target MsgA PUSCH is greater than an uplink-downlink conversion time is met, receiving the data carried by the target PDSCH at the PDSCH time-frequency resource, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDSCH at the PDSCH time-frequency resource.

In an embodiment of the present application, the MsgA PUSCH time-frequency resource is located within the SBFD time-frequency resource; the target time-frequency resource further includes a Physical Downlink Shared Channel (PDSCH) time-frequency resource corresponding to a PDSCH.

Wherein the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is overlapped with the SBFD time-frequency resource, and the PDSCH time-frequency resource is not overlapped with the MSGA PUSCH time-frequency resource,
in response to that the UE is in a full-duplex TDD mode, determine the data transmission operation corresponding to the target time-frequency resource is as follows:
at a remaining resource in the PDSCH time-frequency resource that is not overlapped with the SBFD time-frequency resource receiving a part of data associated with the remaining resource in data carried by a target PDSCH, and sending the data carried by the target MsgA PUSCH at the MsgA PUSCH time-frequency resource; or
in response to that the UE is in a half-duplex TDD mode, determine the data transmission operation corresponding to the target time-frequency resource is as follows:
when a condition that the time interval between the target PDSCH and the target MsgA PUSCH is greater than an uplink-downlink conversion time is met, at the remaining resource in the PDSCH time-frequency resource that is not overlapped with the SBFD time-frequency resource, receiving the part of data associated with the remaining resource in the data carried by the target PDSCH, and sending the data carried by the target MsgA PUSCH at the MsgA PUSCH time-frequency resource, and
in response to the condition being not met, only sending the data carried by the target MSGA PUSCH at the MsgA PUSCH time-frequency resource, and prohibiting a reception of the data carried by the target PDSCH at the PDSCH time-frequency resource.

In an embodiment of the present application, the MsgA PUSCH time-frequency resource is located within the SBFD time-frequency resource; the target time-frequency resource further includes a Physical Downlink Shared Channel (PDSCH) time-frequency resource corresponding to a PDSCH.

Wherein the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is not overlapped with the SBFD time-frequency resource, and the PDSCH time-frequency resource is partially overlapped with the MsgA PUSCH time-frequency resource,
in response to that the UE is in a full-duplex TDD mode, determine the data transmission operation corresponding to the target time-frequency resource is as follows:
receiving data carried by a target PDCCH at the PDCCH time-frequency resource, and sending data carried by the MsgA PUSCH at the MsgA PUSCH time-frequency resource;
in response to that the UE is in a half-duplex TDD mode, determine the data transmission operation corresponding to the target time-frequency resource is as follows:
when a condition that the time interval between the target PDCCH and the target MSGA PUSCH is greater than an uplink-downlink conversion time is met, sending the data carried by the target MsgA PUSCH at the MsgA PUSCH time-frequency resource, and at a remaining resource in the PDSCH time-frequency resource that is not overlapped with the MsgA PUSCH time-frequency resource, receiving a part of data associated with the remaining resource in the data carried by the target PDSCH, or
in response to the condition being not met, sending the data carried by the target MsgA PUSCH at the MsgA PUSCH time-frequency resource and prohibiting a reception of the data carried by the target PDSCH at the PDSCH time-frequency resource.

In an embodiment of the present application, the MsgA PUSCH time-frequency resource is located within the SBFD time-frequency resource; the target time-frequency resource further includes a Physical Downlink Shared Channel (PDSCH) time-frequency resource corresponding to a PDSCH.

Wherein the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is partially overlapped with the SBFD time-frequency resource, and the PDSCH time-frequency resource is partially overlapped with the MsgA PUSCH time-frequency resource,
in response to that the UE is in a full-duplex TDD mode, determine the data transmission operation corresponding to the target time-frequency resource is as follows:
receiving data carried by a target PDSCH at the PDSCH time-frequency resource, and sending data carried by the MsgA PUSCH at the MsgA PUSCH time-frequency resource; in response to that the UE is in a half-duplex TDD mode, determine the data transmission operation corresponding to the target time-frequency resource is as follows:
when a condition that a time interval between the target PDSCH and the target MsgA PUSCH is greater than an uplink-downlink conversion time is met, sending data carried by the target MsgA PUSCH at the MsgA PUSCH time-frequency resource and at a remaining resource in the PDSCH time-frequency resource that is not overlapped with the MsgA PUSCH time-frequency resource or the SBFD time-frequency resource, receiving a part of data associated with the remaining resource in the data carried by the target PDSCH, or
in response to the condition being not met, sending the data carried by the target MsgA PUSCH at the MsgA PUSCH time-frequency resource, and prohibiting a reception of the data carried by the target PDSCH at the PDSCH time-frequency resource.

In an example of the present application, in case that the target MsgA RO is invalid, prohibiting sending data at the MsgA RO time-frequency resource, and prohibiting sending data at the MsgA PUSCH time-frequency resource corresponding to the target MsgA PUSCH associated with the target MsgA RO; or
in case that it is prohibited to send data at the MsgA PUSCH time-frequency resource corresponding to the target MsgA PUSCH, in response to that it is allowed to send data at the MsgA RO time-frequency resource corresponding to the target MsgA RO associated with the target MsgA PUSCH, sending a random access signal at the MsgA RO time-frequency resource.

In an embodiment of this application, the target RO or the target MsgA RO belongs to an exclusive RO group configured for the SBFD mode; and/or,
a random access signal carried by the target RO or the target MsgA RO is an exclusive random access signal configured for SBFD mode or a conventional random access signal specified by a protocol.

In an embodiment of the present application, the configuration information is sent to the UE by being carried in a broadcast signaling or downlink control information (DCI).

In an embodiment of the present application, the target RO is an MsgA RO.

Based on the same concept as the aforementioned data transmission method, an example of the present application proposes a data transmission apparatus applied to a base station.

In an embodiment of the present application, the apparatus is applied to a base station that supports Sub-Band Full-Duplex (SBFD) mode, and comprises:
a first determining module, configured to determine an SBFD time-frequency resource corresponding to a target slot and a target time-frequency resource associated with the target slot;
a second determining module, configured to determine a data transmission operation corresponding to the target time-frequency resource according to an overlapping result of the SBFD time-frequency resource and the target time-frequency resource;
an executing module, configured to perform the determined data transmission operation in the target slot.

In an embodiment of the present application, the target slot is an uplink (UL) slot, a downlink (DL) slot, or a special slot. The SBFD time-frequency resource occupies at least one symbol of the target slot in time domain, and occupies at least one Physical Resource Block for each of the at least one symbol in frequency domain.

In an example of the present application, the target time-frequency resource includes: an Random Access Channel Opportunity (RO) time-frequency resource corresponding to a target RO, and a Synchronization Signal Block (SSB) time-frequency resource corresponding to an SSB;
the target RO is any one of at least one RO configured for the target slot;
the RO time-frequency resource is located within the SBFD time-frequency resource.

In an example of the present application, the second determining module, when determining the data transmission operation corresponding to the target time-frequency resource according to an overlapping result of the SBFD time-frequency resource and the target time-frequency resource, is specifically configured to:
for a case that the overlapping result is that the SSB time-frequency resource is overlapped or not overlapped with the SBFD time-frequency resource, and the SSB time-frequency resource is partially overlapped with the RO time-frequency resource, determine that the data transmission operation corresponding to the target time-frequency resource is as follows:
only sending data carried by the SSB at the SSB time-frequency resource, and prohibiting a detection of a random access signal at the RO time-frequency resource; or
sending the data carried by the SSB at the SSB time-frequency resource, and at the remaining resource in the RO time-frequency resource, receiving a part associated with the remaining resource in the random access signal carried by the target RO; where the remaining resource is a portion in the RO time-frequency resource that is not overlapped with the SSB time-frequency resource.

In an example of the present application, the second determining module, when determining the data transmission operation corresponding to the target time-frequency resource according to an overlapping result of the SBFD time-frequency resource and the target time-frequency resource, is specifically configured to:
for a case that the overlapping result is that the SSB time-frequency resource is overlapped or not overlapped with the SBFD time-frequency resource, and the SSB time-frequency resource is not overlapped with the RO time-frequency resource,
in response to determining that a UE which is to receive data from the base station is in a full-duplex TDD mode, determine that the data transmission operation corresponding to the target time-frequency resource is as follows:
sending the data carried by the SSB at the SSB time-frequency resource, and receiving a random access signal carried by the target RO at the RO time-frequency resource; or
in response to determining that the UE is in a half-duplex TDD mode, determine the data transmission operation corresponding to the target time-frequency resource is as follows:
when a condition that the time interval between the SSB and the target RO is greater than an uplink-downlink conversion time is met, sending the data carried by the SSB at the SSB time-frequency resource, and receiving the random access signal carried by the target RO at the RO time-frequency resource, and
in response to the condition being not met, prohibiting a detection of the random access signal at the RO time-frequency resource, and only sending the data carried by the SSB at the SSB time-frequency resource.

In an example of the present application, the target time-frequency resource includes: a Random Access Channel Opportunity (RO) time-frequency resource corresponding to a target RO, and a Physical Downlink Shared Channel (PDSCH) time-frequency resource corresponding to a PDSCH;
the target RO is any one of at least one RO configured for the target slot;
the RO time-frequency resource is located within the SBFD time-frequency resource.

In an example of the present application, the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is not overlapped with the SBFD time-frequency resource, and the PDSCH time-frequency resource is not overlapped with the RO time-frequency resource,
in response to determining that a UE which is to receive data from the base station is in a full-duplex TDD mode, determine that the data transmission operation corresponding to the target time-frequency resource is as follows: sending data carried by a target PDSCH at the PDSCH time-frequency resource, and receiving a random access signal carried by the target RO at the RO time-frequency resource; or
in response to determining that the UE is in a half-duplex TDD mode, determine that the data transmission operation corresponding to the target time-frequency resource is as follows:
when a condition that a time interval between the target PDSCH and the target RO is greater than an uplink-downlink conversion time is met, sending the data carried by the target PDSCH at the PDSCH time-frequency resource, and receiving the random access signal carried by the target RO at the RO time-frequency resource; and
in response to the condition being not met, only receiving the random access signal at the RO time-frequency resource, and prohibiting sending of the data carried by the target PDSCH at the PDSCH time-frequency resource.

In an example of the present application, the second determining module, when determining the data transmission operation corresponding to the target time-frequency resource according to an overlapping result of the SBFD time-frequency resource and the target time-frequency resource, is specifically configured to:
for a case that the overlapping result is that the PDSCH time-frequency resource is partially overlapped with the SBFD time-frequency resource, and the PDSCH time-frequency resource is not overlapped with the RO time-frequency resource,
in response to determining that a UE which is to receive from the base station is in a full-duplex TDD mode, determine the data transmission operation corresponding to the target time-frequency resource is as follows:
performing rate-matching on data carried by a target PDSCH;
sending data obtained after performing the rate-matching at a remaining resource in the PDSCH time-frequency resource which is not overlapped with the SBFD time-frequency resource; and receiving a random access signal carried by the target RO at the RO time-frequency resource; or
in response to determining that the UE is in a half-duplex TDD mode, determine that the data transmission operation corresponding to the target time-frequency resource is as follows:
when a condition that the time interval between the target PDSCH and the target RO is greater than an uplink-downlink conversion time is met, performing rate-matching on the data carried by the target PDSCH; sending the data obtained after performing the rate-matching at the remaining resource in the PDSCH time-frequency resource that is not overlapped with the SBFD time-frequency resource, and receiving the random access signal carried by the target RO at the RO time-frequency resource, and
in response to the condition being not met, only receiving the random access signal at the RO time-frequency resource, and prohibiting sending of the data carried by the target PDSCH at the PDSCH time-frequency resource.

In an example of the present application, the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is not overlapped with the SBFD time-frequency resource, and the PDSCH time-frequency resource is partially overlapped with the RO time-frequency resource,
in response to determining that a UE which is to receive data from the base station is in a full-duplex TDD mode, determine the data transmission operation corresponding to the target time-frequency resource is as follows:
sending data carried by a target PDSCH at the PDSCH time-frequency resource, and receiving a random access signal carried by the target RO at the RO time-frequency resource; or
in response to determining that the UE is in a half-duplex TDD mode, determine that the data transmission operation corresponding to the target time-frequency resource is as follows:
when a condition that the time interval between the target PDSCH and the target RO is greater than an uplink-downlink conversion time is met,
performing rate-matching on the data carried by the target PDSCH.
sending data obtained after performing the rate-matching at a remaining resource in the PDSCH time-frequency resource that is not overlapped with the RO time-frequency resource; and
receiving the random access signal carried by the target RO at the RO time-frequency resource; or
in response to the condition being not met, only receiving the random access signal at the RO time-frequency resource, and prohibiting sending of the data carried by the target PDSCH at the PDSCH time-frequency resource.

In an example of the present application, the second determining module, when determining the data transmission operation corresponding to the target time-frequency resource according to an overlapping result of the SBFD time-frequency resource and the target time-frequency resource, is specifically configured to:
for a case that the overlapping result is that the PDSCH time-frequency resource is partially overlapped with the SBFD time-frequency resource, and the PDSCH time-frequency resource is partially overlapped with the RO time-frequency resource,
in response to determining that a UE which is to receive data from the base station is in a full-duplex TDD mode, determine the data transmission operation corresponding to the target time-frequency resource is as follows:
performing rate-matching on data carried by a target PDSCH;
sending data obtained after performing the rate-matching at a remaining resource in the PDSCH time-frequency resource which is not overlapped with the SBFD time-frequency resource or the RO time-frequency resource, and receiving a random access signal carried by the target RO at the RO time-frequency resource; or
in response to determining that the UE is in a half-duplex TDD mode, determine that the data transmission operation corresponding to the target time-frequency resource is as follows:
when a condition that a time interval between the target PDSCH and the target RO is greater than an uplink-downlink conversion time is met,
performing rate-matching on the data carried by the target PDSCH;
sending data obtained after performing the rate-matching at the remaining resource in the PDSCH time-frequency resource that is not overlapped with the RO time-frequency resource or the SBFD time-frequency resource; and
receiving the random access signal carried by the target RO at the RO time-frequency resource; or
in response to the condition being not met, receiving the random access signal carried by the target RO at the RO time-frequency resource, and prohibiting sending of the data carried by the target PDSCH at the PDSCH time-frequency resource.

In an example of the present application, the target time-frequency resource includes: a a Random Access Channel Opportunity (RO) time-frequency resource corresponding to a target RO, and a Physical Downlink Control Channel (PDCCH) time-frequency resource corresponding to a PDCCH;
the target RO is any one of at least one RO configured for the target slot;
the RO time-frequency resource is located within the SBFD time-frequency resource.

In an example of the present application, the second determining module, when determining the data transmission operation corresponding to the target time-frequency resource according to the overlapping result of the SBFD time-frequency resource and the target time-frequency resource, is specifically configured to:
for a case that the overlapping result is that the PDCCH time-frequency resource is not overlapped with the SBFD time-frequency resource, and the PDCCH time-frequency resource is not overlapped with the RO time-frequency resource,
in response to determining that a UE which is to receive data from the base station is in a full-duplex TDD mode, determine that the data transmission operation corresponding to the target time-frequency resource is as follows:
sending data carried by a target PDCCH at the PDCCH time-frequency resource, and receiving a random access signal carried by the target RO at the RO time-frequency resource;
in response to determining that the UE is in a half-duplex TDD mode, determine that the data transmission operation corresponding to the target time-frequency resource is as follows:
when a condition that a time interval between the target PDCCH and the target RO is greater than an uplink-downlink conversion time is met, sending the data carried by the target PDCCH at the PDCCH time-frequency resource, and receiving the random access signal carried by the target RO at the RO time-frequency resource, and
in response to the condition being not met, only receiving the random access signal at the RO time-frequency resource, and prohibiting sending of the data carried by the target PDCCH at the PDCCH time-frequency resource.

In an example of the present application, the second determining module, when determining the data transmission operation corresponding to the target time-frequency resource according to the overlapping result of the SBFD time-frequency resource and the target time-frequency resource, is specifically configured to:
for a case that the overlapping result is that the PDCCH time-frequency resource is partially overlapped with the SBFD time-frequency resource, and the PDSCH time-frequency resource is not overlapped with the RO time-frequency resource,
in response to determining that a UE which is to receive data from the base station is in a full-duplex TDD mode, determine that the data transmission operation corresponding to the target time-frequency resource is as follows:
performing rate-matching on data carried by a target PDCCH,
sending data obtained after performing the rate-matching at a remaining resource in the PDCCH time-frequency resource that is not overlapped with the SBFD time-frequency resource, and receiving a random access signal carried by the target RO at the RO time-frequency resource; or
in response to determining that the UE is in a half-duplex TDD mode, determine that the data transmission operation corresponding to the target time-frequency resource is as follows:
when a condition that a time interval between the target PDCCH and the target RO is greater than an uplink-downlink conversion time is met, performing rate-matching on the data carried by the target PDCCH; sending the data obtained after performing the rate-matching at the remaining resource in the PDCCH time-frequency resource that is not overlapped with the SBFD time-frequency resource, and receiving the random access signal carried by the target RO at the RO time-frequency resource; and
in response to the condition being not met, only receiving the random access signal at the RO time-frequency resource, and prohibiting sending of the data carried by the target PDCCH at the PDCCH time-frequency resource.

In an example of the present application, the second determining module, when determining the data transmission operation corresponding to the target time-frequency resource according to the overlapping result of the SBFD time-frequency resource and the target time-frequency resource, is specifically configured to:
for a case that the overlapping result is that the PDCCH time-frequency resource is not overlapped with the SBFD time-frequency resource, and the PDCCH time-frequency resource is partially overlapped with the RO time-frequency resource, but a start point of PDCCH reception is earlier than a start point of target RO transmission,
in response to determining that a UE which is to receive data from the base station is in a full-duplex TDD mode, determine the data transmission operation corresponding to the target time-frequency resource is as follows:
sending data carried by a target PDCCH at the PDCCH time-frequency resource, and receiving a random access signal carried by the target RO at the RO time-frequency resource; in response to determining that the UE which is to receive data from the base station is in a half-duplex TDD mode, determine that the data transmission operation corresponding to the target time-frequency resource is as follows:
when a condition that a time interval between the target PDSCH and the target RO is greater than an uplink-downlink conversion time is met,
performing rate-matching on the data carried by the target PDCCH,
sending data obtained after performing the rate-matching at a remaining resource in the PDCCH time-frequency resource that is not overlapped with the RO time-frequency resource; and
receiving the random access signal carried by the target RO at the RO time-frequency resource; or
in response to the condition being not met, only receiving the random access signal carried by the target RO at the RO time-frequency resource, and prohibiting sending of the data carried by the target PDCCH at the PDCCH time-frequency resource.

In an example of the present application, the second determining module, when determining the data transmission operation corresponding to the target time-frequency resource according to an overlapping result of the SBFD time-frequency resource and the target time-frequency resource, is specifically configured to:
for a case that the overlapping result is that the PDCCH time-frequency resource is partially overlapped with the SBFD time-frequency resource, and the PDCCH time-frequency resource is partially overlapped with the RO time-frequency resource, but a start point of PDCCH reception is earlier than a start point of target RO transmission,
in response to determining that a UE which is to receive from the base station is in a full-duplex TDD mode, determine the data transmission operation corresponding to the target time-frequency resource is as follows:
performing rate-matching on data carried by the target PDCCH;
sending data obtained after performing the rate-matching at a remaining resource in the PDCCH time-frequency resource that is not overlapped with the SBFD time-frequency resource or the RO time-frequency resource, and receiving a random access signal carried by the target RO at the RO time-frequency resource; or
in response to determining that the UE is in a half-duplex TDD mode, determine that the data transmission operation corresponding to the target time-frequency resource is as follows:
when a condition that a time interval between the target PDCCH and the target RO is greater than an uplink-downlink conversion time is met;
performing rate-matching on the data carried by the target PDCCH;
sending the data obtained after performing the rate-matching at the remaining resource in the PDCCH time-frequency resource that is not overlapped with the RO time-frequency resource or the SBFD time-frequency resource, and
receiving the random access signal carried by the target RO at the RO time-frequency resource; or
in response to the condition being not met, only receiving the random access signal carried by the target RO at the RO time-frequency resource, and prohibiting sending of the data carried by the target PDCCH the PDCCH time-frequency resource.

In an embodiment of the present application, the target RO is an MsgA RO.

In an example of the present application, the target time-frequency resource includes: an MsgA Random Access Channel Opportunity (RO) time-frequency resource corresponding to a target MsgA RO used for sending a random access message MsgA and an MsgA Physical Uplink Shared Channel (PUSCH) time-frequency resource corresponding to a target MsgA PUSCH associated with the target MsgA RO.

The target MsgA RO and the target MsgA PUSCH meet the following:
the target MsgA PUSCH is configured in a slot allocated with an SBFD time-frequency resource, and the target MsgA RO associated with the target MsgA PUSCH is configured in a slot not allocated with an SBFD time-frequency resource; or
the target MsgA PUSCH is configured in a slot allocated with an SBFD time-frequency resource, and the target MsgA RO associated with the target MSgA PUSCH is configured in a slot allocated with an SBFD time-frequency resource; the MsgA PUSCH and the MsgA RO correspond to different slots; or
the target MsgA PUSCH is configured in a slot not allocated with an SBFD time-frequency resource, and the target MsgA RO associated with the target MSgA PUSCH is configured in a slot allocated with an SBFD time-frequency resource.

In an example of the present application, the MsgA PUSCH time-frequency resource is located within the SBFD time-frequency resource; the target time-frequency resource further includes a Synchronization Signal Block (SSB) time-frequency resource corresponding to an SSB;
where the second determining module, when determining the data transmission operation corresponding to the target time-frequency resource according to the overlapping result of the SBFD time-frequency resource and the target time-frequency resource, is specifically configured to:
for a case that the overlapping result is that the SSB time-frequency resource is overlapped or not overlapped with the SBFD time-frequency resource, and the SSB time-frequency resource is not overlapped with the MsgA PUSCH time-frequency resource,
in response to determining that a UE which is to receive data from the base station is in a full-duplex TDD mode, determine that the data transmission operation corresponding to the target time-frequency resource is as follows:
sending data carried by the SSB at the SSB time-frequency resource, and receiving data carried by the target MsgA PUSCH at the MsgA PUSCH time-frequency resource; or
in response to determining that the UE is in a half-duplex TDD mode, determine that the data transmission operation corresponding to the target time-frequency resource is as follows:
when a condition that a time interval between the SSB and the target MsgA PUSCH is greater than an uplink- downlink conversion time is met, sending the data carried by the SSB at the SSB time-frequency resource, and receiving the data carried by the target MsgA PUSCH at the MsgA PUSCH time-frequency resource; and
in response to the condition being not met, prohibiting a reception of the data carried by the MsgA PUSCH at the MsgA PUSCH time-frequency resource, and only sending the data carried by the SSB at the SSB time-frequency resource.

In an example of the present application, the MsgA PUSCH time-frequency resource is located within the SBFD time-frequency resource; the target time-frequency resource further includes a Synchronization Signal Block (SSB) time-frequency resource corresponding to an SSB;
where the second determining module, when determining the data transmission operation corresponding to the target time-frequency resource according to the overlapping result of the SBFD time-frequency resource and the target time-frequency resource, is specifically configured to:
for a case that the overlapping result is that the SSB time-frequency resource is overlapped or not overlapped with the SBFD time-frequency resource, and the SSB time-frequency resource is partially overlapped with the MsgA PUSCH time-frequency resource, determine that the data transmission operation corresponding to the target time-frequency resource is:
prohibiting a reception of data carried by the target MsgA PUSCH at the MsgA PUSCH time-frequency resource; or
at a remaining resource in the MsgA PUSCH time-frequency resource that is not overlapped with the SBFD time-frequency resource, receiving a part of data associated with the remaining resource in the data carried by the target MsgA PUSCH.

In an example of the present application, the MsgA PUSCH time-frequency resource is located within the SBFD time-frequency resource; the target time-frequency resource further includes a Physical Downlink Control Channel (PDCCH) time-frequency resource corresponding to a PDCCH;
where the second determining module, when determining the data transmission operation corresponding to the target time-frequency resource according to the overlapping result of the SBFD time-frequency resource and the target time-frequency resource, is specifically configured to:
for a case that the overlapping result is that the PDCCH time-frequency resource is not overlapped with the SBFD time-frequency resource, and the PDCCH time-frequency resource is not overlapped with the MsgA PUSCH time-frequency resource,
in response to determining that a UE which is to receive data from the base station is in a full-duplex TDD mode, determine that the data transmission operation corresponding to the target time-frequency resource is as follows:
sending data carried by a PDCCH at the PDCCH time-frequency resource, and receiving the data carried by the target MsgA PUSCH at the MsgA PUSCH time-frequency resource;
in response to determining that the UE is in a half-duplex TDD mode, determine that the data transmission operation corresponding to the target time-frequency resource is as follows:
when a condition that a time interval between a target PDCCH and the target MsgA PUSCH is greater than an uplink-downlink conversion time is met, sending the data carried by the target PDCCH at the PDCCH time-frequency resource, and receiving the data carried by the target MsgA PUSCH at the MsgA PUSCH time-frequency resource, and
in response to the condition being not met, only receiving the data carried by the target MsgA PUSCH at the MsgA PUSCH time-frequency resource, and prohibiting sending of the data carried by the PDCCH at the PDCCH time-frequency resource.

In an example of the present application, the MsgA PUSCH time-frequency resource is located within the SBFD time-frequency resource; the target time-frequency resource further includes a Physical Downlink Control Channel (PDCCH) time-frequency resource corresponding to a PDCCH;
wherein the second determining module, when determining the data transmission operation corresponding to the target time-frequency resource according to the overlapping result of the SBFD time-frequency resource and the target time-frequency resource, is specifically configured to:
if the overlapping result is that the PDCCH time-frequency resource is not overlapped with the SBFD time-frequency resource, and the PDCCH time-frequency resource is partially overlapped with MsgA PUSCH time-frequency resource, but a start point of PDCCH reception is later than a start point of target MsgA PUSCH transmission,
in responding to determining that a UE which is to receive data from the base station is in a full-duplex TDD mode, determine the data transmission operation corresponding to the target time-frequency resource is as follows:
sending data carried by a target PDCCH at the PDCCH time-frequency resource, and receiving a random access signal carried by the target RO at the RO time-frequency resource; or in response to determining that the UE which is to receive data from the base station is in a half-duplex TDD mode, determine that the data transmission operation corresponding to the target time-frequency resource is as follows:
when a condition that a time interval between the target PDCCH and the target RO is greater than an uplink-downlink conversion time is met,
performing rate-matching on the data carried by the target PDCCH;
sending data obtained after performing the rate-matching at a remaining resource in the PDCCH time-frequency resource that is not overlapped with the MsgA PUSCH time-frequency resource; and
receiving data carried by the target MsgA PUSCH at the MsgA PUSCH time-frequency resource; or
in response to the condition being not met, only receiving the data carried by the target MsgA PUSCH at the MsgA PUSCH time-frequency resource, and prohibiting receiving the data carried by the target PDCCH at the PDCCH time-frequency resource.

In an example of the present application, the MsgA PUSCH time-frequency resource is located within the SBFD time-frequency resource; the target time-frequency resource further includes a Physical Downlink Control Channel (PDCCH) time-frequency resource corresponding to a PDCCH.
wherein the second determining module, when determining the data transmission operation corresponding to the target time-frequency resource according to the overlapping result of the SBFD time-frequency resource and the target time-frequency resource, is specifically configured to:
for a case that the overlapping result is that the PDCCH time-frequency resource is partially overlapped with the SBFD time-frequency resource, and the PDCCH time-frequency resource is not overlapped with MsgA PUSCH time-frequency resource,
in response to determining that a UE which is to receive data from the base station is in a full-duplex TDD mode, determine the data transmission operation corresponding to the target time-frequency resource is as follows:
performing rate-matching on data carried by the a target PDCCH;
sending data obtained after performing the rate-matching at a remaining resource in the PDCCH time-frequency resource that is not overlapped with the SBFD time-frequency resource, and receiving data carried by the target MsgA PUSCH at the MsgA PUSCH time-frequency resource; or
in response to determining that the UE is in a half-duplex TDD mode, determine the data transmission operation corresponding to the target time-frequency resource is as follows:
when a condition that a time interval between the target PDCCH and the target MsgA PUSCH is greater than an uplink/downlink conversion time is met, performing rate-matching on the data carried by the target PDCCH, sending the data carried by the target PDCCH at the remaining resource in the PDCCH time-frequency resource that is not overlapped with the SBFD time-frequency resource and receiving the data carried by the target MsgA PUSCH at the MsgA PUSCH time-frequency resource, and
in response to the condition being not met, only receiving the data carried by the target MsgA PUSCH at the MsgA PUSCH time-frequency resource, and prohibiting sending of the data carried by the target PDCCH at the PDCCH time-frequency resource.

In an example of the present application, the MsgA PUSCH time-frequency resource is located within the SBFD time-frequency resource; the target time-frequency resource further includes a Physical Downlink Control Channel (PDCCH) time-frequency resource corresponding to a PDCCH;
where the second determining module, when determining the data transmission operation corresponding to the target time-frequency resource according to the overlapping result of the SBFD time-frequency resource and the target time-frequency resource, is specifically configured to:
for a case that the overlapping result is that the PDCCH time-frequency resource is partially overlapped with the SBFD time-frequency resource, and the PDCCH time-frequency resource is partially overlapped with MsgA PUSCH time-frequency resource, but a start point of PDCCH reception is later than a start point of target MsgA PUSCH transmission,
in response to determining that the UE which is to receive data from the base station is in a full-duplex TDD mode, determine the data transmission operation corresponding to the target time-frequency resource is as follows:
performing rate-matching on data carried by a target PDCCH,
sending data obtained after performing the rate-matching at a remaining resource in the PDCCH time-frequency resource that is not overlapped with the SBFD time-frequency resource or the RO time-frequency resource, and receiving a random access signal carried by the target RO at the RO time-frequency resource; or in response to determining that the UE is in a half-duplex TDD mode, determine the data transmission operation corresponding to the target time-frequency resource is as follows:
when a condition that a time interval between the target PDCCH and the target RO is greater than an uplink-downlink conversion time is met,
performing rate-matching on the data carried by the target PDCCH;
sending the data obtained after performing the rate-matching at the remaining resource of the PDCCH time-frequency resource that is not overlapped with the MsgA PUSCH time-frequency resource or the SBFD time-frequency resource, and
receiving data carried by the target MsgA PUSCH at the MsgA PUSCH time-frequency resource, or
in response to the condition being not met, only receiving the data carried by the target MsgA PUSCH at the MsgA PUSCH time-frequency resource, and prohibiting receiving of the data carried by the target PDCCH at the PDCCH time-frequency resource.

In an example of the present application, the MsgA PUSCH time-frequency resource is located within the SBFD time-frequency resource; the target time-frequency resource further includes a Physical Downlink Shared Channel (PDSCH) time-frequency resource corresponding to a PDSCH;
wherein the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is not overlapped with the SBFD time-frequency resource, and the PDSCH time-frequency resource is not overlapped with the MsgA PUSCH time-frequency resource,
in response to determining that the UE which is to receive data from the base station is in a full-duplex TDD mode, determine the data transmission operation corresponding to the target time-frequency resource is as follows:
sending data carried by a target PDSCH at the PDSCH time-frequency resource, and receiving data carried by the target MsgA PUSCH at the MsgA PUSCH time-frequency resource; or
in response to determining that the UE is in a half-duplex TDD mode, determine the data transmission operation corresponding to the target time-frequency resource is as follows:
when a condition that a time interval between the target PDSCH and the target MsgA PUSCH is greater than an uplink-downlink conversion time is met, sending the data carried by the target PDSCH at the PDSCH time-frequency resource, and receiving the data carried by the target MsgA PUSCH at the MsgA PUSCH time-frequency resource; and
in response to the condition being not met, only receiving the data carried by the target MsgA PUSCH at the MsgA PUSCH time-frequency resource, and prohibiting sending of the data carried by the target PDSCH at the PDSCH time-frequency resource.

In an example of the present application, the MsgA PUSCH time-frequency resource is located within the SBFD time-frequency resource; the target time-frequency resource further includes a Physical Downlink Shared Channel (PDSCH) time-frequency resource corresponding to a PDSCH;
where the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is not overlapped with the SBFD time-frequency resource, and the PDSCH time-frequency resource is partially overlapped with the MsgA PUSCH time-frequency resource,
in response to determining that a UE which is to receive data from the base station is in a full-duplex TDD mode, determine the data transmission operation corresponding to the target time-frequency resource is as follows:
sending the data carried by a target PDSCH at the PDSCH time-frequency resource, and receiving data carried by the target MsgA PUSCH at the MsgA PUSCH time-frequency resource; or
in response to determining that the UE is in a half-duplex TDD mode, determine the data transmission operation corresponding to the target time-frequency resource is as follows:
when a condition that a time interval between the target PDSCH and the target MsgA PUSCH is greater than an uplink-downlink conversion time is met,
performing rate-matching on the data carried by the target PDSCH;
sending the data obtained after performing the rate-matching at a remaining resource in the PDSCH time-frequency resource that is not overlapped with the MsgA PUSCH time-frequency resource, and
receiving the data carried by the target MsgA PUSCH at the MsgA PUSCH time-frequency resource, or
in response to the condition being not met, only receiving the data carried by the target MsgA PUSCH at the MsgA PUSCH time-frequency resource, and prohibiting sending of the data carried by the target PDSCH at the PDSCH time-frequency resource.

In an example of the present application, the MsgA PUSCH time-frequency resource is located within the SBFD time-frequency resource; the target time-frequency resource further includes a Physical Downlink Shared Channel (PDSCH) time-frequency resource corresponding to a PDSCH;
where the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is partially overlapped with the SBFD time-frequency resource, and the PDSCH time-frequency resource is partially overlapped with the MsgA PUSCH time-frequency resource,
in response to determining that a UE which is to receive data from the base station is in a full-duplex TDD mode, determine the data transmission operation corresponding to the target time-frequency resource is as follows:
performing rate-matching on data carried by a target PDSCH;
sending data obtained after performing the rate-matching at a remaining resource in the PDSCH time-frequency resource that is not overlapped with the SBFD time-frequency resource or the MsgA PUSCH time-frequency resource, and receiving data carried by the target MsgA PUSCH at the MsgA PUSCH time-frequency resource; or
in response to determining that the UE is in a half-duplex TDD mode, determine that the data transmission operation corresponding to the target time-frequency resource is as follows:
when a condition that a time interval between the target PDSCH and the target MsgA PUSCH is greater than an uplink-downlink conversion time is met,
performing rate-matching on the data carried by the target PDSCH;
sending the data obtained after performing the rate-matching at the remaining resource in the PDSCH time-frequency resource that is not overlapped with the MsgA PUSCH time-frequency resource or the SBFD time-frequency resource, and
receiving the data carried by the target MsgA PUSCH at the MsgA PUSCH time-frequency resource; or
in response to the condition being not met, only receiving the data carried by the target MsgA PUSCH at the MsgA PUSCH time-frequency resource, and prohibiting sending of the data carried by the target PDSCH at the PDSCH time-frequency resource.

In an example of the present application, the MsgA PUSCH time-frequency resource is located within the SBFD time-frequency resource; the target time-frequency resource further includes a Physical Downlink Shared Channel (PDSCH) time-frequency resource corresponding to a PDSCH;
where the second determining module, when determining the data transmission operation corresponding to the target time-frequency resource according to the overlapping result of the SBFD time-frequency resource and the target time-frequency resource, is specifically configured to:
for a case that the overlapping result is that the PDSCH time-frequency resource is partially overlapped with the SBFD time-frequency resource, and the PDSCH time-frequency resource is not overlapped with the MsgA PUSCH time-frequency resource,
in response to determining that a UE which is to receive data from the base station is in afull-duplex TDD mode, determine the data transmission operation corresponding to the target time-frequency resource is as follows:
performing rate-matching on data carried by a target PDSCH;
sending the data obtained after performing the rate-matching at a remaining resource in the PDSCH time-frequency resource that is not overlapped with the SBFD time-frequency resource, and receiving data carried by the target MsgA PUSCH at the MsgA PUSCH time-frequency resource; or
in response to determining that the UE is in a half-duplex TDD mode, determine the data transmission operation corresponding to the target time-frequency resource is as follows:
when a condition that a time interval between the target PDSCH and the target MsgA PUSCH is greater than an uplink-downlink conversion time is met, performing the rate-matching on the data carried by the target PDSCH, sending the data obtained after performing the rate-matching at the remaining resource in the PDSCH time-frequency resource that is not overlapped with the SBFD time-frequency resource, and receiving the data carried by the target MsgA PUSCH at the MsgA PUSCH time-frequency resource; and
in response to the condition being not met, only receiving the data carried by the target MsgA PUSCH at the MsgA PUSCH time-frequency resource, and prohibiting sending of the data carried by the target PDSCH at the PDSCH time-frequency resource.

In an embodiment of the present disclosure, the apparatus further comprises: in response to the target MsgA RO being invalid, prohibiting a detection of an MsgA RO at the MsgA RO time-frequency resource, and prohibiting a reception of data carried by a target MsgA PUSCH associated with the target MsgA RO at the MsgA PUSCH time-frequency resource corresponding to the target MsgA PUSCH; or
prohibiting a detection of an MsgA PUSCH at the MsgA PUSCH time-frequency resource corresponding to the target MsgA PUSCH, but receiving a random access signal at the MsgA RO time-frequency resource.

In an embodiment of the present application, the target RO or the target MsgA RO belongs to an exclusive RO group configured for the SBFD mode; and/or
random access signal carried by the target RO or the target MsgA RO is an exclusive random access signal configured for SBFD mode or a conventional random access signal specified by a protocol.

In an embodiment of the present application, the apparatus further comprises: a sending module, configured to send the configuration information of the SBFD time-frequency resource to the UE by carrying the configuration information in a broadcast signaling; or send the configuration information of the SBFD time-frequency resource to the UE by carrying the configuration information in downlink control information (DCI).

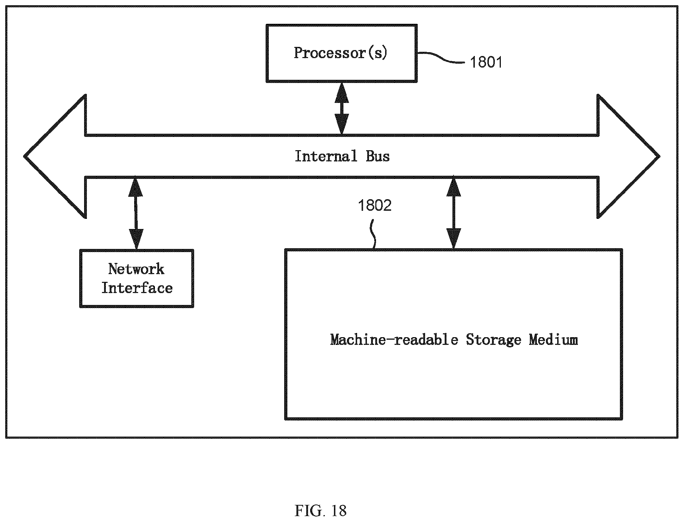

Based on the same concept as the aforementioned method, an embodiment of the present application proposes an electronic device (such as the base station or the user equipment mentioned above), as shown in Fig 18. The electronic device includes a processor 1801 and a machine-readable storage medium 1802, where the machine-readable storage medium 1802 stores machine-executable instructions that can be executed by a processor. The processor 1801 is configured to execute the machine-executable instructions to implement the data transmission method disclosed in the embodiments of the present application.

Based on the same concept as the aforementioned method, an embodiment of the present application also provides a machine-readable storage medium, which stores a number of computer instructions. When executed by a processor, the computer instructions implement the data transmission method disclosed in the embodiments of the present application.

The machine-readable storage medium can be any electronic, magnetic, optical, or other physical storage device that can contain or store information, such as executable instructions, data, etc. For example, the machine-readable storage medium can be RAMs (Random Access Memory), transitory memories, non-transitory memories, flash memories, storage drives (such as a hard disk drive), solid-state drives, any type of storage discs (such as CDs, DVDs, etc.), or similar storage media, or a combination thereof.

The devices, apparatuses, or modules illustrated in the above embodiments can be specifically implemented by computer chips or entities, or by products with certain functions. A typical implementation device is a computer, which can take various forms such as a personal computer, a laptop, a cell phone, a camera phone, a smartphone, a personal digital assistant, a media player, a navigation device, an email device, a gaming console, a tablet computer, a wearable device, or any combination of these devices.

For ease of description, the apparatuses above are described in terms of functions divided into various units. Of course, the functions of these units may be implemented in the same or multiple software and/or hardware when implementing the present application.

Those skilled in the art should understand that embodiments of the present application can be provided as a method, a system, or a computer program product. Hence, the present application may take the form of an entirely hardware embodiment, an entirely software embodiment, or an embodiment combining software and hardware aspects. Moreover, embodiments of the present application may take the form of a computer program product implemented on one or more computer-usable storage media (including but not limited to disk storages, CD-ROMs, optical storages, etc.) containing computer-usable program code.

This application is described with reference to flowcharts and/or block diagrams of methods, apparatus (systems), and computer program products according to embodiments of the application. It should be understood that each block of the flowchart and/or block diagram, and combinations of blocks in the flowchart and/or block diagram, can be implemented by computer program instructions. These computer program instructions may be provided to a general-purpose computer, special-purpose computer, embedded processor, or other programmable data processing apparatus to produce a machine, such that the instructions, which execute via the computer or other programmable data processing apparatus, create means for implementing the functions specified in the flowchart and/or block diagram block or blocks.

Furthermore, these computer program instructions may also be stored in a computer-readable memory that can direct a computer or other programmable data processing apparatus to function in a particular manner, such that the instructions stored in the computer-readable memory produce an article of manufacture including instruction means that implement the function specified in the flowchart and/or block diagram block or blocks.

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in the flowchart and/or block diagram block or blocks.

The above description is only an embodiment of the present application and is not intended to limit the present application. To those skilled in the art, the present application may have various modifications and changes. Any modifications, equivalent replacements, improvements, etc., made within the spirit and principle of the present application should be included in the protection scope of the present application.

## Claims

1. A service data transmission method, wherein the method is applied to User Equipment, UE, that supports Sub-Band Full-duplex, SBFD, mode, and the method comprises:
determining an SBFD time-frequency resource corresponding to a target slot and a target time-frequency resource associated with the target slot based on configuration information sent by a base station;
determining a data transmission operation corresponding to the target time-frequency resource according to an overlapping result of the SBFD time-frequency resource and the target time-frequency resource;
performing the determined data transmission operation in the target slot.

2. The method according to claim 1, wherein the target slot is an uplink, UL, slot, a downlink, DL, slot, or a special slot; the SBFD time-frequency resource occupies at least one symbol of the target slot in time domain, and occupies at least one physical resource block for each of the at least one symbol in frequency domain.

3. The method according to claim 1 or 2, wherein in case that the UE accesses a network through a 4-step random access procedure, the target time-frequency resource includes: an Random Access Channel Opportunity, RO, time-frequency resource corresponding to a target RO, wherein the target RO is any one of at least one RO configured for the target slot.

4. The according to claim 3, wherein determining the data transmission operation corresponding to the target time-frequency resource according to the overlapping result of the SBFD time-frequency resource and the target time-frequency resource comprises: for a case that the overlapping result is that the RO time-frequency resource is located within the SBFD time-frequency resource,
in response to that one or more symbols corresponding to the SBFD time-frequency resource are UL symbols or flexible, F, symbols, determining that the data transmission operation corresponding to the target time-frequency resource is: sending a random access signal carried by the target RO at the RO time-frequency resource;
in response to that the symbols corresponding to the SBFD time-frequency resource are DL symbols, determining that the data transmission operation corresponding to the target time-frequency resource is prohibiting sending of the random access signal.

5. The method according to claim 3, wherein determining the data transmission operation corresponding to the target time-frequency resource according to the overlapping result of the SBFD time-frequency resource and the target time-frequency resource comprises: for a case that the overlapping result is that the RO time-frequency resource is partially overlapped with the SBFD time-frequency resource,
in response to that one or more symbols corresponding to the SBFD time-frequency resource are UL symbols or flexible, F, symbols, determining the data transmission operation corresponding to the target time-frequency resource is:
prohibiting sending of a random access signal carried by the target RO; or
at an overlapping resource in the SBFD time-frequency resource that is overlapped with the RO time-frequency resource, sending a part corresponding to the overlapping resource in the random access signal; or
in response to that the symbols corresponding to the SBFD time-frequency resource are DL symbols, determining that the data transmission operation corresponding to the target time-frequency resource is:
prohibiting sending of the random access signal.

6. The method according to claim 1, wherein the target time-frequency resource includes: an Random Access Channel Opportunity, RO, time-frequency resource corresponding to a target RO, and a Synchronization Signal Block, SSB, time-frequency resource corresponding to an SSB;
the target RO is any one of at least one RO configured for the target slot;
the RO time-frequency resource is located within the SBFD time-frequency resource.

7. The method according to claim 6, wherein determining the data transmission operation corresponding to the target time-frequency resource according to the overlapping result of the SBFD time-frequency resource and the target time-frequency resource comprises:
for a case that the overlapping result is that the SSB time-frequency resource is overlapped or not overlapped with the SBFD time-frequency resource, and the SSB time-frequency resource is partially overlapped with the RO time-frequency resource, determining that the data transmission operation corresponding to the target time-frequency resource is:
only receiving data carried by the SSB at the SSB time-frequency resource and prohibiting sending of a random access signal carried by the target RO at the RO time-frequency resource; or
receiving the data carried by the SSB at the SSB time-frequency resource, and at a remaining resource in the RO time-frequency resource, sending a part associated with the remaining resource in the random access signal, wherein the remaining resource is a portion in the RO time-frequency resource which is not overlapped with the SSB time-frequency resource.

8. The method according to claim 6, wherein determining the data transmission operation corresponding to the target time-frequency resource according to the overlapping result of the SBFD time-frequency resource and the target time-frequency resource comprises:
for a case that the overlapping result is that the SSB time-frequency resource is overlapped or not overlapped with the SBFD time-frequency resource, and the SSB time-frequency resource is not overlapped with the RO time-frequency resource,
in response to that the UE is in full-duplex TDD mode, determining the data transmission operation corresponding to the target time-frequency resource is:
receiving data carried by the SSB at the SSB time-frequency resource, and sending a random access signal carried by the target RO at the RO time-frequency resource; or
in response to that the UE is in half-duplex TDD mode, determining the data transmission operation corresponding to the target time-frequency resource is:
in response to a condition that a time interval between the SSB and the target RO is greater than an uplink-downlink conversion time being met, receiving data carried by the SSB at the SSB time-frequency resource, and sending the random access signal carried by the target RO at the RO time-frequency resource; and
in response to the condition being not met, prohibiting sending of the random access signal at the RO time-frequency resource, and only receiving data carried by the SSB at the SSB time-frequency resource.

9. The method according to claim 1, wherein the target time-frequency resource includes an Random Access Channel Opportunity, RO, time-frequency resource corresponding to a target RO and a Physical Downlink Shared Channel, PDSCH, time-frequency resource corresponding to a PDSCH;
the target RO is any one of at least one RO configured for the target slot;
the RO time-frequency resource is located within the SBFD time-frequency resource.

10. The method according to claim 9, wherein determining the data transmission operation corresponding to the target time-frequency resource according to the overlapping result of the SBFD time-frequency resource and the target time-frequency resource comprises:
for a case that the overlapping result is that the PDSCH time-frequency resource is not overlapped with the SBFD time-frequency resource, and the PDSCH time-frequency resource is not overlapped with the RO time-frequency resource,
in response to that the UE is in full-duplex TDD mode, determining that the data transmission operation corresponding to the target time-frequency resource is:
receiving data carried by a target PDSCH at the PDSCH time-frequency resource, and sending a random access signal carried by the target RO at the RO time-frequency resource;
in response to that the UE is in half-duplex TDD mode, determining that the data transmission operation corresponding to the target time-frequency resource is:
in response to a condition that a time interval between the target PDSCH and the target RO is greater than an uplink-downlink conversion time being met, receiving the data carried by the target PDSCH at the PDSCH time-frequency resource, and sending the random access signal carried by the target RO at the RO time-frequency resource; and
in response to the condition being not met, only sending the random access signal at the RO time-frequency resource, prohibiting a reception of the data carried by the target PDSCH at the PDSCH time-frequency resource.

11. The method according to claim 9, wherein determining the data transmission operation corresponding to the target time-frequency resource according to the overlapping result of the SBFD time-frequency resource and the target time-frequency resource comprises:
for a case that the overlapping result is that the PDSCH time-frequency resource is partially overlapped with the SBFD time-frequency resource, and the PDSCH time-frequency resource is not overlapped with the RO time-frequency resource,
in response to that the UE is in full-duplex TDD mode, determining the data transmission operation corresponding to the target time-frequency resource is:
at a remaining resource in the PDSCH time-frequency resource that is not overlapped with the SBFD time-frequency resource, receiving a part of data associated with the remaining resource in data carried by a target PDSCH, and sending a random access signal carried by the target RO at the RO time-frequency resource;
in response to that the UE is in half-duplex TDD mode, determining that the data transmission operation corresponding to the target time-frequency resource is:
in response to a condition that a time interval between the target PDSCH and the target RO is greater than an uplink-downlink conversion time being met, at the remaining resource in the PDSCH time-frequency resource that is not overlapped with the SBFD time-frequency resource, receiving the part of data associated with the remaining resource in the data carried by the target PDSCH, and sending the random access signal carried by the target RO at the RO time-frequency resource; and
in response to the condition being not met, only sending the random access signal at the RO time-frequency resource and prohibiting a reception of the data carried by the target PDSCH at the PDSCH time-frequency resource.

12. The method according to claim 9, wherein determining the data transmission operation corresponding to the target time-frequency resource according to the overlapping result of the SBFD time-frequency resource and the target time-frequency resource comprises:
for a case that the overlapping result is that the PDSCH time-frequency resource is not overlapped with the SBFD time-frequency resource, and the PDSCH time-frequency resource is partially overlapped with the RO time-frequency resource,
in response to that the UE is in full-duplex TDD mode, determining the data transmission operation corresponding to the target time-frequency resource is:
receiving data carried by a target PDSCH at the PDSCH time-frequency resource, and sending a random access signal carried by the target RO at the RO time-frequency resource;
in response to that a UE is in half-duplex TDD mode, determining the data transmission operation corresponding to the target time-frequency resource is:
in response to a condition that a time interval between the target PDSCH and the target RO is greater than an uplink-downlink conversion time being met, sending the random access signal carried by the target RO at the RO time-frequency resource and at a remaining resource in the PDSCH time-frequency resource that is not overlapped with the RO time-frequency resource, receiving a part of data associated with the remaining resource in data carried by the target PDSCH; or
in response to the condition being not met, only sending the random access signal carried by the target RO at the RO time-frequency resource, and prohibiting a reception of the data carried by the target PDSCH at the PDSCH time-frequency resource.

13. The method according to claim 9, wherein determining the data transmission operation corresponding to the target time-frequency resource according to the overlapping result of the SBFD time-frequency resource and the target time-frequency resource comprises:
for a case that the overlapping result is that the PDSCH time-frequency resource is partially overlapped with the SBFD time-frequency resource, and the PDSCH time-frequency resource is partially overlapped with the RO time-frequency resource,
in response to that the UE is in full-duplex TDD mode, determining the data transmission operation corresponding to the target time-frequency resource is:
at a remaining resource in the PDSCH time-frequency resource which is not overlapped with the SBFD time-frequency resource or the RO time-frequency resource, receiving data associated with the remaining resource in data carried by the target PDSCH, and sending a random access signal carried by the target RO at the RO time-frequency resource;
in response to that the UE is in half-duplex TDD mode, determining that the data transmission operation corresponding to the target time-frequency resource is:
in response to a condition that the time interval between the target PDSCH and the target RO is greater than an uplink-downlink conversion time being met, sending the random access signal carried by the target RO at the RO time-frequency resource, and at the remaining resource in the PDSCH time-frequency resource which is not overlapped with the SBFD time-frequency resource or the RO time-frequency resource, receiving a part of data associated with the remaining resource in the data carried by the target PDSCH; or
in response to the condition being not met, sending the random access signal carried by the target RO at the RO time-frequency resource, and prohibiting a reception of the data carried by the target PDSCH at the PDSCH time-frequency resource.

14. The method according to claim 1, wherein the target time-frequency resource includes an Random Access Channel Opportunity, RO, time-frequency resource corresponding to a target RO, and a Physical Downlink Control Channel, PDCCH, time-frequency resource corresponding to a PDCCH;
the target RO is any one of at least one RO configured for the target slot;
the RO time-frequency resource is located within the SBFD time-frequency resource.

15. The method according to claim 14, wherein determining the data transmission operation corresponding to the target time-frequency resource according to the overlapping result of the SBFD time-frequency resource and the target time-frequency resource comprises:
for a case that the overlapping result is that the PDCCH time-frequency resource is not overlapped with the SBFD time-frequency resource, and the PDCCH time-frequency resource is not overlapped with the RO time-frequency resource,
in response to that the UE is in full-duplex TDD mode, determining that the data transmission operation corresponding to the target time-frequency resource is:
receiving data carried by a target PDCCH at the PDCCH time-frequency resource, and sending a random access signal carried by the target RO at the RO time-frequency resource;
in response to that the UE is in half-duplex TDD mode, determining that the data transmission operation corresponding to the target time-frequency resource is:
in response to a condition that a time interval between the target PDCCH and the target RO is greater than an uplink-downlink conversion time being met, receiving the data carried by the target PDCCH at the PDCCH time-frequency resource, and sending the random access signal carried by the target RO at the RO time-frequency resource, and
in response to the condition being not met, only sending the random access signal at the RO time-frequency resource, and prohibiting a reception of the data carried by the target PDCCH at the PDCCH time-frequency resource.

16. The method according to claim 14, wherein determining the data transmission operation corresponding to the target time-frequency resource according to the overlapping result of the SBFD time-frequency resource and the target time-frequency resource comprises:
for a case that the overlapping result is that the PDCCH time-frequency resource is partially overlapped with the SBFD time-frequency resource, and the PDCCH time-frequency resource is not overlapped with the RO time-frequency resource,
in response to that the UE is in full-duplex TDD mode, determining the data transmission operation corresponding to the target time-frequency resource is:
at a remaining resource in the PDCCH time-frequency resource that is not overlapped with the SBFD time-frequency resource, receiving a part of data associated with the remaining resource in data carried by a target PDCCH, and sending a random access signal carried by the target RO at the RO time-frequency resource;
in response to that the UE is in half-duplex TDD mode, determining the data transmission operation corresponding to the target time-frequency resource is:
in response to a condition that a time interval between the target PDCCH and the target RO is greater than an uplink-downlink conversion time being met, at the remaining resource in the PDCCH time-frequency resource that is not overlapped with the SBFD time-frequency resource, receiving the part of data associated with the remaining resource in the data carried by the target PDCCH, and sending the random access signal carried by the target RO at the RO time-frequency resource; and
in response to the condition being not met, only sending the random access signal at the RO time-frequency resource, and prohibiting a reception of the data carried by the target PDCCH at the PDCCH time-frequency resource.

17. The method according to claim 14, wherein determining the data transmission operation corresponding to the target time-frequency resource according to the overlapping result of the SBFD time-frequency resource and the target time-frequency resource comprises:
for a case that the overlapping result is that the PDCCH time-frequency resource is not overlapped with the SBFD time-frequency resource, and the PDCCH time-frequency resource is partially overlapped with the RO time-frequency resource, but a start point of PDCCH reception is earlier than a start point of target RO transmission,
in response to that the UE is in full-duplex TDD mode, determining the data transmission operation corresponding to the target time-frequency resource is:
receiving data carried by a target PDCCH at the PDCCH time-frequency resource, and sending a random access signal carried by the target RO at the RO time-frequency resource;
in response to that the UE is in half-duplex TDD mode, determining the data transmission operation corresponding to the target time-frequency resource is:
in response to a condition that a time interval between the target PDCCH and the target RO is greater than an uplink-downlink conversion time being met, sending the random access signal carried by the target RO at the RO time-frequency resource, and at a remaining resource in the target PDCCH time-frequency resource that is not overlapped with the RO time-frequency resource, receiving a part of data associated with the remaining resource in the data carried by the target PDCCH; or
in response to the condition being not met, only sending the random access signal carried by the target RO at the RO time-frequency resource, and prohibiting a reception of the data carried by the target PDCCH at the PDCCH time-frequency resource.

18. The method according to claim 14, wherein determining the data transmission operation corresponding to the target time-frequency resource according to the overlapping result of the SBFD time-frequency resource and the target time-frequency resource comprises:
for a case that the overlapping result is that the PDCCH time-frequency resource is partially overlapped with the SBFD time-frequency resource, and the PDCCH time-frequency resource is partially overlapped with the RO time-frequency resource, but a start point of PDCCH reception is later than a start point of target RO transmission,
in response to that the UE is in full-duplex TDD mode, determining the data transmission operation corresponding to the target time-frequency resource is:
receiving data carried by a target PDCCH at the PDCCH time-frequency resource, and sending a random access signal carried by the target RO at the RO time-frequency resource;
in response to that the UE is in half-duplex TDD mode, determining the data transmission operation corresponding to the target time-frequency resource is:
in response to a condition that a time interval between the target PDCCH and the target RO is greater than an uplink-downlink conversion time being met, sending the random access signal carried by the target RO at the RO time-frequency resource, and at a remaining resource in the PDCCH time-frequency resource that is not overlapped with the SBFD time-frequency resource or the RO time-frequency resource, receiving a part of data associated with the remaining resource in the data carried by the target PDCCH; or
in response to the condition being not met, only sending the random access signal carried by the target RO at the RO time-frequency resource, and prohibiting a reception of the data carried by the target PDCCH at the PDCCH time-frequency resource.

19. The method according to claim 14, wherein determining the data transmission operation corresponding to the target time-frequency resource according to the overlapping result of the SBFD time-frequency resource and the target time-frequency resource comprises:
for a case that the overlapping result is that the PDCCH time-frequency resource is overlapped or not overlapped with the SBFD time-frequency resource, and the PDCCH time-frequency resource is partially overlapped with the RO time-frequency resource,
under condition that no random access signal is to be sent, determining the data transmission operation corresponding to the target time-frequency resource is:
ignoring the target RO, and receiving data carried by a target PDCCH at the PDCCH time-frequency resource or prohibiting a reception of the data carried by the target PDCCH at the PDCCH time-frequency resource.

20. The method according to claim 1 or 2, wherein in case where the UE accesses a network through a 2-step random access procedure, the target time-frequency resource includes: an MsgA Random Access Channel Opportunity, RO, time-frequency resource corresponding to a target MsgA RO used for sending a random access message MsgA and an MsgA Physical Uplink Shared Channel, PUSCH, time-frequency resource corresponding to a target MsgA PUSCH associated with the target MsgA RO;
the target MsgA RO and the target MsgA PUSCH satisfy:
the target MsgA PUSCH is configured in a slot allocated with an SBFD time-frequency resource, and the target MsgA RO associated with the target MsgA PUSCH is configured in a slot not allocated with an SBFD time-frequency resource; or
the target MsgA PUSCH is configured in a slot allocated with an SBFD time-frequency resource, the target MsgA RO associated with the target MsgA PUSCH is configured in a slot allocated with an SBFD time-frequency resource; the MsgA PUSCH and the MsgA RO correspond to different slots; or
the target MsgA PUSCH is configured in a slot not allocated with an SBFD time-frequency resource, and the target MsgA RO associated with the target MsgA PUSCH is configured in a slot allocated with an SBFD time-frequency resource.

21. The method according to claim 20, wherein the MsgA PUSCH time-frequency resource is located within the SBFD time-frequency resource, and the target time-frequency resource further includes a Synchronization Signal Block, SSB, time-frequency resource corresponding to an SSB;
wherein determining the data transmission operation corresponding to the target time-frequency resource according to the overlapping result of the SBFD time-frequency resource and the target time-frequency resource comprises:
for a case that the overlapping result is that the SSB time-frequency resource is overlapped or not overlapped with the SBFD time-frequency resource, and the SSB time-frequency resource is not overlapped with the MsgA PUSCH time-frequency resource,
in response to that the UE is in full-duplex TDD mode, determining the data transmission operation corresponding to the target time-frequency resource is:
receiving data carried by the SSB at the SSB time-frequency resource, and sending data carried by the target MsgA PUSCH at the MsgA PUSCH time-frequency resource; or
in response to that the UE is in half-duplex TDD mode, determining the data transmission operation corresponding to the target time-frequency resource is:
in response to a condition that a time interval between the SSB and the target RO is greater than an uplink-downlink conversion time being met, receiving the data carried by the SSB at the SSB time-frequency resource, and sending the data carried by the target MsgA PUSCH at the MsgA PUSCH time-frequency resource; and
in response to the condition being not met, prohibiting sending of the data carried by the target MsgA PUSCH at the MsgA PUSCH time-frequency resource, and only receiving the data carried by the SSB at the SSB time-frequency resource.

22. The method according to claim 20, wherein the MsgA PUSCH time-frequency resource is located within the SBFD time-frequency resource; the target time-frequency resource further includes a Synchronization Signal Block, SSB, time-frequency resource corresponding to an SSB;
wherein determining the data transmission operation corresponding to the target time-frequency resource according to the overlapping result of the SBFD time-frequency resource and the target time-frequency resource comprises:
for a case that the overlapping result is that the SSB time-frequency resource is overlapped or not overlapped with the SBFD time-frequency resource, and the SSB time-frequency resource is partially overlapped with the MsgA PUSCH time-frequency resource, determining the data transmission operation corresponding to the target time-frequency resource is:
prohibiting sending of data carried by the target MsgA PUSCH at the MsgA PUSCH time-frequency resource; or
at a remaining resource in the MsgA PUSCH time-frequency resource that is not overlapped with the SBFD time-frequency resource, sending a part of data associated with the remaining resource in the data carried by the target MsgA PUSCH.

23. The method according to claim 20, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
for a case that the overlapping result is that the PDCCH time-frequency resource is not overlapped with the SBFD time-frequency resource, and the PDCCH time-frequency resources is not overlapped with the MsgA PUSCH time-frequency resource,
in response to that the UE is in full-duplex TDD mode, determining the data transmission operation corresponding to the target time-frequency resources is:
receiving data carried by the PDCCH at the PDCCH time-frequency resource, and sending data carried by the target MsgA PUSCH at the MsgA PUSCH time-frequency resource;
in response to that the UE is in half-duplex TDD mode, determining the data transmission operation corresponding to the target time-frequency resources is:
in response to a condition that a time interval between the target PDCCH and the target MsgA PUSCH is greater than an uplink-downlink conversion time being met, receiving the data carried by the target PDCCH at the PDCCH time-frequency resource, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDCCH at the PDCCH time-frequency resource.

24. The method according to claim 20, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
for a case that the overlapping result is that the PDCCH time-frequency resource is not overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission,
in response to that the UE is in full-duplex TDD mode, determining the data transmission operation corresponding to the target time-frequency resources is:
receiving data carried by a target PDCCH at the PDCCH time-frequency resource, and sending data carried by the MsgA PUSCH at the MsgA PUSCH time-frequency resource;
in response to that the UE is in half-duplex TDD mode, determining the data transmission operation corresponding to the target time-frequency resources is:
in response to a condition that a time interval between the target PDCCH and the target MsgA PUSCH is greater than an uplink-downlink conversion time being met, sending the data carried by the target MsgA PUSCH at the MsgA PUSCH time-frequency resource, and at a remaining resource in the PDCCH time-frequency resource that is not overlapped with the MsgA PUSCH time-frequency resource, receiving a part of data associated with the remaining resource in the data carried by the target PDCCH; or
in response to the condition being not met, sending the data carried by the target MsgA PUSCH at the MsgA PUSCH time-frequency resource, and prohibiting a reception of the data carried by the target PDCCH at the PDCCH time-frequency resource.

25. The method according to claim 20, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
for a case that the overlapping result is that the PDCCH time-frequency resource is partially overlapped with the SBFD time-frequency resource, and the PDCCH time-frequency resource is not overlapped with the MsgA PUSCH time-frequency resource,
in response to that the UE is in full-duplex TDD mode, determining the data transmission operation corresponding to the target time-frequency resource is:
at a remaining resource in the PDCCH time-frequency resource that is not overlapped with the SBFD time-frequency resource, receiving a part of data associated with the remaining resource in data carried by a target PDCCH, and sending data carried by the target MsgA PUSCH at the MsgA PUSCH time-frequency resource;
in response to that the UE is in half-duplex TDD mode, determining the data transmission operation corresponding to the target time-frequency resource is:
in response to a condition that a time interval between the target PDCCH and the target MsgA PUSCH is greater than an uplink-downlink conversion time being met, at the remaining resource in the PDCCH time-frequency resource that is not overlapped with the SBFD time-frequency resource, receiving the part of data associated with the remaining resource in the data carried by the target PDCCH, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDCCH at the PDCCH time-frequency resource.

26. The method according to claim 20, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
for a case that the overlapping result is that the PDCCH time-frequency resource is partially overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission, then:
in response to that the UE is in full-duplex TDD mode, determining the data transmission operation corresponding to the target time-frequency resource is:
receiving data carried by a target PDCCH at the PDCCH time-frequency resource, and sending data carried by the MsgA PUSCH at the MsgA PUSCH time-frequency resource;
in response to that the UE is in half-duplex TDD mode, determining the data transmission operation corresponding to the target time-frequency resources is:
in response to a condition that a time interval between the target PDCCH and the target MsgA PUSCH is greater than an uplink-downlink conversion time being met, sending the data carried by the target MsgA PUSCH at the MsgA PUSCH time-frequency resource, and at a remaining resource in the PDCCH time-frequency resource that is not overlapped with the SBFD time-frequency resource or the MsgA PUSCH time-frequency resource, receiving a part of data associated with the remaining resource in the data carried by the target PDCCH; or
in response to the condition being not met, sending the data carried by the target MsgA PUSCH at the MsgA PUSCH time-frequency resource, and prohibiting a reception of the data carried by the target PDCCH at the PDCCH time-frequency resource.

27. The method according to claim 20, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
for a case that the overlapping result is that the PDCCH time-frequency resource is overlapped or not overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission,
under condition that no random access signal is to be sent, determining the data transmission operation corresponding to the target time-frequency resources is:
ignoring the target MsgA PUSCH, and receiving data carried by a target PDCCH at the PDCCH time-frequency resource.

28. The method according to claim 20, wherein the MsgA PUSCH time-frequency resource is located within the SBFD time-frequency resource, and the target time-frequency resource further includes a Physical Downlink Shared Channel, PDSCH, time-frequency resource corresponding to a PDSCH;
wherein determining the data transmission operation corresponding to the target time-frequency resource according to the overlapping result of the SBFD time-frequency resource and the target time-frequency resource comprises:
for a case that the overlapping result is that the PDSCH time-frequency resource is not overlapped with the SBFD time-frequency resource, and the PDSCH time-frequency resource is not overlapped with the MsgA PUSCH time-frequency resource,
in response to that the UE is in full-duplex TDD mode, determining the data transmission operation corresponding to the target time-frequency resource is:
receiving data carried by a target PDSCH at the PDSCH time-frequency resource, and sending data carried by the target MsgA PUSCH at the MsgA PUSCH time-frequency resource; or
in response to that the UE is in half-duplex TDD mode, determining the data transmission operation corresponding to the target time-frequency resources is:
in response to a condition that a time interval between the target PDSCH and the target MsgA PUSCH is greater than an uplink-downlink conversion time being met, receiving the data carried by the target PDSCH at the PDSCH time-frequency resource, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDSCH at the PDSCH time-frequency resource.

29. The method according to claim 20, wherein the MsgA PUSCH time-frequency resource is located within the SBFD time-frequency resource, and the target time-frequency resource further includes a Physical Downlink Shared Channel, PDSCH, time-frequency resource corresponding to a PDSCH;
wherein determining the data transmission operation corresponding to the target time-frequency resource according to the overlapping result of the SBFD time-frequency resource and the target time-frequency resource comprises:
for a case that the overlapping result is that the PDSCH time-frequency resource is overlapped with the SBFD time-frequency resource, and the PDSCH time-frequency resource is not overlapped with the MsgA PUSCH time-frequency resource,
in response to that the UE is in full-duplex TDD mode, determining the data transmission operation corresponding to the target time-frequency resource is:
at a remaining resource in the PDSCH time-frequency resource that is not overlapped with the SBFD time-frequency resource, receiving a part of data associated with the remaining resource in data carried by a target PDSCH, and sending data carried by the target MsgA PUSCH at the MsgA PUSCH time-frequency resource; or
in response to that the UE is in half-duplex TDD mode, determining the data transmission operation corresponding to the target time-frequency resource is:
in response to a condition that a time interval between the target PDSCH and the target MsgA PUSCH is greater than an uplink-downlink conversion time being met, at the remaining resource in the PDSCH time-frequency resource that is not overlapped with the SBFD time-frequency resource, receiving the part of data associated with the remaining resource in the data carried by the target PDSCH, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDSCH at the PDSCH time-frequency resource.

30. The method according to claim 20, wherein the MsgA PUSCH time-frequency resource is located within the SBFD time-frequency resource, and the target time-frequency resource further includes a Physical Downlink Shared Channel, PDSCH, time-frequency resource corresponding to a PDSCH;
wherein determining the data transmission operation corresponding to the target time-frequency resource according to the overlapping result of the SBFD time-frequency resource and the target time-frequency resource comprises:
for a case that the overlapping result is that the PDSCH time-frequency resource is not overlapped with the SBFD time-frequency resource, and the PDSCH time-frequency resource is partially overlapped with the MsgA PUSCH time-frequency resource,
in response to that the UE is in full-duplex TDD mode, determining the data transmission operation corresponding to the target time-frequency resource is:
receiving data carried by a target PDCCH at the PDCCH time-frequency resource, and sending data carried by the target MsgA PUSCH at the MsgA PUSCH time-frequency resource;
in response to that the UE is in half-duplex TDD mode, determining the data transmission operation corresponding to the target time-frequency resource is:
in response to a condition that a time interval between the target PDCCH and the target MsgA PUSCH is greater than an uplink-downlink conversion time, sending the data carried by the target MsgA PUSCH at the MsgA PUSCH time-frequency resource, and at a remaining resource IN the PDSCH time-frequency resource that is not overlapped with the MsgA PUSCH time-frequency resource, receiving a part of data associated with the remaining resource in the data carried by the target PDSCH; or
in response to the condition being not met, sending the data carried by the target MsgA PUSCH at the MsgA PUSCH time-frequency resource, and prohibiting a reception of the data carried by the target PDSCH at the PDSCH time-frequency resource.

31. The method according to claim 20, wherein the MsgA PUSCH time-frequency resource is located within the SBFD time-frequency resource, and the target time-frequency resource further includes a Physical Downlink Shared Channel, PDSCH, time-frequency resource corresponding to a PDSCH;
wherein determining the data transmission operation corresponding to the target time-frequency resource according to the overlapping result of the SBFD time-frequency resource and the target time-frequency resource comprises:
for a case that the overlapping result is that the PDSCH time-frequency resource is partially overlapped with the SBFD time-frequency resource, and the PDSCH time-frequency resource is partially overlapped with the MsgA PUSCH time-frequency resource,
in response to that the UE is in full-duplex TDD mode, determining the data transmission operation corresponding to the target time-frequency resource is:
receiving data carried by a target PDSCH at the PDSCH time-frequency resource, and sending data carried by the MsgA PUSCH at the MsgA PUSCH time-frequency resource;
in response to that the UE is in half-duplex TDD mode, determining the data transmission operation corresponding to the target time-frequency resource is:
in response to a condition that a time interval between the target PDSCH and the target MsgA PUSCH is greater than an uplink-downlink conversion time being met, sending data carried by the target MsgA PUSCH at the MsgA PUSCH time-frequency resource, and at a remaining resource in the PDSCH time-frequency resource that is not overlapped with the MsgA PUSCH time-frequency resource or the SBFD time-frequency resource, receiving a part of data associated with the remaining resource in the data carried by the target PDSCH; or
in response to the condition being not met, sending the data carried by the target MsgA PUSCH at the MsgA PUSCH time-frequency resource, and prohibiting a reception of the data carried by the target PDSCH at the PDSCH time-frequency resource.

32. The method according to any one of claims 20 to 31, wherein the method further includes:
in case that the target MsgA RO is invalid, prohibiting sending data at the MsgA RO time-frequency resource, and prohibiting sending data at the MsgA PUSCH time-frequency resource corresponding to the target MsgA PUSCH associated with the target MsgA RO; or
in case that it is prohibited to send data at the MsgA PUSCH time-frequency resource corresponding to the target MsgA PUSCH, in response to that it is allowed to send data at the MsgA RO time-frequency resource corresponding to the target MsgA RO associated with the target MsgA PUSCH, sending a random access signal at the MsgA RO time-frequency resource.

33. The method according to any one of claims 3 to 32, wherein,
the target RO or the target MsgA RO belongs to an exclusive RO group configured for SBFD mode; and/or,
a random access signal carried by the target RO or the target MsgA RO is an exclusive random access signal configured for SBFD mode or a conventional random access signal specified by a protocol.

34. The method according to claim 1, wherein the configuration information is sent to the UE by being carried in a broadcast signaling or downlink control information, DCI.

35. The method according to any one of claims 1 to 19, wherein the target RO is an MsgA RO.

36. A data transmission method, wherein the method is applied to a base station that supports Sub-Band Full-duplex, SBFD, mode, and the method comprises:
determining an SBFD time-frequency resource corresponding to a target slot and a target time-frequency resource associated with the target slot;
determining a data transmission operation corresponding to the target time-frequency resource according to an overlapping result of the SBFD time-frequency resource and the target time-frequency resource;
performing the determined data transmission operation in the target slot.

37. The method according to claim 36, wherein the target slot is an uplink, UL, slot, a downlink, DL, slot, or a special slot; the SBFD time-frequency resource occupies at least one symbol of the target slot in time domain, and occupies at least one Physical Resource Block for each of the at least one symbol in frequency domain.

38. The method according to claim 36 or 37, wherein the target time-frequency resource includes: a Random Access Channel Opportunity, RO, time-frequency resource corresponding to a target RO, and a Synchronization Signal Block, SSB, time-frequency resource corresponding to an SSB;
the target RO is any one of at least one RO configured for the target slot;
the RO time-frequency resource is located within the SBFD time-frequency resource.

39. The method according to claim 38, wherein determining the data transmission operation corresponding to the target time-frequency resource according to the overlapping result of the SBFD time-frequency resource and the target time-frequency resource comprises:
for a case that the overlapping result is that the SSB time-frequency resource is overlapped or not overlapped with the SBFD time-frequency resource, and the SSB time-frequency resource is partially overlapped with the RO time-frequency resource, determining the data transmission operation corresponding to the target time-frequency resource is:
only sending data carried by the SSB at the SSB time-frequency resource, and prohibiting a detection of a random access signal at the RO time-frequency resource; or
sending the data carried by the SSB at the SSB time-frequency resource, and at a remaining resource in the RO time-frequency resource, receiving a part associated with the remaining resource in the random access signal carried by the target RO; wherein the remaining resource is a portion in the RO time-frequency resource that is not overlapped with the SSB time-frequency resource.

40. The method according to claim 38, wherein determining the data transmission operation corresponding to the target time-frequency resource according to the overlapping result of the SBFD time-frequency resource and the target time-frequency resource comprises:
for a case that the overlapping result is that the SSB time-frequency resource is overlapped or not overlapped with the SBFD time-frequency resource, and the SSB time-frequency resource is not overlapped with the RO time-frequency resource, then:
in response to determining a UE which is to receive data from the base station is in full-duplex TDD mode, determining the data transmission operation corresponding to the target time-frequency resource is:
sending data carried by the SSB at the SSB time-frequency resource, and receiving a random access signal carried by the target RO at the RO time-frequency resource; or
in response to determining the UE is in half-duplex TDD mode, determining the data transmission operation corresponding to the target time-frequency resource is:
in response to a condition that a time interval between the SSB and the target RO is greater that an uplink-downlink conversion time being met, sending the data carried by the SSB at the SSB time-frequency resource, and receiving the random access signal carried by the target RO at the RO time-frequency resource, and
in response to the condition being not met, prohibiting a detection of a random access signal at the RO time-frequency resource, and only sending the data carried by the SSB at the SSB time-frequency resource.

41. The method according to claims 36 or 37, wherein the target time-frequency resource includes: a Random Access Channel Opportunity, RO, time-frequency resource corresponding to a target RO, and a Physical Downlink Shared Channel, PDSCH, time-frequency resource corresponding to a PDSCH;
the target RO is any one of at least one RO configured for the target slot;
the RO time-frequency resource is located within the SBFD time-frequency resource.

42. The method according to claim 41, wherein determining the data transmission operation corresponding to the target time-frequency resource according to the overlapping result of the SBFD time-frequency resource and the target time-frequency resource comprises:
for a case that the overlapping result is that the PDSCH time-frequency resource is not overlapped with the SBFD time-frequency resource, and the PDSCH time-frequency resource is not overlapped with the RO time-frequency resource,
in response to determining a UE which is to receive data from the base station is in full-duplex TDD mode, determining the data transmission operation corresponding to the target time-frequency resource is:
sending data carried by a target PDSCH at the PDSCH time-frequency resource, and receiving a random access signal carried by the target RO at the RO time-frequency resource; or
in response to determining the UE is in half-duplex TDD mode, determining the data transmission operation corresponding to the target time-frequency resource is:
in response to a condition that a time interval between the target PDSCH and the target RO is greater than an uplink-downlink conversion time being met, sending the data carried by the target PDSCH at the PDSCH time-frequency resource, and receiving the random access signal carried by the target RO at the RO time-frequency resource; and
in response to the condition being not met, only receiving the random access signal at the RO time-frequency resource, and prohibiting sending of the data carried by the target PDSCH at the PDSCH time-frequency resource.

43. The method according to claim 41, wherein determining the data transmission operation corresponding to the target time-frequency resource according to the overlapping result of the SBFD time-frequency resource and the target time-frequency resource comprises:
for a case that the overlapping result is that the PDSCH time-frequency resource is partially overlapped with the SBFD time-frequency resource, and the PDSCH time-frequency resource is not overlapped with the RO time-frequency resource,
in response to determining a UE which is to receive data from the base station is in full-duplex TDD mode, determining the data transmission operation corresponding to the target time-frequency resource is:
performing rate-matching on data carried by a target PDSCH;
sending data obtained after performing the rate-matching at a remaining resource in the PDSCH time-frequency resource that is not overlapped with the SBFD time-frequency resource; and
receiving a random access signal carried by the target RO at the RO time-frequency resource; or
in response to determining the UE is in half-duplex TDD mode, determining the data transmission operation corresponding to the target time-frequency resource is:
in response to a condition that a time interval between the target PDSCH and the target RO is greater than an uplink-downlink conversion time, performing rate-matching on the data carried by the target PDSCH, sending the data obtained after performing the rate-matching at the remaining resource in the PDSCH time-frequency resource that is not overlapped with the SBFD time-frequency resource, and receiving the random access signal carried by the target RO at the RO time-frequency resource, and
in response to the condition being not met, only receiving the random access signal at the RO time-frequency resource, and prohibiting sending of the data carried by the target PDSCH at the PDSCH time-frequency resource.

44. The method according to claim 41, wherein determining the data transmission operation corresponding to the target time-frequency resource according to the overlapping result of the SBFD time-frequency resource and the target time-frequency resource comprises:
for a case that the overlapping result is that the PDSCH time-frequency resource is not overlapped with the SBFD time-frequency resource, and the PDSCH time-frequency resource is partially overlapped with the RO time-frequency resource,
in response to determining a UE which is to receive data from the base station is in full-duplex TDD mode, determining the data transmission operation corresponding to the target time-frequency resource is:
sending data carried by a target PDSCH at the PDSCH time-frequency resource, and receiving a random access signal carried by the target RO at the RO time-frequency resource; or
in response to determining the UE is in half-duplex TDD mode, determining the data transmission operation corresponding to the target time-frequency resource is:
in response to a condition that a time interval between the target PDSCH and the target RO is greater than an uplink-downlink conversion time being met,
performing rate-matching on the data carried by the target PDSCH;
sending data obtained after performing the rate-matching at a remaining resource in the PDSCH time-frequency resource that is not overlapped with the RO time-frequency resource; and
receiving the random access signal carried by the target RO at the RO time-frequency resource, or
in response to the condition being not met, only receiving the random access signal at the RO time-frequency resource, and prohibiting sending of the data carried by the target PDSCH at the PDSCH time-frequency resource.

45. The method according to claim 41, wherein determining the data transmission operation corresponding to the target time-frequency resource according to the overlapping result of the SBFD time-frequency resource and the target time-frequency resource comprises:
for a case that the overlapping result is that the PDSCH time-frequency resource is partially overlapped with the SBFD time-frequency resource, and the PDSCH time-frequency resource is partially overlapped with the RO time-frequency resource,
in response to determining a UE which is to receive data from the base station is in full-duplex TDD mode, determining the data transmission operation corresponding to the target time-frequency resource is:
performing rate-matching on data carried by a target PDSCH;
sending data obtained after performing the rate-matching at a remaining resource in the PDSCH time-frequency resource that is not overlapped with the SBFD time-frequency resource or the RO time-frequency resource, and receiving a random access signal carried by the target RO at the RO time-frequency resource; or
in response to determining the UE is in half-duplex TDD mode, determining the data transmission operation corresponding to the target time-frequency resource is:
in response to a condition that a time interval between the target PDSCH and the target RO is greater than an uplink-downlink conversion time,
performing rate-matching on the data carried by the target PDSCH;
sending data obtained after performing the rate-matching at the remaining resource in the PDSCH time-frequency resource that is not overlapped with the RO time-frequency resource or the SBFD time-frequency resource; and
receiving the random access signal carried by the target RO at the RO time-frequency resource, or
in response to the condition being not met, receiving the random access signal carried by the target RO at the RO time-frequency resource, and prohibiting sending of the data carried by the target PDSCH at the PDSCH time-frequency resource.

46. The method according to claims 36 or 37, wherein the target time-frequency resource includes: a Random Access Channel Opportunity, RO, time-frequency resource corresponding to a target RO, and a Physical Downlink Control Channel, PDCCH, time-frequency resource corresponding to a PDCCH;
the target RO is any one of at least one RO configured for the target slot;
the RO time-frequency resource is located within the SBFD time-frequency resource.

47. The method according to claim 46, wherein determining the data transmission operation corresponding to the target time-frequency resource according to the overlapping result of the SBFD time-frequency resource and the target time-frequency resource comprises:
for a case that the overlapping result is that the PDCCH time-frequency resource is not overlapped with the SBFD time-frequency resource, and the PDCCH time-frequency resource is not overlapped with the RO time-frequency resource,
in response to determining that a UE which is to receive data from the base station is in full-duplex TDD mode, determining the data transmission operation corresponding to the target time-frequency resource is:
sending data carried by a target PDCCH at the PDCCH time-frequency resource, and receiving a random access signal carried by the target RO at the RO time-frequency resource;
in response to determining that the UE is in half-duplex TDD mode, determining the data transmission operation corresponding to the target time-frequency resource is:
in response to a condition that a time interval between the target PDCCH and the target RO is greater than an uplink-downlink conversion time being met, sending the data carried by the target PDCCH at the PDCCH time-frequency resource, and receiving the random access signal carried by the target RO at the RO time-frequency resource, and
in response to the condition being not met, only receiving the random access signal at the RO time-frequency resource, prohibiting sending of the data carried by the target PDCCH at the PDCCH time-frequency resource.

48. The method according to claim 46, wherein determining the data transmission operation corresponding to the target time-frequency resource according to the overlapping result of the SBFD time-frequency resource and the target time-frequency resource comprises:
for a case that the overlapping result is that the PDCCH time-frequency resource is partially overlapped with the SBFD time-frequency resource, and the PDSCH time-frequency resource is not overlapped with the RO time-frequency resource,
in response to determining that a UE which is to receive data from the base station is in full-duplex TDD mode, determining the data transmission operation corresponding to the target time-frequency resource is:
performing rate-matching on data carried by a target PDCCH;
sending data obtained after performing the rate-matching at a remaining resource in the PDCCH time-frequency resource that is not overlapped with the SBFD time-frequency resource, and receiving a random access signal carried by the target RO at the RO time-frequency resource; or
in response to determining that the UE is in half-duplex TDD mode, determining the data transmission operation corresponding to the target time-frequency resource is:
in response to a condition that a time interval between the target PDCCH and the target RO is greater than an uplink-downlink conversion time being met, performing rate-matching on the data carried by the target PDCCH, sending the data obtained after performing the rate-matching at the remaining resource in the PDCCH time-frequency resource that is not overlapped with the SBFD time-frequency resource, and receiving the random access signal carried by the target RO at the RO time-frequency resource, and
in response to the condition being not met, only receiving the random access signal at the RO time-frequency resource, and prohibiting sending of the data carried by the target PDCCH at the PDCCH time-frequency resource.

49. The method according to claim 46, wherein determining the data transmission operation corresponding to the target time-frequency resource according to the overlapping result of the SBFD time-frequency resource and the target time-frequency resource comprises:
for a case that the overlapping result is that the PDCCH time-frequency resource is not overlapped with the SBFD time-frequency resource, and the PDCCH time-frequency resource is partially overlapped with the RO time-frequency resource, but a start point of PDCCH reception is earlier than a start point of target RO transmission,
in response to determining that a UE which is to receive data from the base station is in full-duplex TDD mode, determining the data transmission operation corresponding to the target time-frequency resource is:
sending data carried by a target PDCCH at the PDCCH time-frequency resource, and receiving a random access signal carried by the target RO at the RO time-frequency resource; or
in response to determining that the UE which is to receive data from the base station is in half-duplex TDD mode, determining the data transmission operation corresponding to the target time-frequency resource is:
in response to a condition that a time interval between the target PDSCH and the target RO is greater than an uplink-downlink conversion time being met,
performing rate-matching on the data carried by the target PDCCH;
sending data obtained after performing the rate-matching at a remaining resource in the PDCCH time-frequency resource that is not overlapped with the RO time-frequency resource; and
receiving the random access signal carried by the target RO at the RO time-frequency resource; or
in response to the condition being not met, only receiving the random access signal carried by the target RO at the RO time-frequency resource, and prohibiting sending of the data carried by the target PDCCH at the PDCCH time-frequency resource.

50. The method according to claim 46, wherein determining the data transmission operation corresponding to the target time-frequency resource according to the overlapping result of the SBFD time-frequency resource and the target time-frequency resource comprises:
for a case that the overlapping result is that the PDCCH time-frequency resource is partially overlapped with the SBFD time-frequency resource, and the PDCCH time-frequency resource is partially overlapped with the RO time-frequency resource, but a start point of PDCCH reception is earlier than a start point of target RO transmission,
in response to determining that a UE which is to receive data from the base station is in full-duplex TDD mode, determining the data transmission operation corresponding to the target time-frequency resource is:
performing rate-matching on data carried by a target PDCCH;
sending data obtained after performing the rate-matching at a remaining resource in the PDCCH time-frequency resource that is not overlapped with the SBFD time-frequency resource or the RO time-frequency resource, and receiving a random access signal carried by the target RO at the RO time-frequency resource; or
in response to determining the UE is in half-duplex TDD mode, determining the data transmission operation corresponding to the target time-frequency resource is:
in response to a condition that a time interval between the target PDCCH and the target RO is greater than an uplink-downlink conversion time being met,
performing rate-matching on the data carried by the target PDCCH;
sending the data obtained after performing rate-matching at the remaining resource in the PDCCH time-frequency resource that is not overlapped with the RO time-frequency resource or the SBFD time-frequency resource; and
receiving the random access signal carried by the target RO at the RO time-frequency resource; or
in response to the condition being not met, only receiving the random access signal carried by the target RO at the RO time-frequency resource, and prohibiting sending of the data carried by the target PDCCH at the PDCCH time-frequency resource.

51. The method according to any one of claims 36 to 50, wherein the target RO is an MsgA RO.

52. The method according to claim 36 or 37, wherein the target time-frequency resource includes: an MsgA Random Access Channel Opportunity, RO, time-frequency resource corresponding to a target MsgA RO used for sending a random access message MsgA and an MsgA Physical Uplink Shared Channel, PUSCH, time-frequency resource corresponding to a target MsgA PUSCH associated with the target MsgA RO;
the target MsgA RO and the target MsgA PUSCH satisfy:
the target MsgA PUSCH is configured in a slot allocated with an SBFD time-frequency resource, and the target MsgA RO associated with the target MsgA PUSCH is configured in a slot not allocated with an SBFD time-frequency resource; or
the target MsgA PUSCH is configured in a slot allocated with an SBFD time-frequency resource, and the target MsgA RO associated with the target MsgA PUSCH is configured in a slot allocated with an SBFD time-frequency resource; the MsgA PUSCH and the MsgA RO correspond to different slots; or
the target MsgA PUSCH is configured in a slot not allocated with an SBFD time-frequency resource, and the target MsgA RO associated with the target MsgA PUSCH is configured in a slot allocated with an SBFD time-frequency resource.

53. The method according to claim 52, wherein the MsgA PUSCH time-frequency resource is located within the SBFD time-frequency resource; the target time-frequency resource further includes a Synchronization Signal Block, SSB, time-frequency resource corresponding to an SSB;
wherein determining the data transmission operation corresponding to the target time-frequency resource according to the overlapping result of the SBFD time-frequency resource and the target time-frequency resource comprises:
for a case that the overlapping result is that the SSB time-frequency resource is overlapped or is not overlapped with the SBFD time-frequency resource, and the SSB time-frequency resource is not overlapped with the MsgA PUSCH time-frequency resource,
in response to determining that a UE which is to receive data from the base station is in full-duplex TDD mode, determining the data transmission operation corresponding to the target time-frequency resource is:
sending data carried by the SSB at the SSB time-frequency resource, and receiving data carried by the target MsgA PUSCH at the MsgA PUSCH time-frequency resource; or
in response to determining the UE is in half-duplex TDD mode, determining the data transmission operation corresponding to the target time-frequency resource is:
in response to a condition that a time interval between the SSB and the target MsgA PUSCH is greater than an uplink-downlink conversion time being met, sending the data carried by the SSB at the SSB time-frequency resource, and receiving the data carried by the target MsgA PUSCH at the MsgA PUSCH time-frequency resource; and
in response to the condition being not met, prohibiting a reception of the data carried by the MsgA PUSCH at the MsgA PUSCH time-frequency resource, and only sending the data carried by the SSB at the SSB time-frequency resource.

54. The method according to claim 52, wherein the MsgA PUSCH time-frequency resource is located within the SBFD time-frequency resource; the target time-frequency resource further includes a Synchronization Signal Block, SSB, time-frequency resource corresponding to an SSB;
wherein determining the data transmission operation corresponding to the target time-frequency resource according to the overlapping result of the SBFD time-frequency resource and the target time-frequency resource comprises:
for a case that the overlapping result is that the SSB time-frequency resource is overlapped or is not overlapped with the SBFD time-frequency resource, and the SSB time-frequency resource is partially overlapped with the MsgA PUSCH time-frequency resource, determining the data transmission operation corresponding to the target time-frequency resource is:
prohibiting a reception of data carried by the target MsgA PUSCH at the MsgA PUSCH time-frequency resource; or
at a remaining resource in the MsgA PUSCH time-frequency resource that is not overlapped with the SBFD time-frequency resource, receiving a part of data associated with the remaining resource in the data carried by the target MsgA PUSCH.

55. The method according to claim 52, wherein the MsgA PUSCH time-frequency resource is located within the SBFD time-frequency resource; the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
for a case that the overlapping result is that the PDCCH time-frequency resource is not overlapped with the SBFD time-frequency resource, and the PDCCH time-frequency resource is not overlapped with the MsgA PUSCH time-frequency resource,
in response to determining that a UE which is to receive data from the base station is in full-duplex TDD mode, determining the data transmission operation corresponding to the target time-frequency resource is:
sending data carried by a PDCCH at the PDCCH time-frequency resource, and receiving data carried by the target MsgA PUSCH at the MsgA PUSCH time-frequency resource;
in response to determining that the UE is in half-duplex TDD mode, determining the data transmission operation corresponding to the target time-frequency resource is:
in response to a condition that a time interval between a target PDCCH and the target MsgA PUSCH is greater than an uplink-downlink conversion time being met, sending the data carried by the target PDCCH at the PDCCH time-frequency resource, and receiving the data carried by the target MsgA PUSCH at the MsgA PUSCH time-frequency resource, and
in response to the condition being not met, only receiving the data carried by the target MsgA PUSCH at the MsgA PUSCH time-frequency resource, and prohibiting sending of the data carried by the PDCCH at the PDCCH time-frequency resource.

56. The method according to claim 52, wherein the MsgA PUSCH time-frequency resource is located within the SBFD time-frequency resource; the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
if the overlapping result is that the PDCCH time-frequency resource is not overlapped with the SBFD time-frequency resource, and the PDCCH time-frequency resource is partially overlapped with the MsgA PUSCH time-frequency resource, but a start point of PDCCH reception is later than a startpoint of target MsgA PUSCH transmission;
in response to determining that a UE which is to receive data from the base station is in full-duplex TDD mode, determining the data transmission operation corresponding to the target time-frequency resource is:
sending data carried by a target PDCCH at the PDCCH time-frequency resource, and receiving a random access signal carried by the target RO at the RO time-frequency resource; or
in response to determining that the UE which is to receive data from the base station is in half-duplex TDD mode, determining the data transmission operation corresponding to the target time-frequency resource is:
in response to a condition that a time interval between the target PDCCH and the target RO is greater than an uplink-downlink conversion time being met,
performing rate-matching on the data carried by the target PDCCH;
sending data obtained after performing the rate-matching at a remaining resource in the PDCCH time-frequency resource that is not overlapped with the MsgA PUSCH time-frequency resource; and
receiving data carried by the target MsgA PUSCH at the MsgA PUSCH time-frequency resource; or
in response to the condition being not met, only receiving the data carried by the target MsgA PUSCH at the MsgA PUSCH time-frequency resource, and prohibiting receiving of the data carried by the target PDCCH at the PDCCH time-frequency resource.

57. The method according to claim 52, wherein the MsgA PUSCH time-frequency resource is located within the SBFD time-frequency resource; the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
for a case that the overlapping result is that the PDCCH time-frequency resource is partially overlapped with the SBFD time-frequency resource, and the PDCCH time-frequency resource is not overlapped with the MsgA PUSCH time-frequency resource,
in response to determining that a UE which is to receive data from the base station is in full-duplex TDD mode, determining the data transmission operation corresponding to the target time-frequency resource is:
performing rate-matching on data carried by a target PDCCH;
sending data obtained after performing the rate-matching at a remaining resource in the PDCCH time-frequency resource that is not overlapped with the SBFD time-frequency resource, and receiving data carried by the target MsgA PUSCH at the MsgA PUSCH time-frequency resource; or
in response to determining that the UE is in half-duplex TDD mode, determining the data transmission operation corresponding to the target time-frequency resource is:
in response to a condition that a time interval between the target PDCCH and the target MsgA PUSCH is greater than an uplink-downlink conversion time being met, performing rate-matching on the data carried by the target PDCCH, sending the data carried by the target PDCCH at the remaining resource in the PDCCH time-frequency resource that is not overlapped with the SBFD time-frequency resource, and receiving the data carried by the target MsgA PUSCH at the MsgA PUSCH time-frequency resource, and
in response to the condition being not met, only receiving the data carried by the target MsgA PUSCH at the MsgA PUSCH time-frequency resource, and prohibiting sending of the data carried by the target PDCCH at the PDCCH time-frequency resource.

58. The method according to claim 52, wherein the MsgA PUSCH time-frequency resource is located within the SBFD time-frequency resource; the target time-frequency resource further includes a Physical Downlink Control Channel, PDCCH, time-frequency resource corresponding to a PDCCH;
wherein determining the data transmission operation corresponding to the target time-frequency resource according to the overlapping result of the SBFD time-frequency resource and the target time-frequency resource comprises:
for a case that the overlapping result is that the PDCCH time-frequency resource is partially overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission,
in response to determining that a UE which is to receive data from the base station is in full-duplex TDD mode, determining the data transmission operation corresponding to the target time-frequency resource is:
performing rate-matching on data carried by a target PDCCH;
sending data obtained after performing the rate-matching at a remaining resource in the PDCCH time-frequency resource that is not overlapped with the SBFD time-frequency resource or the RO time-frequency resource, and receiving a random access signal carried by the target RO at the RO time-frequency resource; or
in response to determining that the UE is in half-duplex TDD mode, determining the data transmission operation corresponding to the target time-frequency resource is:
in response to a condition that a time interval between the target PDCCH and the target RO is greater than an uplink-downlink conversion time being met,
performing rate-matching on the data carried by the target PDCCH;
sending the data obtained after performing the rate-matching at the remaining resource of the PDCCH time-frequency resource that is not overlapped with the MsgA PUSCH time-frequency resource or the SBFD time-frequency resource, and
receiving data carried by the target MsgA PUSCH at the MsgA PUSCH time-frequency resource; or
in response to the condition being not met, only receiving the data carried by the target MsgA PUSCH at the MsgA PUSCH time-frequency resource, and prohibiting receiving of the data carried by the target PDCCH at the PDCCH time-frequency resource.

59. The method according to claim 52, wherein the MsgA PUSCH time-frequency resource is located within the SBFD time-frequency resource; the target time-frequency resource further includes a Physical Downlink Shared Channel, PDSCH, time-frequency resource corresponding to a PDSCH;
wherein determining the data transmission operation corresponding to the target time-frequency resource according to the overlapping result of the SBFD time-frequency resource and the target time-frequency resource comprises:
for a case that the overlapping result is that the PDSCH time-frequency resource is not overlapped with the SBFD time-frequency resource, and the PDSCH time-frequency resource is not overlapped with the MsgA PUSCH time-frequency resource,
in response to determining that a UE which is to receive data from the base station is in full-duplex TDD mode, determining the data transmission operation corresponding to the target time-frequency resource is:
sending data carried by a target PDSCH at the PDSCH time-frequency resource, and receiving data carried by the target MsgA PUSCH at the MsgA PUSCH time-frequency resource; or
in response to determining that the UE is in half-duplex TDD mode, determining the data transmission operation corresponding to the target time-frequency resource is:
in response to a condition that a time interval between the target PDSCH and the target MsgA PUSCH is greater than an uplink-downlink conversion time being met, sending the data carried by the target PDSCH at the PDSCH time-frequency resource, and receiving the data carried by the target MsgA PUSCH at the MsgA PUSCH time-frequency resource; and
in response to the condition being not met, only receiving the data carried by the target MsgA PUSCH at the MsgA PUSCH time-frequency resource, and prohibiting sending of the data carried by the target PDSCH at the PDSCH time-frequency resource.

60. The method according to claim 52, wherein the MsgA PUSCH time-frequency resource is located within the SBFD time-frequency resource; the target time-frequency resource further includes a Physical Downlink Shared Channel, PDSCH, time-frequency resource corresponding to a PDSCH;
wherein determining the data transmission operation corresponding to the target time-frequency resource according to the overlapping result of the SBFD time-frequency resource and the target time-frequency resource comprises:
for a case that the overlapping result is that the PDSCH time-frequency resource is not overlapped with the SBFD time-frequency resource, and the PDSCH time-frequency resource is partially overlapped with the MsgA PUSCH time-frequency resource,
in response to determining that a UE which is to receive data from the base station is in full-duplex TDD mode, determining the data transmission operation corresponding to the target time-frequency resource is:
sending data carried by a target PDSCH at the PDSCH time-frequency resource, and receiving data carried by the target MsgA PUSCH at the MsgA PUSCH time-frequency resource; or
in response to determining that the UE is in half-duplex TDD mode, determining the data transmission operation corresponding to the target time-frequency resource is:
in response to a condition that a time interval between the target PDSCH and the target MsgA PUSCH is greater than an uplink-downlink conversion time being met,
performing rate-matching on the data carried by the target PDSCH;
sending data obtained after performing the rate-matching at a remaining resource in the PDSCH time-frequency resource that is not overlapped with the MsgA PUSCH time-frequency resource; and
receiving the data carried by the target MsgA PUSCH at the MsgA PUSCH time-frequency resource, or
in response to the condition being not met, only receiving the data carried by the target MsgA PUSCH at the MsgA PUSCH time-frequency resource, and prohibiting sending of the data carried by the target PDSCH at the PDSCH time-frequency resource.

61. The method according to claim 52, wherein the MsgA PUSCH time-frequency resource is located within the SBFD time-frequency resource; the target time-frequency resource further includes a Physical Downlink Shared Channel, PDSCH, time-frequency resource corresponding to a PDSCH;
wherein determining the data transmission operation corresponding to the target time-frequency resource according to the overlapping result of the SBFD time-frequency resource and the target time-frequency resource comprises:
for a case that the overlapping result is that the PDSCH time-frequency resource is partially overlapped with the SBFD time-frequency resource, and the PDSCH time-frequency resource is partially overlapped with the MsgA PUSCH time-frequency resource,
in response to determining that a UE which is to receive data from the base station is in full-duplex TDD mode, determining the data transmission operation corresponding to the target time-frequency resource is:
performing rate-matching on data carried by a target PDSCH;
sending data obtained after performing the rate-matching at a remaining resource in the PDSCH time-frequency resource that is not overlapped with the SBFD time-frequency resource or the MsgA PUSCH time-frequency resource, and receiving data carried by the target MsgA PUSCH at the MsgA PUSCH time-frequency resource; or
in response to determining that the UE is in half-duplex TDD mode, determining the data transmission operation corresponding to the target time-frequency resource is:
in response to a condition that a time interval between the target PDSCH and the target MsgA PUSCH is greater than an uplink-downlink conversion time being met,
performing rate-matching on the data carried by the target PDSCH;
sending the data obtained after performing the rate-matching at the remaining resource in the PDSCH time-frequency resource that is not overlapped with the MsgA PUSCH time-frequency resource or the SBFD time-frequency resource, and
receiving the data carried by the target MsgA PUSCH at the MsgA PUSCH time-frequency resource; or
in response to the condition being not met, only receiving the data carried by the target MsgA PUSCH at the MsgA PUSCH time-frequency resource, and prohibiting sending of the data carried by the target PDSCH at the PDSCH time-frequency resource.

62. The method according to claim 52, wherein the MsgA PUSCH time-frequency resource is located within the SBFD time-frequency resource; the target time-frequency resource further includes a Physical Downlink Shared Channel, PDSCH, time-frequency resource corresponding to a PDSCH;
wherein determining the data transmission operation corresponding to the target time-frequency resource according to the overlapping result of the SBFD time-frequency resource and the target time-frequency resource comprises:
for a case that the overlapping result is that the PDSCH time-frequency resource is partially overlapped with the SBFD time-frequency resource, and the PDSCH time-frequency resource is not overlapped with the MsgA PUSCH time-frequency resource,
in response to determining that a UE which is to receive data from the base station is in full-duplex TDD mode, determining the data transmission operation corresponding to the target time-frequency resource is:
performing rate-matching on data carried by a target PDSCH;
sending data obtained after performing the rate-matching at a remaining resource in the PDSCH time-frequency resource that is not overlapped with the SBFD time-frequency resource, and receiving data carried by the target MsgA PUSCH at the MsgA PUSCH time-frequency resource; or
in response to determining that the UE is in half-duplex TDD mode, determining the data transmission operation corresponding to the target time-frequency resource is:
in response to a condition that a time interval between the target PDSCH and the target MsgA PUSCH is greater than an uplink-downlink conversion time being met, performing rate-matching on the data carried by the target PDSCH, sending the data obtained after performing the rate-matching at the remaining resource in the PDSCH time-frequency resource that is not overlapped with the SBFD time-frequency resource, and receiving the data carried by the target MsgA PUSCH at the MsgA PUSCH time-frequency resource; and
in response to the condition being not met, only receiving the data carried by the target MsgA PUSCH at the MsgA PUSCH time-frequency resource, and prohibiting sending of the data carried by the target PDSCH at the PDSCH time-frequency resource.

63. The method according to any one of claims 52 to 62, the method further includes: in response to the target MsgA RO being invalid, prohibiting a detection of an MsgA RO at the MsgA RO time-frequency resource, and prohibiting a reception of data carried by a target MsgA PUSCH associated with the target MsgA RO at the MsgA PUSCH time-frequency resource corresponding to the target MsgA PUSCH; or
prohibiting a detection of an MsgA PUSCH at the MsgA PUSCH time-frequency resource corresponding to the target MsgA PUSCH, but receiving a random access signal at the MsgA RO time-frequency resource.

64. The method according to any one of 38 to 63, wherein,
the target RO or the target MsgA RO belongs to an exclusive RO group configured for SBFD mode; and/or,
a random access signal carried by the target RO or the target MsgA RO is an exclusive random access signal configured for SBFD mode or a conventional random access signal specified by the protocol.

65. The method according to claim 36, wherein the method further includes:
sending the configuration information of the SBFD time-frequency resource to the UE by carrying the configuration information in a broadcast signaling; or
sending the configuration information of the SBFD time-frequency resource to the UE by carrying the configuration information in Downlink Control Information, DCI.

66. A data transmission apparatus, wherein the apparatus is applied to User Equipment, UE, that supports Sub-Band Full-Duplex, SBFD, mode, and the apparatus comprises:
a first determining module, configured to determine an SBFD time-frequency resource corresponding to a target slot and a target time-frequency resource associated with the target slot based on configuration information sent by a base station;
a second determination module, configured to determine a data transmission operation corresponding to the target time-frequency resource according to an overlapping result of the SBFD time-frequency resource and the target time-frequency resource;
an executing module, configured to perform the determined data transmission operation in the target slot.

67. The apparatus according to claim 66, wherein the target slot is an uplink, UL, slot, a downlink, DL, slot, or a special slot; the SBFD time-frequency resource occupies at least one symbol of the target slot in time domain, and occupies at least one physical resource block for each of the at least one symbol in frequency domain.

68. The apparatus according to claim 66 or 67, wherein, in case that the UE accesses a network through a 4-step random access procedure, the target time-frequency resource includes: an Random Access Channel Opportunity, RO, time-frequency resource corresponding to a target RO, wherein the target RO is any one of at least one RO configured for the target slot.

69. The apparatus according to claim 68, wherein the second determining module, when determining the data transmission operation corresponding to the target time-frequency resource according to the overlapping result of the SBFD time-frequency resource and the target time-frequency resource, is configured to: for a case that the overlapping result is that the RO time-frequency resource is located within the SBFD time-frequency resource,
in response to that one or more symbols corresponding to the SBFD time-frequency resource are UL symbols or flexible, F, symbols, determine that the data transmission operation corresponding to the target time-frequency resource is: sending a random access signal carried by the target RO at the RO time-frequency resource;
in response to that the symbols corresponding to the SBFD time-frequency resource are DL symbols, determine that the data transmission operation corresponding to the target time-frequency resource is: prohibiting sending of the random access signal.

70. The apparatus according to claim 68, wherein the second determining module, when determining the data transmission operation corresponding to the target time-frequency resource according to the overlapping result of the SBFD time-frequency resource and the target time-frequency resource, is configured to: for a case that the overlapping result is that the RO time-frequency resource is partially overlapped with the SBFD time-frequency resource,
in response to that one or more symbols corresponding to the SBFD time-frequency resource are UL symbols or flexible, F, symbols, determine the data transmission operation corresponding to the target time-frequency resource is:
prohibiting sending of a random access signal carried by the target RO; or
at an overlapping resource in the SBFD time-frequency resource that is overlapped with the RO time-frequency resource, sending a part corresponding to the overlapping resource in the random access signal; or
in response to that the symbols corresponding to the SBFD time-frequency resource are DL symbols, determine that the data transmission operation corresponding to the target time-frequency resource is:
prohibiting sending of the random access signal.

71. The apparatus according to claim 66, wherein the target time-frequency resource includes: an Random Access Channel Opportunity, RO, time-frequency resource corresponding to a target RO, and a Synchronization Signal Block, SSB, time-frequency resource corresponding to an SSB;
the target RO is any one of at least one RO configured for the target slot;
the RO time-frequency resource is located within the SBFD time-frequency resource.

72. The apparatus according to claim 71, wherein the second determining module, when determining the data transmission operation corresponding to the target time-frequency resource according to the overlapping result of the SBFD time-frequency resource and the target time-frequency resource, is configured to:
for a case that the overlapping result is that the SSB time-frequency resource is overlapped or not overlapped with the SBFD time-frequency resource, and the SSB time-frequency resource is partially overlapped with the RO time-frequency resource, determine that the data transmission operation corresponding to the target time-frequency resource is:
only receiving data carried by the SSB at the SSB time-frequency resource and prohibiting sending of a random access signal carried by the target RO at the RO time-frequency resource; or
receiving the data carried by the SSB at the SSB time-frequency resource, and at a remaining resource in the RO time-frequency resource, sending a part associated with the remaining resource in the random access signal; wherein the remaining resource is a portion in the RO time-frequency resource which is not overlapped with the SSB time-frequency resource.

73. The apparatus according to claim 71, wherein the second determining module, when determining the data transmission operation corresponding to the target time-frequency resource according to the overlapping result of the SBFD time-frequency resource and the target time-frequency resource, is configured to:
for a case that the overlapping result is that the SSB time-frequency resource is overlapped or not overlapped with the SBFD time-frequency resource, and the SSB time-frequency resource is not overlapped with the RO time-frequency resource,
in response to that the UE is in full-duplex TDD mode, determine the data transmission operation corresponding to the target time-frequency resource is:
receiving data carried by the SSB at the SSB time-frequency resource, and sending a random access signal carried by the target RO at the RO time-frequency resource; or
in response to that the UE is in half-duplex TDD mode, determine the data transmission operation corresponding to the target time-frequency resource is:
in response to a condition that a time interval between the SSB and the target RO is greater than an uplink-downlink conversion time being met, receiving data carried by the SSB at the SSB time-frequency resource, and sending the random access signal carried by the target RO at the RO time-frequency resource; and
in response to the condition being not met, prohibiting sending of the random access signal at the RO time-frequency resource, only receiving the data carried by the SSB at the SSB time-frequency resource.

74. The apparatus according to claim 66, wherein the target time-frequency resource includes an Random Access Channel Opportunity, RO, time-frequency resource corresponding to a target RO and a Physical Downlink Shared Channel, PDSCH, time-frequency resource corresponding to a PDSCH;
the target RO is any one of at least one RO configured for the target slot;
the RO time-frequency resource is located within the SBFD time-frequency resource.

75. The apparatus according to claim 74, wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is not overlapped with the SBFD time-frequency resource, and the PDSCH time-frequency resource is not overlapped with the RO time-frequency resource,
in response to that the UE is in full-duplex TDD mode, determine the data transmission operation corresponding to the target time-frequency resource is:
receiving data carried by a target PDSCH at the PDSCH time-frequency resource, and sending a random access signal carried by the target RO at the RO time-frequency resource;
in response to that the UE is in half-duplex TDD mode, determine the data transmission operation corresponding to the target time-frequency resource is:
in response to a condition that a time interval between the target PDSCH and the target RO is greater than an uplink-downlink conversion time being met, receiving the data carried by the target PDSCH at the PDSCH time-frequency resource, and sending the random access signal carried by the target RO at the RO time-frequency resource; and
in response to the condition being not met, only sending the random access signal at the RO time-frequency resource, prohibiting a reception of the data carried by the target PDSCH at the PDSCH time-frequency resource.

76. The apparatus according to claim 74, wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is partially overlapped with the SBFD time-frequency resource, and the PDSCH time-frequency resource is not overlapped with the RO time-frequency resource,
in response to that the UE is in full-duplex TDD mode, determine the data transmission operation corresponding to the target time-frequency resource is:
at a remaining resource in the PDSCH time-frequency resource that is not overlapped with the SBFD time-frequency resource, receiving a part of data associated with the remaining resource in data carried by a target PDSCH, and sending a random access signal carried by the target RO at the RO time-frequency resource;
in response to that the UE is in half-duplex TDD mode, determine that the data transmission operation corresponding to the target time-frequency resource is:
in response to a condition that a time interval between the target PDSCH and the target RO is greater than an uplink-downlink conversion time being met, at the remaining resource in the PDSCH time-frequency resource that is not overlapped with the SBFD time-frequency resource, receiving the part of data associated with the remaining resource in the data carried by the target PDSCH, and sending the random access signal carried by the target RO at the RO time-frequency resource; and
in response to the condition being not met, only sending the random access signal at the RO time-frequency resource and prohibiting a reception of the data carried by the target PDSCH at the PDSCH time-frequency resource.

77. The apparatus according to claim 74, wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is not overlapped with the SBFD time-frequency resource, and the PDSCH time-frequency resource is partially overlapped with the RO time-frequency resource,
in response to that the UE is in full-duplex TDD mode, determine the data transmission operation corresponding to the target time-frequency resource is:
receiving data carried by a target PDSCH at the PDSCH time-frequency resource, and sending a random access signal carried by the target RO at the RO time-frequency resource;
in response to that the UE is in half-duplex TDD mode, determine the data transmission operation corresponding to the target time-frequency resource is:
in response to a condition that a time interval between the target PDSCH and the target RO is greater than an uplink-downlink conversion time being met, sending the random access signal carried by the target RO at the RO time-frequency resource and at a remaining resource in the PDSCH time-frequency resource that is not overlapped with the RO time-frequency resource, receiving a part of data associated with the remaining resource in data carried by the target PDSCH; or
in response to the condition being not met, only sending the random access signal carried by the target RO at the RO time-frequency resource, and prohibiting a reception of the data carried by the target PDSCH at the PDSCH time-frequency resource.

78. The apparatus according to claim 74, wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is partially overlapped with the SBFD time-frequency resource, and the PDSCH time-frequency resource is partially overlapped with the RO time-frequency resource,
in response to that the UE is in full-duplex TDD mode, determine the data transmission operation corresponding to the target time-frequency resource is:
at a remaining resource in the PDSCH time-frequency resource which is not overlapped with the SBFD time-frequency resource or the RO time-frequency resource, receiving data associated with the remaining resource in data carried by the target PDSCH, and sending a random access signal carried by the target RO at the RO time-frequency resource;
in response to that the UE is in half-duplex TDD mode, determine that the data transmission operation corresponding to the target time-frequency resource is:
in response to a condition that the time interval between the target PDSCH and the target RO is greater than an uplink-downlink conversion time being met, sending the random access signal carried by the target RO at the RO time-frequency resource, and at the remaining resource in the PDSCH time-frequency resource which is not overlapped with the SBFD time-frequency resource or the RO time-frequency resource, receiving a part of data associated with the remaining resource in the data carried by the target PDSCH; or
in response to the condition being not met, sending the random access signal carried by the target RO at the RO time-frequency resource, and prohibiting a reception of the data carried by the target PDSCH at the PDSCH time-frequency resource.

79. The apparatus according to claim 66, wherein the target time-frequency resource includes a Random Access Channel Opportunity, RO, time-frequency resource corresponding to a target RO, and a Physical Downlink Control Channel, PDCCH, time-frequency resource corresponding to a PDCCH;
the target RO is any one of at least one RO configured for the target slot;
the RO time-frequency resource is located within the SBFD time-frequency resource.

80. The apparatus according to claim 79, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is not overlapped with the SBFD time-frequency resource, and the PDCCH time-frequency resource is not overlapped with the RO time-frequency resource,
in response to that the UE is in full-duplex TDD mode, determine that the data transmission operation corresponding to the target time-frequency resource is:
receiving data carried by a target PDCCH at the PDCCH time-frequency resource, and sending a random access signal carried by the target RO at the RO time-frequency resource;
in response to that that the UE is in half-duplex TDD mode, determine that the data transmission operation corresponding to the target time-frequency resource is:
in response to a condition that a time interval between the target PDCCH and the target RO is greater than an uplink-downlink conversion time being met, receiving the data carried by the target PDCCH at the PDCCH time-frequency resource, and sending the random access signal carried by the target RO at the RO time-frequency resource, and
in response to the condition being not met, only sending the random access signal at the RO time-frequency resource, and prohibiting a reception of the data carried by the target PDCCH at the PDCCH time-frequency resource.

81. The apparatus according to claim 79, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is partially overlapped with the SBFD time-frequency resource, and the PDCCH time-frequency resource is not overlapped with the RO time-frequency resource,
in response to that the UE is in full-duplex TDD mode, determine the data transmission operation corresponding to the target time-frequency resource is:
at a remaining resource in the PDCCH time-frequency resource that is not overlapped with the SBFD time-frequency resource, receiving a part of data associated with the remaining resource in data carried by a target PDCCH, and sending a random access signal carried by the target RO at the RO time-frequency resource;
in response to that the UE is in half-duplex TDD mode, determine the data transmission operation corresponding to the target time-frequency resource is:
in response to a condition that a time interval between the target PDCCH and the target RO is greater than an uplink-downlink conversion time being met, at the remaining resource in the PDCCH time-frequency resource that is not overlapped with the SBFD time-frequency resource, receiving the part of data associated with the remaining resource in the data carried by the target PDCCH, and sending the random access signal carried by the target RO at the RO time-frequency resource; and
in response to the condition being not met, only sending the random access signal at the RO time-frequency resource, and prohibiting a reception of the data carried by the target PDCCH at the PDCCH time-frequency resource.

82. The apparatus according to claim 79, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is not overlapped with the SBFD time-frequency resource, and the PDCCH time-frequency resource is partially overlapped with the RO time-frequency resource, but a start point of PDCCH reception is earlier than a start point of target RO transmission,
in response to that the UE is in full-duplex TDD mode, determine the data transmission operation corresponding to the target time-frequency resource is:
receiving data carried by a target PDCCH at the PDCCH time-frequency resource, and sending a random access signal carried by the target RO at the RO time-frequency resource;
in response to that the UE is in half-duplex TDD mode, determine the data transmission operation corresponding to the target time-frequency resource is:
in response to a condition that a time interval between the target PDCCH and the target RO is greater than an uplink-downlink conversion time being met, sending the random access signal carried by the target RO at the RO time-frequency resource, and at a remaining resource in the target PDCCH time-frequency resource that is not overlapped with the RO time-frequency resource, receiving a part of data associated with the remaining resource in the data carried by the target PDCCH; or
in response to the condition being not met, only sending the random access signal carried by the target RO at the RO time-frequency resource, and prohibiting a reception of the data carried by the target PDCCH at the PDCCH time-frequency resource.

83. The apparatus according to claim 79, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is partially overlapped with the SBFD time-frequency resource, and the PDCCH time-frequency resource is partially overlapped with the RO time-frequency resource, but a start point of PDCCH reception is later than a start point of target RO transmission,
in response to that the UE is in full-duplex TDD mode, determine the data transmission operation corresponding to the target time-frequency resource is:
receiving data carried by a target PDCCH at the PDCCH time-frequency resource, and sending a random access signal carried by the target RO at the RO time-frequency resource;
in response to that the UE is in half-duplex TDD mode, determine the data transmission operation corresponding to the target time-frequency resource is:
in response to a condition that a time interval between the target PDCCH and the target RO is greater than an uplink-downlink conversion time being met, sending the random access signal carried by the target RO at the RO time-frequency resource, and at a remaining resource in the PDCCH time-frequency resource that is not overlapped with the SBFD time-frequency resource or the RO time-frequency resource, receiving a part of data associated with the remaining resource in the data carried by the target PDCCH; or
in response to the condition being not met, only sending the random access signal carried by the target RO at the RO time-frequency resource, and prohibiting a reception of the data carried by the target PDCCH at the PDCCH time-frequency resource.

84. The apparatus according to claim 79, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is overlapped or not overlapped with the SBFD time-frequency resource, and the PDCCH time-frequency resource is partially overlapped with the RO time-frequency resource,
under condition that no random access signal is to be sent, determine the data transmission operation corresponding to the target time-frequency resource is:
ignoring the target RO, and receiving data carried by a target PDCCH at the PDCCH time-frequency resource or prohibiting a reception of the data carried by the target PDCCH at the PDCCH time-frequency resource.

85. The apparatus according to claim 66 or 67, wherein in case where the UE accesses a network through a 2-step random access procedure, the target time-frequency resource includes: an MsgA Random Access Channel Opportunity, RO, time-frequency resource corresponding to a target MsgA RO used for sending a random access message MsgA and an MsgA Physical Uplink Shared Channel, PUSCH, time-frequency resource corresponding to a target MsgA PUSCH associated with the target MsgA RO;
the target MsgA RO and the target MsgA PUSCH satisfy:
the target MsgA PUSCH is configured in a slot allocated with an SBFD time-frequency resource, and the target MsgA RO associated with the target MsgA PUSCH is configured in a slot not allocated with an SBFD time-frequency resource; or
the target MsgA PUSCH is configured in a slot allocated with an SBFD time-frequency resource, the target MsgA RO associated with the target MsgA PUSCH is configured in a slot allocated with an SBFD time-frequency resource; the MsgA PUSCH and the MsgA RO correspond to different slots; or
the target MsgA PUSCH is configured in a slot not allocated with an SBFD time-frequency resource, and the target MsgA RO associated with the target MsgA PUSCH is configured in a slot allocated with an SBFD time-frequency resource.

86. The apparatus according to claim 85, wherein the MsgA PUSCH time-frequency resource is located within the SBFD time-frequency resource, and the target time-frequency resource further includes a Synchronization Signal Block, SSB, time-frequency resource corresponding to an SSB;
wherein the second determining module, when determining the data transmission operation corresponding to the target time-frequency resource according to the overlapping result of the SBFD time-frequency resource and the target time-frequency resource, is configured to:
for a case that the overlapping result is that the SSB time-frequency resource is overlapped or not overlapped with the SBFD time-frequency resource, and the SSB time-frequency resource is not overlapped with the MsgA PUSCH time-frequency resource,
in response to that the UE is in full-duplex TDD mode, determine the data transmission operation corresponding to the target time-frequency resource is:
receiving data carried by the SSB at the SSB time-frequency resource, and sending data carried by the target MsgA PUSCH at the MsgA PUSCH time-frequency resource; or
in response to that the UE is in half-duplex TDD mode, determine the data transmission operation corresponding to the target time-frequency resource is:
in response to a condition that a time interval between the SSB and the target RO is greater than an uplink-downlink conversion time being met, receiving the data carried by the SSB at the SSB time-frequency resource, and sending the data carried by the target MsgA PUSCH at the MsgA PUSCH time-frequency resource; and
in response to the condition being not met, prohibiting sending of the data carried by the target MsgA PUSCH at the MsgA PUSCH time-frequency resource, and only receiving the data carried by the SSB at the SSB time-frequency resource.

87. The apparatus according to claim 85, wherein the MsgA PUSCH time-frequency resource is located within the SBFD time-frequency resource; the target time-frequency resource further includes a Synchronization Signal Block, SSB, time-frequency resource corresponding to an SSB;
wherein the second determining module, when determining the data transmission operation corresponding to the target time-frequency resource according to the overlapping result of the SBFD time-frequency resource and the target time-frequency resource, is configured to:
for a case that the overlapping result is that the SSB time-frequency resource is overlapped or not overlapped with the SBFD time-frequency resource, and the SSB time-frequency resource is partially overlapped with the MsgA PUSCH time-frequency resource, determining the data transmission operation corresponding to the target time-frequency resource is:
prohibiting sending of data carried by the target MsgA PUSCH at the MsgA PUSCH time-frequency resource; or
at a remaining resource in the MsgA PUSCH time-frequency resource that is not overlapped with the SBFD time-frequency resource, sending a part of data associated with the remaining resource in the data carried by the target MsgA PUSCH.

88. The apparatus according to claim 85, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is not overlapped with the SBFD time-frequency resource, and the PDCCH time-frequency resources is not overlapped with the MsgA PUSCH time-frequency resource,
in response to that the UE is in full-duplex TDD mode, determine the data transmission operation corresponding to the target time-frequency resource is:
receiving data carried by the PDCCH at the PDCCH time-frequency resource, and sending data carried by the target MsgA PUSCH at the MsgA PUSCH time-frequency resource;
in response to that the UE is in half-duplex TDD mode, determine the data transmission operation corresponding to the target time-frequency resource is:
in response to a condition that a time interval between the target PDCCH and the target MsgA PUSCH is greater than an uplink-downlink conversion time being met, receiving the data carried by the target PDCCH at the PDCCH time-frequency resource, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDCCH at the PDCCH time-frequency resource.

89. The apparatus according to claim 85, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is not overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission,
in response to that the UE is in full-duplex TDD mode, determine the data transmission operation corresponding to the target time-frequency resource is:
receiving data carried by a target PDCCH at the PDCCH time-frequency resource, and sending data carried by the MsgA PUSCH at the MsgA PUSCH time-frequency resource;
in response to that the UE is in half-duplex TDD mode, determine the data transmission operation corresponding to the target time-frequency resource is:
in response to a condition that a time interval between the target PDCCH and the target MsgA PUSCH is greater than an uplink-downlink conversion time being met, sending data carried by the target MsgA PUSCH at the MsgA PUSCH time-frequency resource, and at a remaining resource in the PDCCH time-frequency resource that is not overlapped with the MsgA PUSCH time-frequency resource, receiving a part of data associated with the remaining resource in the data carried by the target PDCCH; or
in response to the condition being not met, sending the data carried by the target MsgA PUSCH at the MsgA PUSCH time-frequency resource, and prohibiting a reception of the data carried by the target PDCCH at the PDCCH time-frequency resource.

90. The apparatus according to claim 85, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is partially overlapped with the SBFD time-frequency resource, and the PDCCH time-frequency resource is not overlapped with the MsgA PUSCH time-frequency resource,
in response to that the UE is in full-duplex TDD mode, determine the data transmission operation corresponding to the target time-frequency resource is:
at a remaining resource in the PDCCH time-frequency resource that is not overlapped with the SBFD time-frequency resource, receiving a part of data associated with the remaining resource in data carried by a target PDCCH, and sending data carried by the target MsgA PUSCH at the MsgA PUSCH time-frequency resource;
in response to that the UE is in half-duplex TDD mode, determine the data transmission operation corresponding to the target time-frequency resource is:
in response to a condition that a time interval between the target PDCCH and the target MsgA PUSCH is greater than an uplink-downlink conversion time being met, at the remaining resource in the PDCCH time-frequency resource that is not overlapped with the SBFD time-frequency resource, receiving the part of data associated with the remaining resource in the data carried by the target PDCCH, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDCCH at the PDCCH time-frequency resource.

91. The apparatus according to claim 85, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is partially overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission,
in response to that the UE is in full-duplex TDD mode, determine the data transmission operation corresponding to the target time-frequency resource is:
receiving data carried by a target PDCCH at the PDCCH time-frequency resource, and sending data carried by the MsgA PUSCH at the MsgA PUSCH time-frequency resource;
in response to that the UE is in half-duplex TDD mode, determine the data transmission operation corresponding to the target time-frequency resource is:
in response to a condition that a time interval between the target PDCCH and the target MsgA PUSCH is greater than an uplink-downlink conversion time being met, sending the data carried by the target MsgA PUSCH at the MsgA PUSCH time-frequency resource, and at a remaining resource in the PDCCH time-frequency resource that is not overlapped with the SBFD time-frequency resource or the MsgA PUSCH time-frequency resource, receiving a part of data associated with the remaining resource in the data carried by the target PDCCH; or
in response to the condition being not met, sending the data carried by the target MsgA PUSCH at the MsgA PUSCH time-frequency resource, and prohibiting a reception of the data carried by the target PDCCH at the PDCCH time-frequency resource.

92. The apparatus according to claim 85, wherein the MsgA PUSCH time-frequency resource is located within the SBFD time-frequency resource, and the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is overlapped or not overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission, under condition that no random access signal is to be sent, determine the data transmission operation corresponding to the target time-frequency resources is:
ignoring the target MsgA PUSCH, and receiving data carried by a target PDCCH at the PDCCH time-frequency resource.

93. The apparatus according to claim 85, wherein the MsgA PUSCH time-frequency resource is located within the SBFD time-frequency resource, and the target time-frequency resource further includes a Physical Downlink Shared Channel, PDSCH, time-frequency resource corresponding to a PDSCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is not overlapped with the SBFD time-frequency resource, and the PDSCH time-frequency resource is not overlapped with the MsgA PUSCH time-frequency resource,
in response to that the UE is in full-duplex TDD mode, determine the data transmission operation corresponding to the target time-frequency resource is:
receiving data carried by a target PDSCH at the PDSCH time-frequency resource, and sending data carried by the target MsgA PUSCH at the MsgA PUSCH time-frequency resource; or
in response to that the UE is in half-duplex TDD mode, determine the data transmission operation corresponding to the target time-frequency resource is:
in response to a condition that a time interval between the target PDSCH and the target MsgA PUSCH is greater than an uplink-downlink conversion time being met, receiving the data carried by the target PDSCH at the PDSCH time-frequency resource, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDSCH at the PDSCH time-frequency resource.

94. The apparatus according to claim 85, wherein the MsgA PUSCH time-frequency resource is located within the SBFD time-frequency resource, the target time-frequency resource further includes a Physical Downlink Shared Channel, PDSCH, time-frequency resource corresponding to a PDSCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is overlapped with the SBFD time-frequency resource, and the PDSCH time-frequency resource is not overlapped with the MsgA PUSCH time-frequency resource,
in response to that the UE is in full-duplex TDD mode, determine the data transmission operation corresponding to the target time-frequency resource is:
at a remaining resource in the PDSCH time-frequency resource that is not overlapped with the SBFD time-frequency resource, receiving a part of data associated with the remaining resource in data carried by a target PDSCH, and sending data carried by the target MsgA PUSCH at the MsgA PUSCH time-frequency resource; or
in response to that the UE is in half-duplex TDD mode, determine the data transmission operation corresponding to the target time-frequency resource is:
in response to a condition that a time interval between the target PDSCH and the target MsgA PUSCH is greater than an uplink-downlink conversion time being met, at the remaining resource in the PDSCH time-frequency resource that is not overlapped with the SBFD time-frequency resource, receiving the part of data associated with the remaining resource in the data carried by the target PDSCH, and sending the data carried by the target MsgA PUSCH at the MsgA PUSCH time-frequency resource; and
in response to the condition being not met, only sending the data carried by the target MsgA PUSCH at the MsgA PUSCH time-frequency resource, and prohibiting a reception of the data carried by the target PDSCH at the PDSCH time-frequency resource.

95. The apparatus according to claim 85, wherein the MsgA PUSCH time-frequency resource is located within the SBFD time-frequency resource, the target time-frequency resource further includes a Physical Downlink Shared Channel, PDSCH, time-frequency resource corresponding to a PDSCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is not overlapped with the SBFD time-frequency resource, and the PDSCH time-frequency resource is partially overlapped with the MsgA PUSCH time-frequency resource,
in response to that the UE is in full-duplex TDD mode, determine the data transmission operation corresponding to the target time-frequency resource is:
receiving data carried by a target PDCCH at the PDCCH time-frequency resource, and sending data carried by the target MsgA PUSCH at the MsgA PUSCH time-frequency resource;
in response to that the UE is in half-duplex TDD mode, determine the data transmission operation corresponding to the target time-frequency resource is:
in response to a condition that a time interval between the target PDCCH and the target MsgA PUSCH is greater than an uplink-downlink conversion time, sending the data carried by the target MsgA PUSCH at the MsgA PUSCH time-frequency resource, and at a remaining resource in the PDSCH time-frequency resource that is not overlapped with the MsgA PUSCH time-frequency resource, receiving a part of data associated with the remaining resource in the data carried by the target PDSCH; or
in response to the condition being not met, sending the data carried by the target MsgA PUSCH at the MsgA PUSCH time-frequency resource, and prohibiting a reception of the data carried by the target PDSCH at the PDSCH time-frequency resource.

96. The apparatus according to claim 85, wherein the MsgA PUSCH time-frequency resource is located within the SBFD time-frequency resource, and the target time-frequency resource further includes a Physical Downlink Shared Channel, PDSCH, time-frequency resource corresponding to a PDSCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is partially overlapped with the SBFD time-frequency resource, and the PDSCH time-frequency resource is partially overlapped with the MsgA PUSCH time-frequency resource,
in response to that the UE is in full-duplex TDD mode, determine the data transmission operation corresponding to the target time-frequency resource is:
receiving data carried by a target PDSCH at the PDSCH time-frequency resource, and sending data carried by the MsgA PUSCH at the MsgA PUSCH time-frequency resource;
in response to that the UE is in half-duplex TDD mode, determine the data transmission operation corresponding to the target time-frequency resource is:
in response to a condition that a time interval between the target PDSCH and the target MsgA PUSCH is greater than an uplink-downlink conversion time being met, sending data carried by the target MsgA PUSCH at the MsgA PUSCH time-frequency resource, and at a remaining resource in the PDSCH time-frequency resource that is not overlapped with the MsgA PUSCH time-frequency resource or the SBFD time-frequency resource, receiving a part of data associated with the remaining resource in the data carried by the target PDSCH; or
in response to the condition being not met, sending the data carried by the target MsgA PUSCH at the MsgA PUSCH time-frequency resource, and prohibiting a reception of the data carried by the target PDSCH at the PDSCH time-frequency resource.

97. The apparatus according to any one of claims 85 to 96, wherein:
in case that the target MsgA RO is invalid, prohibiting sending data at the MsgA RO time-frequency resource, and prohibiting sending data at the MsgA PUSCH time-frequency resource corresponding to the target MsgA PUSCH associated with the target MsgA RO; or
in case that it is prohibited to send data at the MsgA PUSCH time-frequency resource corresponding to the target MsgA PUSCH, in response to that it is allowed to send data at the MsgA RO time-frequency resource corresponding to the target MsgA RO associated with the target MsgA PUSCH, sending a random access signal at the MsgA RO time-frequency resource.

98. The apparatus according to any one of claims 68 to 97, wherein,
the target RO or the target MsgA RO belongs to an exclusive RO group configured for SBFD mode; and/or,
a random access signal carried by the target RO or the target MsgA RO is an exclusive random access signal configured for SBFD mode or a conventional random access signal specified by a protocol.

99. The apparatus according to claim 66, wherein the configuration information is sent to the UE by being carried in a broadcast signaling or downlink control information, DCI.

100. The apparatus according to any one of claims 66 to 84, wherein the target RO is an MsgA RO.

101. A data transmission apparatus, wherein the apparatus is applied to a base station that supports Sub-Band Full-Duplex, SBFD, mode, and the apparatus comprises:
a first determining module, configured to determine an SBFD time-frequency resource corresponding to a target slot and a target time-frequency resource associated with the target slot;
a second determining module, configured to determine a data transmission operation corresponding to the target time-frequency resource according to an overlapping result of the SBFD time-frequency resource and the target time-frequency resource;
an executing module, configured to perform the determined data transmission operation in the target slot.

102. The apparatus according to claim 66, wherein the target slot is an uplink, UL, slot, a downlink, DL, slot, or a special slot; the SBFD time-frequency resource occupies at least one symbol of the target slot in time domain, and occupies at least one physical resource block for each of the at least one symbol in frequency domain.

103. The apparatus according to claim 101 or 102, wherein the target time-frequency resource includes: an Random Access Channel Opportunity, RO, time-frequency resource corresponding to a target RO, and a Synchronization Signal Block, SSB, time-frequency resource corresponding to an SSB;
the target RO is any one of at least one RO configured for the target slot;
the RO time-frequency resource is located within the SBFD time-frequency resource.

104. The apparatus according to claim 103, wherein the second determining module, when determining the data transmission operation corresponding to the target time-frequency resource according to the overlapping result of the SBFD time-frequency resource and the target time-frequency resource, is configured to:
for a case that the overlapping result is that the SSB time-frequency resource is overlapped or not overlapped with the SBFD time-frequency resource, and the SSB time-frequency resource is partially overlapped with the RO time-frequency resource, determine the data transmission operation corresponding to the target time-frequency resource is:
only sending data carried by the SSB at the SSB time-frequency resource, and prohibiting a detection of a random access signal at the RO time-frequency resource; or
sending the data carried by the SSB at the SSB time-frequency resource, and at a remaining resource in the RO time-frequency resource, receiving a part associated with the remaining resource in the random access signal carried by the target RO; wherein the remaining resource is a portion in the RO time-frequency resource that is not overlapped with the SSB time-frequency resource.

105. The apparatus according to claim 103, wherein the second determining module, when determining the data transmission operation corresponding to the target time-frequency resource according to the overlapping result of the SBFD time-frequency resource and the target time-frequency resource, is configured to:
for a case that the overlapping result is that the SSB time-frequency resource is overlapped or not overlapped with the SBFD time-frequency resource, and the SSB time-frequency resource is not overlapped with the RO time-frequency resource,
in response to determining that a UE which is to receive data from the base station is in full-duplex TDD mode, determine the data transmission operation corresponding to the target time-frequency resource is:
sending data carried by the SSB at the SSB time-frequency resource, and receiving a random access signal carried by the target RO at the RO time-frequency resource; or
in response to determining the UE is in half-duplex TDD mode, determine the data transmission operation corresponding to the target time-frequency resource is:
in response to a condition that a time interval between the SSB and the target RO is greater that an uplink-downlink conversion time being met, sending the data carried by the SSB at the SSB time-frequency resource, and receiving the random access signal carried by the target RO at the RO time-frequency resource, and
in response to the condition being not met, prohibiting a detection of a random access signal at the RO time-frequency resource, and only sending the data carried by the SSB at the SSB time-frequency resource.

106. The apparatus according to claim 101 or 102, wherein the target time-frequency resource includes: a Random Access Channel Opportunity, RO, time-frequency resource corresponding to a target RO, and a Physical Downlink Shared Channel, PDSCH, time-frequency resource corresponding to a PDSCH;
the target RO is any one of at least one RO configured for the target slot;
the RO time-frequency resource is located within the SBFD time-frequency resource.

107. The apparatus according to claim 106, wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is not overlapped with the SBFD time-frequency resource, and the PDSCH time-frequency resource is not overlapped with the RO time-frequency resource,
in response to determining a UE which is to receive data from the base station is in full-duplex TDD mode, determine the data transmission operation corresponding to the target time-frequency resource is: sending data carried by a target PDSCH at the PDSCH time-frequency resource, and receiving a random access signal carried by the target RO at the RO time-frequency resource; or
in response to determining the UE is in half-duplex TDD mode, determine the data transmission operation corresponding to the target time-frequency resource is:
in response to a condition that a time interval between the target PDSCH and the target RO is greater than an uplink-downlink conversion time being met, sending the data carried by the target PDSCH at the PDSCH time-frequency resource, and receiving the random access signal carried by the target RO at the RO time-frequency resource; and
in response to the condition being not met, only receiving the random access signal at the RO time-frequency resource, and prohibiting sending of the data carried by the target PDSCH at the PDSCH time-frequency resource.

108. The apparatus according to claim 106, wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is partially overlapped with the SBFD time-frequency resource, and the PDSCH time-frequency resource is not overlapped with the RO time-frequency resource,
in response to determining a UE which is to receive data from the base station is in full-duplex TDD mode, determine the data transmission operation corresponding to the target time-frequency resource is:
performing rate-matching on data carried by a target PDSCH;
sending data obtained after performing the rate-matching at a remaining resource in the PDSCH time-frequency resource that is not overlapped with the SBFD time-frequency resource; and receiving a random access signal carried by the target RO at the RO time-frequency resource; or
in response to determining the UE is in half-duplex TDD mode, determine the data transmission operation corresponding to the target time-frequency resource is:
in response to a condition that a time interval between the target PDSCH and the target RO is greater than an uplink-downlink conversion time, performing rate-matching on the data carried by the target PDSCH, sending the data obtained after performing the rate-matching at the remaining resource in the PDSCH time-frequency resource that is not overlapped with the SBFD time-frequency resource, and receiving the random access signal carried by the target RO at the RO time-frequency resource, and
in response to the condition being not met, only receiving the random access signal at the RO time-frequency resource, and prohibiting sending of the data carried by the target PDSCH at the PDSCH time-frequency resource.

109. The apparatus according to claim 106, wherein the second determining module, when determining the data transmission operation corresponding to the target time-frequency resource according to the overlapping result of the SBFD time-frequency resource and the target time-frequency resource, is configured to:
for a cast that the overlapping result is that the PDSCH time-frequency resource is not overlapped with the SBFD time-frequency resource, and the PDSCH time-frequency resource is partially overlapped with the RO time-frequency resource,
in response to determining a UE which is to receive data from the base station is in full-duplex TDD mode, determine the data transmission operation corresponding to the target time-frequency resource is:
sending data carried by a target PDSCH at the PDSCH time-frequency resource, and receiving a random access signal carried by the target RO at the RO time-frequency resource; or
in response to determining the UE is in half-duplex TDD mode, determine the data transmission operation corresponding to the target time-frequency resource is:
in response to a condition that a time interval between the target PDSCH and the target RO is greater than an uplink-downlink conversion time being met,
performing rate-matching on the data carried by the target PDSCH;
sending data obtained after performing the rate-matching at a remaining resource in the PDSCH time-frequency resource that is not overlapped with the RO time-frequency resource, and
receiving the random access signal carried by the target RO at the RO time-frequency resource; or
in response to the condition being not met, only receiving the random access signal at the RO time-frequency resource, and prohibiting sending of the data carried by the target PDSCH at the PDSCH time-frequency resource.

110. The apparatus according to claim 106, wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is partially overlapped with the SBFD time-frequency resource, and the PDSCH time-frequency resource is partially overlapped with the RO time-frequency resource,
in response to determining a UE which is to receive data from the base station is in full-duplex TDD mode, determine the data transmission operation corresponding to the target time-frequency resource is:
performing rate-matching on data carried by a target PDSCH;
sending data obtained after performing the rate-matching at a remaining resource in the PDSCH time-frequency resource that is not overlapped with the SBFD time-frequency resource or the RO time-frequency resource, and receiving a random access signal carried by the target RO at the RO time-frequency resource; or
in response to determining the UE is in half-duplex TDD mode, determine the data transmission operation corresponding to the target time-frequency resource is:
in response to a condition that a time interval between the target PDSCH and the target RO is greater than an uplink-downlink conversion time,
performing rate-matching on the data carried by the target PDSCH;
sending data obtained after performing the rate-matching at the remaining resource in the PDSCH time-frequency resource that is not overlapped with the RO time-frequency resource or the SBFD time-frequency resource, and
receiving the random access signal carried by the target RO at the RO time-frequency resource, or
in response to the condition being not met, receiving the random access signal carried by the target RO at the RO time-frequency resource, and prohibiting sending of the data carried by the target PDSCH at the PDSCH time-frequency resource.

111. The apparatus according to claim 101 or 102, wherein the target time-frequency resource includes: a Random Access Channel Opportunity, RO, time-frequency resource corresponding to a target RO, and a Physical Downlink Control Channel, PDCCH, time-frequency resource corresponding to a PDCCH;
the target RO is any one of at least one RO configured for the target slot;
the RO time-frequency resource is located within the SBFD time-frequency resource.

112. The apparatus according to claim 111, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is not overlapped with the SBFD time-frequency resource, and the PDCCH time-frequency resource is not overlapped with the RO time-frequency resource,
in response to determining that a UE which is to receive data from the base station is in full-duplex TDD mode, determine the data transmission operation corresponding to the target time-frequency resource is:
sending data carried by a target PDCCH at the PDCCH time-frequency resource, and receiving a random access signal carried by the target RO at the RO time-frequency resource;
in response to determining that the UE is in half-duplex TDD mode, determine the data transmission operation corresponding to the target time-frequency resource is:
in response to a condition that a time interval between the target PDCCH and the target RO is greater than an uplink-downlink conversion time being met, sending the data carried by the target PDCCH at the PDCCH time-frequency resource, and receiving the random access signal carried by the target RO at the RO time-frequency resource, and
in response to the condition being not met, only receiving the random access signal at the RO time-frequency resource, prohibiting sending of the data carried by the target PDCCH at the PDCCH time-frequency resource.

113. The apparatus according to claim 111, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is partially overlapped with the SBFD time-frequency resource, and the PDSCH time-frequency resource is not overlapped with the RO time-frequency resource,
in response to determining that a UE which is to receive data from the base station is in full-duplex TDD mode, determine the data transmission operation corresponding to the target time-frequency resource is:
performing rate-matching on data carried by a target PDCCH;
sending data obtained after performing the rate-matching at a remaining resource in the PDCCH time-frequency resource that is not overlapped with the SBFD time-frequency resource, and receiving a random access signal carried by the target RO at the RO time-frequency resource; or
in response to determining that the UE is in half-duplex TDD mode, determine the data transmission operation corresponding to the target time-frequency resource is:
in response to a condition that a time interval between the target PDCCH and the target RO is greater than an uplink-downlink conversion time being met, performing rate-matching on the data carried by the target PDCCH, sending the data obtained after performing the rate-matching at the remaining resource in the PDCCH time-frequency resource that is not overlapped with the SBFD time-frequency resource, and receiving the random access signal carried by the target RO at the RO time-frequency resource; and
in response to the condition being not met, only receiving the random access signal at the RO time-frequency resource, and prohibiting sending of the data carried by the target PDCCH at the PDCCH time-frequency resource.

114. The apparatus according to claim 111, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is not overlapped with the SBFD time-frequency resource, and the PDCCH time-frequency resource is partially overlapped with the RO time-frequency resource, but a start point of PDCCH reception is earlier than a start point of target RO transmission,
in response to determining that a UE which is to receive data from the base station is in full-duplex TDD mode, determine the data transmission operation corresponding to the target time-frequency resource is:
sending data carried by a target PDCCH at the PDCCH time-frequency resource, and receiving a random access signal carried by the target RO at the RO time-frequency resource; or in response to determining that the UE which is to receive data from the base station is in half-duplex TDD mode, determine that the data transmission operation corresponding to the target time-frequency resource is:
in response to a condition that a time interval between the target PDSCH and the target RO is greater than an uplink-downlink conversion time being met,
performing rate-matching on the data carried by the target PDCCH;
sending data obtained after performing the rate-matching at a remaining resource in the PDCCH time-frequency resource that is not overlapped with the RO time-frequency resource; and
receiving the random access signal carried by the target RO at the RO time-frequency resource; or
in response to the condition being not met, only receiving the random access signal carried by the target RO at the RO time-frequency resource, and prohibiting sending of the data carried by the target PDCCH at the PDCCH time-frequency resource.

115. The apparatus according to claim 111, wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is partially overlapped with the SBFD time-frequency resource, and the PDCCH time-frequency resource is partially overlapped with the RO time-frequency resource, but a start point of PDCCH reception is earlier than a start point of target RO transmission,
in response to determining that a UE which is to receive data from the base station is in full-duplex TDD mode, determine the data transmission operation corresponding to the target time-frequency resource is:
performing rate-matching on data carried by a target PDCCH;
sending data obtained after performing the rate-matching at a remaining resource in the PDCCH time-frequency resource that is not overlapped with the SBFD time-frequency resource or the RO time-frequency resource, and receiving a random access signal carried by the target RO at the RO time-frequency resource; or
in response to determining that the UE is in half-duplex TDD mode, determine the data transmission operation corresponding to the target time-frequency resource is:
in response to a condition that a time interval between the target PDCCH and the target RO is greater than an uplink-downlink conversion time being met,
performing rate-matching on the data carried by the target PDCCH;
sending the data obtained after performing rate-matching at the remaining resource in the PDCCH time-frequency resource that is not overlapped with the RO time-frequency resource or the SBFD time-frequency resource, and
receiving the random access signal carried by the target RO at the RO time-frequency resource; or
in response to the condition being not met, only receiving the random access signal carried by the target RO at the RO time-frequency resource, and prohibiting sending of the data carried by the target PDCCH at the PDCCH time-frequency resource.

116. The apparatus according to claim any one of claims 101 to 115, wherein the target RO is an MsgA RO.

117. The apparatus according to claims 101 or 102, wherein the target time-frequency resource includes: an MsgA Random Access Channel Opportunity, RO, time-frequency resource corresponding to a target MsgA RO used for sending a random access message MsgA and an MsgA Physical Uplink Shared Channel, PUSCH, time-frequency resource corresponding to a target MsgA PUSCH associated with the target MsgA RO;
the target MsgA RO and the target MsgA PUSCH satisfy:
the target MsgA PUSCH is configured in a slot allocated with an SBFD time-frequency resource, and the target MsgA RO associated with the target MsgA PUSCH is configured in a slot not allocated with an SBFD time-frequency resource; or
the target MsgA PUSCH is configured in a slot allocated with an SBFD time-frequency resource, and the target MsgA RO associated with the target MsgA PUSCH is configured in a slot allocated with an SBFD time-frequency resource; the MsgA PUSCH and the MsgA RO correspond to different slots; or
the target MsgA PUSCH is configured in a slot not allocated with an SBFD time-frequency resource, and the target MsgA RO associated with the target MsgA PUSCH is configured in a slot allocated with an SBFD time-frequency resource.

118. The apparatus according to claim 117, wherein the MsgA PUSCH time-frequency resource is located within the SBFD time-frequency resource; the target time-frequency resource further includes a Synchronization Signal Block, SSB, time-frequency resource corresponding to an SSB;
wherein the second determining module, when determining the data transmission operation corresponding to the target time-frequency resource according to the overlapping result of the SBFD time-frequency resource and the target time-frequency resource, is configured to:
for a case that the overlapping result is that the SSB time-frequency resource is overlapped or is not overlapped with the SBFD time-frequency resource, and the SSB time-frequency resource is not overlapped with the MsgA PUSCH time-frequency resource,
in response to determining that a UE which is to receive data from the base station is in full-duplex TDD mode, determine the data transmission operation corresponding to the target time-frequency resource is:
sending data carried by the SSB at the SSB time-frequency resource, and receiving data carried by the target MsgA PUSCH at the MsgA PUSCH time-frequency resource; or
in response to determining that the UE is in half-duplex TDD mode, determine the data transmission operation corresponding to the target time-frequency resource is:
in response to a condition that a time interval between the SSB and the target MsgA PUSCH is greater than an uplink-downlink conversion time being met, sending the data carried by the SSB at the SSB time-frequency resource, and receiving the data carried by the target MsgA PUSCH at the MsgA PUSCH time-frequency resource; and
in response to the condition being not met, prohibiting a reception of the data carried by the MsgA PUSCH at the MsgA PUSCH time-frequency resource, and only sending the data carried by the SSB at the SSB time-frequency resource.

119. The apparatus according to claim 117, wherein the MsgA PUSCH time-frequency resource is located within the SBFD time-frequency resource; the target time-frequency resource further includes a Synchronization Signal Block, SSB, time-frequency resource corresponding to an SSB;
wherein the second determining module, when determining the data transmission operation corresponding to the target time-frequency resource according to the overlapping result of the SBFD time-frequency resource and the target time-frequency resource, is configured to:
for a case that the overlapping result is that the SSB time-frequency resource is overlapped or is not overlapped with the SBFD time-frequency resource, and the SSB time-frequency resource is partially overlapped with the MsgA PUSCH time-frequency resource, determine the data transmission operation corresponding to the target time-frequency resource is:
prohibiting a reception of data carried by the target MsgA PUSCH at the MsgA PUSCH time-frequency resource; or
at a remaining resource in the MsgA PUSCH time-frequency resource that is not overlapped with the SBFD time-frequency resource, receiving a part of data associated with the remaining resource in the data carried by the target MsgA PUSCH.

120. The apparatus according to claim 117, wherein the MsgA PUSCH time-frequency resource is located within the SBFD time-frequency resource; the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is not overlapped with the SBFD time-frequency resource, and the PDCCH time-frequency resource is not overlapped with the MsgA PUSCH time-frequency resource,
in response to determining that a UE which is to receive data from the base station is in full-duplex TDD mode, determine the data transmission operation corresponding to the target time-frequency resource is:
sending data carried by a PDCCH at the PDCCH time-frequency resource, and receiving data carried by the target MsgA PUSCH at the MsgA PUSCH time-frequency resource;
in response to determining that the UE is in half-duplex TDD mode, determine the data transmission operation corresponding to the target time-frequency resource is:
in response to a condition that a time interval between a target PDCCH and the target MsgA PUSCH is greater than an uplink-downlink conversion time being met, sending the data carried by the target PDCCH at the PDCCH time-frequency resource, and receiving the data carried by the target MsgA PUSCH at the MsgA PUSCH time-frequency resource, and
in response to the condition being not met, only receiving the data carried by the target MsgA PUSCH at the MsgA PUSCH time-frequency resource, and prohibiting sending of the data carried by the PDCCH at the PDCCH time-frequency resource.

121. The apparatus according to claim 117, wherein the MsgA PUSCH time-frequency resource is located within the SBFD time-frequency resource; the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
if the overlapping result is that the PDCCH time-frequency resource is not overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission;
in response to determining that a UE which is to receive data from the base station is in full-duplex TDD mode, determine the data transmission operation corresponding to the target time-frequency resource is:
sending data carried by a target PDCCH at the PDCCH time-frequency resource, and receiving a random access signal carried by the target RO at the RO time-frequency resource; or in response to determining that the UE which is to receive data from the base station is in half-duplex TDD mode, determine the data transmission operation corresponding to the target time-frequency resource is:
in response to a condition that a time interval between the target PDCCH and the target RO is greater than an uplink-downlink conversion time being met,
performing rate-matching on the data carried by the target PDCCH;
sending data obtained after performing the rate-matching at a remaining resource in the PDCCH time-frequency resource that is not overlapped with the MsgA PUSCH time-frequency resource; and
receiving data carried by the target MsgA PUSCH at the MsgA PUSCH time-frequency resource; or
in response to the condition being not met, only receiving the data carried by the target MsgA PUSCH at the MsgA PUSCH time-frequency resource, and prohibiting receiving the data carried by the target PDCCH at the PDCCH time-frequency resource.

122. The apparatus according to claim 117, wherein the MsgA PUSCH time-frequency resource is located within the SBFD time-frequency resource; the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is partially overlapped with the SBFD time-frequency resource, and the PDCCH time-frequency resource is not overlapped with the MsgA PUSCH time-frequency resource,
in response to determining that a UE which is to receive data from the base station is in full-duplex TDD mode, determine the data transmission operation corresponding to the target time-frequency resource is:
performing rate-matching on data carried by a target PDCCH;
sending data obtained after performing the rate-matching at a remaining resource in the PDCCH time-frequency resource that is not overlapped with the SBFD time-frequency resource, and receiving data carried by the target MsgA PUSCH at the MsgA PUSCH time-frequency resource; or
in response to determining that the UE is in half-duplex TDD mode, determine the data transmission operation corresponding to the target time-frequency resource is:
in response to a condition that a time interval between the target PDCCH and the target MsgA PUSCH is greater than an uplink-downlink conversion time being met, performing rate-matching on the data carried by the target PDCCH, sending the data carried by the target PDCCH at the remaining resource in the PDCCH time-frequency resource that is not overlapped with the SBFD time-frequency resource, and receiving the data carried by the target MsgA PUSCH at the MsgA PUSCH time-frequency resource, and
in response to the condition being not met, only receiving the data carried by the target MsgA PUSCH at the MsgA PUSCH time-frequency resource, and prohibiting sending of the data carried by the target PDCCH at the PDCCH time-frequency resource.

123. The apparatus according to claim 117, wherein the MsgA PUSCH time-frequency resource is located within the SBFD time-frequency resource; the target time-frequency resource further includes a Physical Downlink Control Channel, PDCCH, time-frequency resource corresponding to a PDCCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDCCH time-frequency resource is partially overlapped with the SBFD time-frequency resource, and the PDCCH time-frequency resource is partially overlapped with the MsgA PUSCH time-frequency resource, but a start point of PDCCH reception is later than a start point of target MsgA PUSCH transmission,
in response to determining that a UE which is to receive data from the base station is in full-duplex TDD mode, determine the data transmission operation corresponding to the target time-frequency resource is:
performing rate-matching on data carried by a target PDCCH;
sending data obtained after performing the rate-matching at a remaining resource in the PDCCH time-frequency resource that is not overlapped with the SBFD time-frequency resource or the RO time-frequency resource, and receiving a random access signal carried by the target RO at the RO time-frequency resource; or in response to determining that the UE is in half-duplex TDD mode, determine the data transmission operation corresponding to the target time-frequency resource is:
in response to a condition that a time interval between the target PDCCH and the target RO is greater than an uplink-downlink conversion time being met,
performing rate-matching on the data carried by the target PDCCH;
sending the data obtained after performing the rate-matching at the remaining resource of the PDCCH time-frequency resource that is not overlapped with the MsgA PUSCH time-frequency resource or the SBFD time-frequency resource, and
receiving data carried by the target MsgA PUSCH at the MsgA PUSCH time-frequency resource, or
in response to the condition being not met, only receiving the data carried by the target MsgA PUSCH at the MsgA PUSCH time-frequency resource, and prohibiting receiving of the data carried by the target PDCCH at the PDCCH time-frequency resource.

124. The apparatus according to claim 117, wherein the MsgA PUSCH time-frequency resource is located within the SBFD time-frequency resource; the target time-frequency resource further includes a Physical Downlink Shared Channel, PDSCH, time-frequency resource corresponding to a PDSCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is not overlapped with the SBFD time-frequency resource, and the PDSCH time-frequency resource is not overlapped with the MsgA PUSCH time-frequency resource,
in response to determining that the UE which is to receive data from the base station is in full-duplex TDD mode, determine the data transmission operation corresponding to the target time-frequency resource is:
sending data carried by a target PDSCH at the PDSCH time-frequency resource, and receiving data carried by the target MsgA PUSCH at the MsgA PUSCH time-frequency resource; or
in response to determining that the UE is in half-duplex TDD mode, determine the data transmission operation corresponding to the target time-frequency resource is:
in response to a condition that a time interval between the target PDSCH and the target MsgA PUSCH is greater than an uplink-downlink conversion time being met, sending the data carried by the target PDSCH at the PDSCH time-frequency resource, and receiving the data carried by the target MsgA PUSCH at the MsgA PUSCH time-frequency resource; and
in response to the condition being not met, only receiving the data carried by the target MsgA PUSCH at the MsgA PUSCH time-frequency resource, and prohibiting sending of the data carried by the target PDSCH at the PDSCH time-frequency resource.

125. The apparatus according to claim 117, wherein the MsgA PUSCH time-frequency resource is located within the SBFD time-frequency resource; the target time-frequency resource further includes a Physical Downlink Shared Channel, PDSCH, time-frequency resource corresponding to a PDSCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is not overlapped with the SBFD time-frequency resource, and the PDSCH time-frequency resource is partially overlapped with the MsgA PUSCH time-frequency resource,
in response to determining that a UE which is to receive data from the base station is in full-duplex TDD mode, determine the data transmission operation corresponding to the target time-frequency resource is:
sending data carried by a target PDSCH at the PDSCH time-frequency resource, and receiving data carried by the target MsgA PUSCH at the MsgA PUSCH time-frequency resource; or
in response to determining that the UE is in half-duplex TDD mode, determine the data transmission operation corresponding to the target time-frequency resource is:
in response to a condition that a time interval between the target PDSCH and the target MsgA PUSCH is greater than an uplink-downlink conversion time being met,
performing rate-matching on the data carried by the target PDSCH;
sending data obtained after performing the rate-matching at a remaining resource in the PDSCH time-frequency resource that is not overlapped with the MsgA PUSCH time-frequency resource, and
receiving the data carried by the target MsgA PUSCH at the MsgA PUSCH time-frequency resource, or
in response to the condition being not met, only receiving the data carried by the target MsgA PUSCH at the MsgA PUSCH time-frequency resource, and prohibiting sending of the data carried by the target PDSCH at the PDSCH time-frequency resource.

126. The apparatus according to claim 117, wherein the MsgA PUSCH time-frequency resource is located within the SBFD time-frequency resource; the target time-frequency resource further includes a Physical Downlink Shared Channel, PDSCH, time-frequency resource corresponding to a PDSCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is partially overlapped with the SBFD time-frequency resource, and the PDSCH time-frequency resource is partially overlapped with the MsgA PUSCH time-frequency resource,
in response to determining that a UE which is to receive data from the base station is in full-duplex TDD mode, determine the data transmission operation corresponding to the target time-frequency resource is:
performing rate-matching on data carried by a target PDSCH;
sending data obtained after performing the rate-matching at a remaining resource in the PDSCH time-frequency resource that is not overlapped with the SBFD time-frequency resource or the MsgA PUSCH time-frequency resource, and receiving data carried by the target MsgA PUSCH at the MsgA PUSCH time-frequency resource; or
in response to determining that the UE is in half-duplex TDD mode, determine the data transmission operation corresponding to the target time-frequency resource is:
in response to a condition that a time interval between the target PDSCH and the target MsgA PUSCH is greater than an uplink-downlink conversion time being met,
performing rate-matching on the data carried by the target PDSCH;
sending the data obtained after performing the rate-matching at the remaining resource in the PDSCH time-frequency resource that is not overlapped with the MsgA PUSCH time-frequency resource or the SBFD time-frequency resource, and
receiving the data carried by the target MsgA PUSCH at the MsgA PUSCH time-frequency resource; or
in response to the condition being not met, only receiving the data carried by the target MsgA PUSCH at the MsgA PUSCH time-frequency resource, and prohibiting sending of the data carried by the target PDSCH at the PDSCH time-frequency resource.

127. The apparatus according to claim 117, wherein the MsgA PUSCH time-frequency resource is located within the SBFD time-frequency resource; the target time-frequency resource further includes a Physical Downlink Shared Channel, PDSCH, time-frequency resource corresponding to a PDSCH;
wherein the second determining module, when determining the data transmission operation corresponding to the target time-frequency resource according to the overlapping result of the SBFD time-frequency resource and the target time-frequency resource, is configured to:
for a case that the overlapping result is that the PDSCH time-frequency resource is partially overlapped with the SBFD time-frequency resource, and the PDSCH time-frequency resource is not overlapped with the MsgA PUSCH time-frequency resource,
in response to determining that a UE which is to receive data from the base station is in full-duplex TDD mode, determine the data transmission operation corresponding to the target time-frequency resource is:
performing rate-matching on data carried by a target PDSCH;
sending data obtained after performing the rate-matching at a remaining resource in the PDSCH time-frequency resource that is not overlapped with the SBFD time-frequency resource, and receiving data carried by the target MsgA PUSCH at the MsgA PUSCH time-frequency resource; or
in response to determining that the UE is in half-duplex TDD mode, determine the data transmission operation corresponding to the target time-frequency resource is:
in response to a condition that a time interval between the target PDSCH and the target MsgA PUSCH is greater than an uplink-downlink conversion time being met, performing rate-matching on the data carried by the target PDSCH, sending the data obtained after performing the rate-matching at the remaining resource in the PDSCH time-frequency resource that is not overlapped with the SBFD time-frequency resource, and receiving the data carried by the target MsgA PUSCH at the MsgA PUSCH time-frequency resource; and
in response to the condition being not met, only receiving the data carried by the target MsgA PUSCH at the MsgA PUSCH time-frequency resource, and prohibiting sending of the data carried by the target PDSCH at the PDSCH time-frequency resource.

128. The apparatus according to any one of claims 117 to 127, wherein the apparatus further includes: in response to the target MsgA RO being invalid, prohibiting a detection of an MsgA RO at the MsgA RO time-frequency resource, and prohibiting a reception of data carried by a target MsgA PUSCH associated with the target MsgA RO at the MsgA PUSCH time-frequency resource corresponding to the target MsgA PUSCH; or
prohibiting a detection of an MsgA PUSCH at the MsgA PUSCH time-frequency resource corresponding to the target MsgA PUSCH, but receiving a random access signal at the MsgA RO time-frequency resource.

129. The apparatus according to any one of claims 103 to 128, wherein,
the target RO or the target MsgA RO belongs to an exclusive RO group configured for SBFD mode; and/or,
a random access signal carried by the target RO or the target MsgA RO is an exclusive random access signal configured for SBFD mode or a conventional random access signal specified by the protocol.

130. The apparatus according to claim 101, wherein, the apparatus further includes:
a sending module, configured to send the configuration information of the SBFD time-frequency resource to the UE by carrying the configuration information in a broadcast signaling; or
send the configuration information of the SBFD time-frequency resource to the UE by carrying the configuration information in Downlink Control Information, DCI.
